(19) **Europäisches Patentamt / European Patent Office / Office européen des brevets**

(11) **EP 4 664 047 A2**

(12) # EUROPEAN PATENT APPLICATION

(43) Date of publication:
**17.12.2025 Bulletin 2025/51**

(21) Application number: **25208631.9**

(22) Date of filing: **28.10.2022**

(51) International Patent Classification (IPC):
***F28D 7/10*** (2006.01)

(52) Cooperative Patent Classification (CPC):
**F28D 20/0034; F28D 7/022; F28D 7/024;
F28D 7/10; F28D 20/0056;** F28D 2020/0026;
F28D 2020/0078; F28F 2270/00; Y02E 60/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.10.2021 GB 202115529
22.04.2022 GB 202205907**

(62) Document number(s) of the earlier application(s) in accordance with Art. 76 EPC:
**22812703.1 / 4 423 446**

(71) Applicant: **Caldera Heat Batteries Limited
Fareham, Hampshire PO15 5TX (GB)**

(72) Inventors:
• **MACNAGHTEN, James Donnelly
Fareham, PO15 5TX (GB)**

• **CHANA, Krishan
Fareham, PO15 5TX (GB)**
• **SLEE, William Ranulf
Fareham, PO15 5TX (GB)**
• **WINSTANLEY, Guy Alexander James
Fareham, PO15 5TX (GB)**

(74) Representative: **Abraham, Richard et al
Maguire Boss
24 East Street
St. Ives, Cambridgeshire PE27 5PD (GB)**

Remarks:
This application was filed on 14-10-2025 as a divisional application to the application mentioned under INID code 62.

(54) **IMPROVED THERMAL STORE**

(57)    A heat store (10) for an energy storage system, comprising: an inner vessel (40) housing a thermal energy store (14); and an outer vessel (50) surrounding the inner vessel (40), the inner and outer vessels (40, 50) being spaced by a vacuum region (11) extending therebetween.

Figure 1a

**Description**

The present invention relates to a heat store for an energy storage system and to energy storage systems including a heat store. The present invention also relates to an electrical installation for a building including an energy storage system.

The rise in renewable electricity generation requires more flexible electricity demand to ensure that generation and demand are well-matched. The demand for heat in many countries is the largest energy requirement and hence thermal storage that is heated electrically in advance of usage can offer significant demand flexibility.

Practical thermal storage requires a sensible (i.e. non-phase change) heat store which can be either solid or liquid. Solid sensible heat stores use materials which stay solid as heat is added (or removed), and therefore the thermal energy is stored via a change in temperature only. In the case of liquid sensible heat stores, energy is stored in a liquid material via a change in temperature. In either case, the solid or liquid material undergoes no change of phase. Hot water storage is one of the most popular types of sensible liquid heat stores and at high temperatures, molten salts are used as liquid sensible heat stores in concentrating solar power plants.

Water has one of the highest heat capacities per unit weight at 4.2 J/kg K, however it has a narrow temperature band where it can be used economically before requiring expensive pressure vessels. Solid materials have lower heat capacities (e.g. basalt rock at 0.8 J/kg K or steel at just 0.45 J/kg K) but can generally be heated to higher temperatures, for example over 200°C, and even 400°C in some cases.

Dry core boilers are thermal storage devices that have been used in homes to provide hot water to a wet heating system or to supply hot water for domestic purposes such as showers or baths. A dry core boiler comprises multiple high-density bricks that are held in close proximity to electric heating elements. Electricity is run through the heating elements at off-peak times and used to heat the bricks to high temperatures, which can be as much as 650 or 700°C. The bricks are surrounded by high temperature insulation to minimise heat losses. When hot water is required, a fan blows air over the bricks to heat the air to high temperatures. This heated air is then passed through a heat exchanger that is outside of the high temperature space. The heat exchanger transfers heat from the high temperature air to the water. The air is then channelled back into the high temperature space where it is heated again. This design of heat storage system separates the water circuit from the heat storage material using air as the working fluid.

There are several disadvantageous features of dry core boilers. The first is that thermal losses at these high temperatures and small sizes are significant. This is the case even when high temperature insulation, such as microporous insulation, is used. The second is that high temperature insulation is expensive and if losses are to be reduced by making the insulation thicker, then the cost of the insulation becomes significant. The third is that air at atmospheric pressure has a low heat capacity and when heated to high temperatures the density drops by a third reducing the heat capacity further. This results in a requirement for large air flows through the bricks and heat exchanger if high power outputs are required. Dry core boilers also need to be assembled on site by an engineer and cannot be easily moved without dismantling and reassembly.

More recently the present inventors have proposed in WO 2020/217045 a heat storage material that is made up of a metal (e.g. aluminium alloy)/rock composite that has high thermal conductivity and high energy density. It is easy to heat using embedded electrical heating elements and heat can be removed via a steel coil heat exchanger embedded in the metal/rock material. Other solid sensible heat storage materials that have been proposed include cast iron or a refractory material, for example ferric oxide and concrete.

An improvement to dry core boilers was proposed in the late 1960s and early 1970s that involved direct heat exchange from the hot core to a water/steam circuit. An example of this is disclosed in U.K. patent publication GB1323522A which focusses on providing a system that controls the temperature and quality of the water and a method for extracting the heat from the hot core directly using water/steam. From a practical perspective the proposed invention as detailed would have been challenging to make it work safely and almost impossible to certify. In particular, GB1323522A proposes a system where the saturated pressure of steam controls the level of water in a supply vessel. When heat is extracted from this system the steam pressure falls allowing the water level in the supply vessel to rise and feed water at atmospheric pressure to the pipe located in the hot core. This water then boils turning to steam and raising the pressure while lowering the water in the supply vessel.

Some key issues with this system are that the flows will be very unstable. When adding water into a high temperature pipe it can boil and move through different boiling regimes with very different heat transfer rates. This can lead to rapid increases in steam volume and rapid changes in pressure. The impact of these pressure surges would almost certainly have led to a system that was not stable and could not be managed. It would also not respond well to sudden changes in load and it is unlikely to provide a high-power output as significant heat transfer needs to occur in a short period of time. Furthermore, the failure modes are potentially dangerous as the system requires an excess of water in the heating circuit and the system is limited to small pressure differences due to reliance on the height of a column of water. Small pressure differences require impractically large pipe diameters for the steam to flow and large areas for heat exchange to occur.

It is a further advantage for thermal stores to be distributed around a typical electricity distribution network (including the grid) in discrete locations, in positions where the demand for stored heat is required, for example in a home or commercial premises or heat network for a block of flats. This is because it is much easier and cheaper to transport electricity rather than heat. However, storing heat at high temperatures in small volumes incurs a significant efficiency penalty, due to thermal losses. High temperature differences drive high heat flows through standard types of insulation. The proportion of losses at small sizes is significant compared to the stored energy and these thermal losses can be typically as high as 70% per 24 hours. It is therefore desirable to provide a system that limits thermal loses to less than say 10% per 24 hours.

Vacuum insulation can reduce heat transfer from inside a vessel to very low levels while using very little space. Vacuum insulation has been used for decades in cryogenic liquid applications where it is necessary to store liquids (such as liquid nitrogen) at very low temperatures for long durations. However, vacuum insulation techniques known in the art rely upon achieving and maintaining vacuum pressures that are generally unachievable with domestic equipment.

The present applicant has identified the need for an improved heat store (and associated systems) that overcomes or at least alleviates problems associated with the prior art.

In accordance with a first aspect of the present invention, there is provided a heat store for an energy storage system, comprising: an inner vessel housing a thermal energy store (e.g. thermal mass); and an outer vessel surrounding the inner vessel, the inner and outer vessels being spaced by a vacuum region extending therebetween.

In this way, a high temperature heat store may be provided that uses a (e.g. solid) thermal store surrounded by vacuum insulation. This offers the opportunity for a low-cost thermal store with low thermal losses even though the heat storage is occurring at medium to high temperatures.

In one embodiment, the vacuum region has a vacuum pressure (e.g. partial vacuum pressure).

In one embodiment, the vacuum pressure is between 0.05mbar and 1mbar.

In one embodiment, the heat store comprises a vacuum pump (e.g. integral vacuum pump) operative to maintain the vacuum pressure (e.g. partial vacuum pressure) in the vacuum region.

In one embodiment, the vacuum pump maintains the vacuum pressure at a level between 0.05mbar and 1mbar.

In one embodiment, the heat store comprises a sensor operative to measure a parameter (e.g. pressure and/or temperature (e.g. surface temperature)) at one or more location in the heat store and the vacuum pump is configured to operate whenever the sensor indicates that the parameter reaches (e.g. the pressure drops below/temperature rises above) a predetermined value. In this way, a heat store is provided with vacuum insulation requiring only intermittent operation of the vacuum pump.

In one embodiment, the heat store further comprises an integral vacuum valve operative to connect the vacuum pump to the vacuum region.

In one embodiment, the heat store further comprises thermal insulation provided within the vacuum region. In this way, the level of vacuum required to achieve the desired degree of insulation may be reduced.

In one embodiment, the thermal insulation is wrapped around the outer wall of the inner vessel (e.g. substantially covering the outer surface of the inner vessel). In this way, the thermal insulation may act as a microporous insulator only in a direction perpendicular to the sides of the inner vessel.

In one embodiment, the thermal insulation comprises $n$ layers of multilayer insulation.

In one embodiment, each layer of multilayer insulation comprises a reflective layer and a spacer layer.

In one embodiment, $n \geq 50$ (e.g. $n \geq 100$, e.g. $n \geq 150$).

In one embodiment, $n$ is approximately 200 (e.g. $n$ is substantially 200).

In one embodiment, the thermal insulation comprises at least 10 layers of multilayer insulation per 100 degrees Celsius of temperature difference across the vacuum region (i.e. $n \geq 50$ when the temperature difference is 500 degrees Celsius), at least 20 layers of multilayer insulation per 100 degrees Celsius of temperature difference across the vacuum region (i.e. $n \geq 100$ when temperature difference 500 degrees Celsius), or at least 40 layers of multilayer insulation per 100 degrees Celsius temperature difference across the vacuum region (i.e. $n \geq 200$ when temperature difference 500 degrees Celsius). That is to say, in one embodiment $\frac{\Delta T}{n} \leq 10$, in another embodiment $\frac{\Delta T}{n} \leq 5$, and in another embodiment $\frac{\Delta T}{n} \leq 2.5$, wherein $\Delta T$ is the temperature across the vacuum region (i.e. temperature difference between an inner wall of the outer vessel and the opposed outer wall of the inner vessel) in degrees Celsius.

In one embodiment, the average (e.g. mean) spacing between the reflective layer and spacer layer of each layer of multilayer insulation is less than 1mm (e.g. less than 0.5mm, e.g. less than 0.2mm).

In one embodiment, the average (e.g. mean) spacing between the reflective layer and spacer layer of each layer of multilayer insulation varies between layers.

In one embodiment, spacing between the reflective layer and spacer layer of each layer of multilayer insulation is between 1mm and 0.01mm.

In one embodiment, the reflective layer is a sheet of reflective metal (e.g. aluminium sheet).

In one embodiment, the spacer layer is a thin glass fibre layer or thin ceramic fibre (e.g. ceramic fibre paper) layer.

In one embodiment, the heat store comprises at least one heating element (e.g. electrical heating element) operative to act as a source of heat input to the thermal energy store.

In one embodiment, the electrical heating element comprises electrical heating coil means (e.g. an electrical heating coil).

In one embodiment, the heat store comprises at least one heat exchanger (e.g. direct heat exchanger) operative to receive a heat transfer fluid.

In one embodiment, the heat transfer fluid is water.

In one series of embodiments, the thermal energy store is a solid store.

In one embodiment, the at least one heating element (e.g. electrical heating element (e.g. electrical heating coil means)) is embedded within the solid store.

In one embodiment, the at least one heat exchanger is embedded within the solid store.

In one embodiment, the thermal energy store comprises: a solid body comprising a solid thermally conductive matrix with a solid thermal filler material embedded therein, the solid thermally conductive matrix forming a thermally conductive pathway to the solid thermal filler material distributed within the solid thermally conductive matrix.

In one embodiment, the at least one heating element is (e.g. electrical heating element (e.g. electrical heating coil means) is embedded within the solid thermally conductive matrix.

In one embodiment, the at least one heat exchanger is embedded within the solid thermally conductive matrix.

In one embodiment, the heat store is configuration to heat the thermal energy store to a temperature greater than 300°C (e.g. and maintain this temperature until a discharging phase).

In another series of embodiments, the thermal energy store is a fluid (e.g. liquid) store comprising a chamber for receiving a heat storage fluid (e.g. heat storage liquid).

In one embodiment, the at least one heating element (e.g. electrical heating element (e.g. electrical heating coil means)) extends into the chamber.

In one embodiment, the at least one heat exchanger extends into the chamber.

In one series of embodiments, the inner vessel is suspended within the outer vessel.

In one embodiment, the inner vessel is suspended via a (e.g. single) neck connector (e.g. structurally loaded neck connector) connecting an upper section of the inner vessel to an upper section of the outer vessel.

In one embodiment, no part of the inner vessel is in contact with the outer vessel.

In one embodiment, the neck connector supports the weight of the inner vessel and the thermal energy store.

In one embodiment, the neck connector includes a central chamber housing supply lines for the thermal energy store (e.g. supply lines for the at least one heating element (e.g. electrical cables for the at least one electrical heating element) and fluid transfer pipes (e.g. inlet and outlet pipes) for the at least one heat exchanger).

In one embodiment, the outer vessel (e.g. upper section of the outer vessel) comprises an (e.g. first) aperture (e.g. sealable aperture) for receiving an end (e.g. upper end) of the neck connector.

In one embodiment, the inner vessel (e.g. upper section of the inner vessel) comprises an (e.g. second) aperture (e.g. sealable aperture) for receiving an end (e.g. lower end) of the neck connector.

In one embodiment, the neck connector further comprises an inner (e.g. lower) neck plate coupled to the inner vessel.

In one embodiment, the neck connector further comprises an outer (e.g. upper) neck plate coupled to the outer vessel.

In another series of embodiments, the inner vessel is supported via a (e.g. single) neck connector (e.g. structurally loaded neck connector) connecting a lower section of the inner vessel to a lower section of the outer vessel.

In one embodiment, no part of the inner vessel is in contact with the outer vessel.

In one embodiment, the neck connector supports the weight of the inner vessel and the thermal energy store.

In one embodiment, the neck connector includes a central chamber housing supply lines for the thermal energy store (e.g. supply lines for the at least one heating element (e.g. electrical cables for the at least one electrical heating element) and fluid transfer pipes (e.g. inlet and outlet pipes) for the at least one heat exchanger).

In one embodiment, the outer vessel (e.g. lower section of the outer vessel) comprises an (e.g. first) aperture (e.g. sealable aperture) for receiving an end (e.g. lower end) of the neck connector.

In one embodiment, the inner vessel (e.g. lower section of the inner vessel) comprises an (e.g. second) aperture (e.g. sealable aperture) for receiving an end (e.g. upper end) of the neck connector.

In one embodiment, the neck connector further comprises an inner (e.g. upper) neck plate coupled to the inner vessel.

In one embodiment, the neck connector further comprises an outer (e.g. lower) neck plate coupled to the outer vessel.

In one embodiment, the outer vessel has an interface for engaging with a transportation device.

In one embodiment, the interface comprises at least one socket provided on the outer vessel, the at least one socket being configured to receive a transport bolt (e.g. threaded transport bolt) provided on a transportation device.

In one embodiment, the interface comprises a plurality of sockets (e.g. three or more sockets).

In one embodiment, the plurality of sockets are equally spaced around the outer vessel.

In one embodiment, the heat store further comprises at least one spreader plate movable between an inoperative position and deployed position, wherein in the deployed position the spreader plate is operative to constrain the movement of the inner vessel relative to the outer vessel.

In one embodiment, the spreader plate is engaged by the transport bolt and moves from the inoperative position to the deployed position as the transport bolt is fully inserted into the at least one socket.

In the case of a heat store including thermal insulation provided in the vacuum region (e.g. *n* layers of multilayer insulation provided in the vacuum region), the spreader plate may be operative in the deployed position to compress the thermal insulation (e.g. compress the *n* layers of multi-layer insulation) against the inner vessel and constrain the movement of the inner vessel relative to the outer vessel.

In one embodiment, at least one socket comprises a pair of sockets provided on opposed lateral sides of the outer vessel.

In one embodiment, the heat store comprises a pair of spreader plates provided on opposed lateral sides of the outer vessel.

In one embodiment, the heat store further comprises a sealing member (e.g. sealing bolt) operative to seal the at least one socket when in a non-transportation mode.

In one embodiment, the spreader plate is free to move in a horizontal direction but vertically constrained (e.g. by one or more strap attached to the outer vessel) so that the spreader plate remains substantially registered with the socket.

In one embodiment, the inner vessel comprises a two-part construction (e.g. upper inner vessel part and lower inner vessel part construction).

In one embodiment, the outer vessel comprises a two-part construction (e.g. upper outer vessel part and lower outer vessel part construction).

In one embodiment, the heat store further comprises an internal brace provided inside the vacuum region, the internal brace being configured to engage an inner surface of the outer vessel and resist compression of the outer vessel.

In this way a vacuum-insulated vessel with a relatively thin outer vessel wall may be provided with the ability to withstand compressive forces generated by negative pressure within the vessel and/or resist external pressure/external impacts.

In one embodiment, the inner surface of the outer vessel has a substantially cylindrical profile.

In one embodiment, the internal brace has a substantially annular profile when viewed along a longitudinal axis of the internal brace.

In one embodiment, no part of the internal brace is in contact with the inner vessel.

In one embodiment, the internal brace is configured to be slidably insertable into the vacuum region (e.g. during manufacture).

In one embodiment, the internal brace is manufactured from a single piece (e.g. a one-piece part).

In one embodiment, the internal brace is a radially (e.g. circumferentially) expandable brace (e.g. expandable between a radially contracted configuration and a radially expanded configuration).

In one embodiment, the radially expandable brace is biased (e.g. resiliently biased) in the expanded configuration.

In one embodiment, the radially expandable brace is configured to apply (preloaded) tension to the inner surface of the outer vessel (i.e. with tension being applied continuously to the inner surface of the outer vessel).

In an alternative embodiment, the internal brace (e.g. radially expandable brace in the radially expanded configuration) may be a snug fit inside against the inner surface of the outer vessel (e.g. with tension only being applied to the inner surface of the outer vessel in response to a compressive displacement of the inner surface of the outer vessel).

In one embodiment, the radially expandable brace comprises a radially expandable cage structure.

In one embodiment, the radially expandable brace is a torsional brace configured to be urged to expand radially when under torsion (e.g. urged to expand radially when torsion is applied in a first direction and urged to contract radially when torsion is applied in a second counter direction).

In one embodiment, the torsional brace comprises a cage or coil structure.

In one embodiment, the torsional brace comprises a helical coil structure.

In one embodiment, the helical coil structure is a substantially continuous helical coil structure or a structure comprising a series of connected helical coil sections (e.g. helical coil sections connected in series by torsion transmitting connections (e.g. coil or non-coil torsion transmitting connections)).

In one embodiment, the torsional brace applies tension to the inner surface of the outer vessel (e.g. is inserted into the vacuum region in a torsioned configuration or is torsioned after insertion into the vacuum region).

In one embodiment, the vacuum-insulated vessel comprises a further internal brace provided inside the inner vessel, the further internal brace being configured to engage an inner surface of the inner vessel and resist compression of the inner vessel (e.g. during testing of the inner vessel during manufacture).

In one embodiment, the further internal brace is in accordance with any embodiment of the first-defined internal brace defined hereinabove (e.g. a torsional brace comprising a helical coil structure).

In accordance with a second aspect of the present invention, there is provided an energy storage system comprising a heat store according to the first aspect of the present invention (e.g. in accordance with any embodiment of the first aspect of the present invention).

In accordance with a third aspect of the present invention, there is provided an energy storage system, comprising: a thermal energy store (e.g. thermal mass); a primary circuit (e.g. steam circuit) comprising a first heat transfer fluid; an evaporator heat exchanger stage configured to receive thermal energy from the thermal energy store and to evaporate the first heat transfer fluid in liquid form to form a gas stream; a condenser heat exchanger stage configured to condense the gas stream received from the evaporator heat exchanger stage; and a secondary circuit (e.g. non-steam circuit) comprising a second heat transfer fluid, the secondary circuit being configured to receive thermal energy from the primary circuit via the condenser heat exchanger stage and to supply the received thermal energy to a heating system (e.g. hot water/central heating system).

In one embodiment, the first heat transfer fluid is water (e.g. pure water).

In one embodiment, the second heat transfer fluid is water (e.g. water and anti-freeze).

In one embodiment, the secondary circuit is configured to maintain the second heat transfer fluid as a liquid during all stages.

In one embodiment, the primary circuit comprises a pressure raising device (e.g. injector pump) operative to pressurise fluid received from the condenser heat exchanger stage and deliver fluid at raised pressure to the evaporator heat exchanger stage. In this way, a water/steam system may be provided with a pump that injects water at high pressure into the evaporator heat exchanger stage and wherein steam is condensed in the condenser heat exchanger stage and then as water pumped back to high pressure.

In one embodiment, the pressure output of the pressuring raising device is above atmospheric pressure (e.g. at least 0.5 bar, e.g. at least 1 bar, e.g. at least 2 bar).

In one embodiment, the pressure raising device is a positive displacement device.

In one embodiment, the pressure raising device is a variable flow device (e.g. variable flow pump).

In one embodiment, the pressure raising device is a variable speed positive displacement pump. In this way, the mass flow of first heat transfer fluid will be proportional to speed regardless of the delivery pressure.

In one embodiment, the flow rate of pressure raising device (e.g. variable flow pump) is varied to achieve target temperature at a location in the energy storage system.

In one embodiment, the location is a location in the secondary circuit.

In one embodiment, the location is a location between the heating system and condenser heat exchanger stage (e.g. temperature of the second heat transfer fluid as it exits the condenser heat exchanger stage).

In one embodiment, the primary circuit further comprises a desuperheater operative to cool (e.g. and partially condense) gas flowing from the evaporator heat exchanger stage to the condenser heat exchange stage.

In one embodiment, the desuperheater comprises an outlet operative to spray fluid (e.g. first heat transfer fluid) into gas flowing from the evaporator heat exchanger stage to the condenser heat exchanger stage.

In one embodiment, the desuperheater is operative to divert a portion of the first heat transfer fluid flowing from the pressure raising device to the evaporator heat exchanger stage.

In one embodiment, the desuperheater comprises a selectively connectable flow path comprising a desuperheater valve positioned between the pressure raising device and the evaporator heat exchanger stage and a pipe for conveying a stream of the first heat transfer fluid from the desuperheater valve to the outlet between the evaporator heat exchanger stage and the condenser heat exchanger state.

In one embodiment, the desuperheater comprises a permanently connected flow path comprising a narrow pipe positioned between the pressure raising device and the evaporator heat exchanger stage.

In one embodiment, the primary circuit further comprises a reservoir.

In one embodiment, the reservoir is positioned between the condenser heat exchanger stage and the pressure raising device.

In one embodiment, the reservoir is sized so that there is minimal excess first heat transfer fluid in the primary circuit when the energy storage system is working at full power.

In one embodiment, first heat transfer fluid condensed by the condenser heat exchanger stage flows under gravity into the reservoir.

In one embodiment, the first heat transfer fluid flows under gravity from the reservoir to the pressure raising device.

In one embodiment, the primary circuit includes a high pressure pipe extending between the pressure raising device and the evaporator heat exchanger stage.

In one embodiment, the high pressure pipe has a section (e.g. section extending between the desuperheater valve, if present, and the evaporator heat exchanger stage) extending above the height of the reservoir. In this way, first heat transfer fluid contained within the reservoir can only flow towards the evaporator heat exchanger stage if the pressure raising device is operational.

In one embodiment, the primary circuit comprises a shut-off valve for preventing flow from the reservoir to the evaporator heat exchanger stage.

In one embodiment, the energy storage system is configured to heat the thermal energy store to a temperature greater than 100°C (e.g. to a temperature greater than 200°C, e.g. to a temperature greater than 300°C, e.g. to a temperature greater than 400°C, e.g. to a temperature greater than 500°C, e.g. to a temperature greater than 600°C).

In one embodiment, the energy storage system is configured to heat the thermal energy store to a temperature greater than 100°C (e.g. to a temperature greater than 200°C, e.g. to a temperature greater than 300°C, e.g. to a temperature greater than 400°C, e.g. to a temperature greater than 500°C, e.g. to a temperature greater than 600°C) and less than 700°C.

In one embodiment, the energy storage system is configured to heat the thermal energy store to a temperature in the range of 100-600°C (e.g. in the range 200-500°C).

In one embodiment, the evaporator heat exchanger stage comprises a pipe circuit extending through or around the heat energy store, wherein the pipe circuit has an inlet (e.g. water inlet) and an outlet (e.g. steam outlet). In the case of a pipe circuit embedded in a solid store, the inlet and outlet correspond to points where the pipe circuit enters and exits the solid store.

In one embodiment, the primary circuit (e.g. pressure raising device and/or evaporator heat exchanger stage) is configured to generate a gaseous flow of the first heat transfer fluid at the outlet with a gas flow velocity of at least 100 km/hour (e.g. at least 200 km/hour, e.g. at least 300 km/hour). Advantageously, this high speed gas (e.g. steam) output allows the use of a pipe circuit with narrow pipes generating large pressure drops and high heat transfer rates, whilst additionally minimising the volume of fluid in the pipe circuit, which improves safety. Furthermore if the volume of the pipe circuit is under 2 litres then the certification and maintenance regime is very straightforward which is economically attractive for the customer.

In one embodiment, the primary circuit (e.g. pressure raising device) is configured to supply the first heat transfer fluid to the inlet at a predetermined maximum injection rate P.

In one embodiment, the pipe circuit has an effective internal cross-sectional area A. For a single pipe circuit, the effective internal cross-sectional area A is the average (e.g. mean) cross-sectional area of the single pipe. In the case of a pipe circuit comprising a plurality of parallel pipes, the effective internal cross-sectional area A is the combined average (e.g. combined mean) cross-sectional areas of the plurality of pipes.

In one embodiment, the ratio of the effective internal cross-sectional area of the pipe circuit A to the predetermined maximum injection rate P (i.e. A/P) is less than 20 (e.g. less than 16, e.g. less than 12). Hence, for every 1g/s of liquid injected the effective internal cross-sectional area of the pipe circuit A is less than 20mm$^2$ (e.g. less than 16mm$^2$, e.g. less than 12mm$^2$), i.e. for a predetermined maximum injection rate P of 10g/s the effective internal cross-sectional area of the pipe circuit A is less than 200mm$^2$ (e.g. less than 160mm$^2$, e.g. less than 120mm$^2$).

In one embodiment, the pipe circuit has an effective length of over 5m (e.g. over 7m, e.g. over 10m).

In one embodiment, the pipe circuit has an effective internal cross-sectional area under 500mm$^2$ (e.g. under 250mm$^2$, e.g. under 150mm$^2$).

In one embodiment, the pipe circuit has an internal volume of less than 2 litres.

In one embodiment, the primary circuit (e.g. pressure raising device) is configured to vary the injection pressure in relation to the temperature of the thermal energy store (e.g. reduce the injection pressure if the temperature of the thermal energy store drops below a predetermined maximum temperature (e.g. in proportion to the reduction of temperature)). In this way, undesirable over-filling of the evaporator heat exchanger stage may be avoided when the temperature of the energy store is below peak temperature.

In one embodiment, the condensing heat exchanger stage is a plate heat exchanger.

In one embodiment, the secondary circuit comprises a diverter valve operative when activated to divert the flow of the second heat transfer fluid away from the heating system (e.g. to bypass the heating system).

In one embodiment, the secondary circuit comprises a circulation pump.

In one embodiment, the circulation pump is provided between the condenser heat exchanger stage and the diverter valve (e.g. between the condenser heat exchanger stage and the expander).

In one embodiment, the secondary circuit is pressurised (e.g. at around 1 bar).

In one embodiment, the secondary circuit comprises an expander (e.g. expansion vessel) operative to maintain a predetermined level of pressurisation in the secondary circuit.

In one embodiment, the energy storage system is further operable in a power outage mode (e.g. in the event that a power supply to the system is disrupted).

In one embodiment, the secondary circuit further comprises a back-up power supply (e.g. a battery) configured to maintain operation of the circulation pump of the secondary circuit in the power outage mode until all the gaseous phase of the first heat transfer fluid in the primary circuit has been safely condensed. In this way, the need to vent steam in event of a shutdown is advantageously avoided.

In one embodiment, the secondary circuit comprises a buffer store.

In one embodiment, the buffer store is operative to hold a sufficient mass of the second heat transfer fluid to absorb all of the heat from the heat transfer fluid in the primary circuit as it condenses.

In one embodiment, the pressure raising device is not operational in the power outage mode.

In one embodiment, the energy storage system comprises at least one heating element (e.g. electrical heating element) operative during a charging phase of the energy storage system to act as a heat input to the thermal energy store.

In one embodiment, the electrical heating element comprises electrical heating coil means (e.g. an electrical heating coil).

In one embodiment, the thermal energy store is a solid store.

In one embodiment, the at least one heating element (e.g. electrical heating element (e.g. electrical heating coil means)) is embedded within the solid store.

In one embodiment, the evaporator heat exchanger stage comprises a direct heat exchanger.

In one embodiment, the evaporator heat exchanger stage (e.g. direct heat exchanger) is embedded within the solid store.

In one embodiment, the thermal energy store comprises: a solid body comprising a solid thermally conductive matrix with a solid thermal filler material embedded therein, the solid thermally conductive matrix forming a thermally conductive pathway to the solid thermal filler material distributed within the solid thermally conductive matrix.

In one embodiment, the at least one heating element is (e.g. electrical heating element (e.g. electrical heating coil means) is embedded within the solid thermally conductive matrix and operative during a charging phase of the energy storage system to act as a heat input.

In one embodiment, the evaporator heat exchanger stage (e.g. direct heat exchanger) is embedded within the solid thermally conductive matrix.

In one embodiment, the energy storage system is operative during a charging mode in which heat is transferred into the thermal energy store (e.g. by passing electrical current through electrical heating element).

In one embodiment, the energy storage system is operative during a discharging mode to transfer heat from the thermal energy store to the first heat transfer fluid via the evaporator heat exchanger stage and transfer thermal energy from the first transfer fluid to the secondary circuit via the condenser heat exchanger stage.

In one embodiment, the thermal energy store is part of a heat store in accordance with the first, ninth, eleventh or thirteenth aspects of the present invention (e.g. in accordance with any embodiment of the first, ninth, eleventh or thirteenth aspects of the present invention) and/or includes a vacuum-insulated vessel in accordance with the sixth or fifteenth aspect of the present invention (e.g. in accordance with any embodiment of the sixth or fifteenth aspect of the present invention).

In accordance with a fourth aspect of the present invention, there is provided a method of operating an energy storage system, comprising: providing an energy storage system including: a thermal energy store (e.g. thermal mass); a primary circuit (e.g. steam circuit) comprising a first heat transfer fluid; an evaporator heat exchanger stage configured to receive thermal energy from the thermal energy store and to evaporate the first heat transfer fluid in liquid form to form a gas stream; a condenser heat exchanger stage configured to condense the gas stream received from the evaporator heat exchanger stage; and a secondary circuit (e.g. non-steam circuit) comprising a second heat transfer fluid, the secondary circuit being configured to receive thermal energy from the primary circuit via the condenser heat exchanger stage and to supply the received thermal energy to a heating system (e.g. hot water/central heating system); the method further comprising the steps of: in a charging mode: transferring thermal energy to the thermal energy store (e.g. by passing electricity through an electrical heating element embedded in the thermal energy store); and in a discharging mode: evaporating a liquid phase of the first heat transfer fluid in the evaporator heat exchanger stage to form a gaseous flow of the first heat transfer fluid; passing the gaseous flow of the first heat transfer fluid from the thermal energy store to the condenser heat exchanger stage; and condensing the gaseous flow of the first heat transfer fluid in the condenser heat exchanger stage to transfer thermal energy from the heat transfer fluid to the second heat transfer fluid in the secondary circuit.

In one embodiment, the primary circuit comprises a pressure raising device (e.g. injector pump) operative to pressurise fluid received from the condenser heat exchanger stage and deliver fluid at raised pressure to the evaporator heat exchanger stage.

In one embodiment, the pressure output of the pressuring raising device is above atmospheric pressure (e.g. at least 0.5 bar, e.g. at least 1 bar, e.g. at least 2 bar).

In one embodiment, the secondary circuit includes a circulation pump connected to a back-up power supply (e.g. batter) and method further comprises the steps of: in a power outage mode: discontinuing operation of the pressure raising device in the primary circuit; and maintaining operation of the circulation pump of the secondary circuit using the back-up power supply until all the gaseous phase of the first heat transfer fluid in the primary circuit has been safely condensed.

In one embodiment, the secondary circuit comprises a buffer store operative to hold a sufficient mass of the second heat transfer fluid to absorb all of the heat from the heat transfer fluid in the primary circuit as it condenses.

In one embodiment, the evaporator heat exchanger stage comprises: a pipe circuit extending through or around the heat energy store, the pipe circuit having an inlet and an outlet; wherein the evaporating step of the discharging mode comprises generating a gaseous flow of the first heat transfer fluid at the outlet with a velocity of at least 100 km/hour (e.g. at least 200 km/hour, e.g. at least 300 km/hour).

In one embodiment, the energy storage system is an energy storage system in accordance with the third aspect of the present invention (e.g. in accordance with any embodiment of the third aspect of the present invention).

In accordance with a fifth aspect of the present invention, there is provided an electrical installation for a building (e.g. domestic dwelling or workspace within a building), the electrical installation comprising: a supply of electrical power to the building (e.g. network grid supply) having a maximum rated current draw; an energy storage system including: a thermal energy store (e.g. thermal mass); at least one electrical heating devices operable to draw current from the supply of electrical power to supply thermal energy to the thermal energy store; and a heat exchanger operative to transfer thermal energy from the thermal energy store to a heat transfer fluid (e.g. heat transfer fluid of (or thermally coupled to) a hot water/central heating system of the building); a control arrangement including: a controller; a sensor operative to measure the current being drawn from the supply; at least one current-controlling device each operable by the controller to control the amount of current delivered to the at least one electrical heating device; wherein the controller functions to operate the at least one current-controlling device to limit the total current delivered to the energy storage system (e.g. to the at least one electrical heating device) to less than the maximum rated current draw.

In one embodiment, the least one current-controlling device is operable to reduce the amount of current delivered to the at least one electrical heating device to a value below the maximum current drawn by the electrical heating device at the voltage of the supply.

In one embodiment, the energy storage system comprises a plurality of heating circuits each including a respective electrical heating device and the controller functions to operate the at least one current-controlling device to limit the total current delivered to the plurality of electrical heating devices to less than the maximum rated current draw.

In one embodiment, the at least one current-controlling device is operable to isolate an electrical heating device (e.g. isolate one of the plurality of heating circuits) from the supply.

In one embodiment, the plurality of heating circuits comprise a variable power (e.g. variable current) heating circuit and one or more fixed power (e.g. fixed current) heating circuits.

In one embodiment, the energy storage system further comprises at least one additional electrical device capable of drawing current from the supply.

In one embodiment, the at least one additional electrical device includes a fluid heating device operable by the controller to draw current from the supply of electrical power to supply heat to (e.g. direct to) the heat transfer fluid (e.g. as the heat transfer fluid flows from the energy storage system to the hot water/central heating system of the building). In this way, the energy storage system may provide a boost at the start-up of operation of the hot water/central heating system (e.g. with the heat output of the energy storage being greater than the maximum output of the thermal energy store) or to supplement the heat output of the energy store when it drops below a threshold level (e.g. when the temperature of the thermal energy storage has dropped below an ideal level).

In one embodiment, the at least one additional electrical device is provided on one or more of the plurality of circuits.

In one embodiment, one or more of the plurality of circuits is capable of switching between charging the thermal energy store to directly heating the heat transfer fluid (e.g. directly supplying heat to the hot water/central home water circuit of the building).

In one embodiment, the energy storage system is located externally of the building or in/adjacent a garage associated with the building.

In one embodiment, the at least one additional electrical device include charging apparatus for an electric vehicle (e.g. provided on one or more of the plurality of heating circuits). In this way, the energy storage system can provide heat to home water circuits as well as one or more EV chargers, allowing for the provision of vehicle-to-grid or vehicle-to-home bi-directional power.

In one embodiment, the supply comprises a network fuse.

In one embodiment, the energy storage system is connected between the network fuse and a feed (e.g. network feed) into the building.

In one embodiment, the sensor is operative to measure the current being drawn from the supply at a point upstream of the network fuse.

In one embodiment, the sensor is operative to measure the current being drawn from the supply at a point between the network fuse and the energy storage system.

In one embodiment, the total (e.g. combined) current-drawing capacity of the at least one electrical heating device at a maximum expected supply voltage is at least 110% (e.g. at least 120%, e.g. at least 130%, e.g. at least 140%) of the maximum current draw of the supply (e.g. of the network fuse rating). In this way, the effect of a drop in voltage at the supply on performance of the at least one heating device may be substantially minimised.

In one embodiment, the controller functions to operate the at least one current-controlling device to limit the total current delivered to the energy storage system to 90% or less of the maximum rated current draw (e.g. to minimise the risk of blowing the network fuse).

In one embodiment, the supply is a single-phase supply.

In one embodiment, the supply is a multi-phase (e.g. three-phase) supply.

In one embodiment, the energy storage system is an energy storage system in accordance with the second, third, seventh, tenth, twelfth, fourteenth or sixteenth aspects of the invention (e.g. in accordance with any embodiment of the second, third, seventh, tenth, twelfth, fourteenth or sixteenth aspects of the invention).

In accordance with a sixth aspect of the present invention, there is provided a vacuum-insulated vessel comprising: an inner vessel; an outer vessel surrounding the inner vessel, the inner and outer vessels being spaced by a vacuum region extending therebetween; and an internal brace provided inside the vacuum region, the internal brace being configured to engage an inner surface of the outer vessel and resist compression of the outer vessel.

In this way a vacuum-insulated vessel with a relatively thin outer vessel wall may be provided with the ability to withstand compressive forces generated by negative pressure within the vessel and/or resist external pressure/external impacts.

In one embodiment, the inner surface of the outer vessel has a substantially cylindrical profile.

In one embodiment, the internal brace has a substantially annular profile when viewed along a longitudinal axis of the internal brace.

In one embodiment, no part of the internal brace is in contact with the inner vessel.

In one embodiment, the internal brace is configured to be slidably insertable into the vacuum region (e.g. during manufacture).

In one embodiment, the internal brace is manufactured from a single piece (e.g. a one-piece part).

In one embodiment, the internal brace is a radially (e.g. circumferentially) expandable brace (e.g. expandable between a radially contracted configuration and a radially expanded configuration).

In one embodiment, the radially expandable brace is biased (e.g. resiliently biased) in the expanded configuration.

In one embodiment, the radially expandable brace is preloaded to apply tension to the inner surface of the outer vessel (i.e. with tension being applied continuously to the inner surface of the outer vessel).

In an alternative embodiment, the internal brace (e.g. radially expandable brace in the radially expanded configuration) may be a snug fit inside against the inner surface of the outer vessel (e.g. with tension only being applied to the inner surface of the outer vessel in response to a compressive displacement of the inner surface of the outer vessel).

In one embodiment, the radially expandable brace comprises a radially expandable cage structure.

In one embodiment, the radially expandable brace is a torsional brace configured to be urged to expand radially when under torsion (e.g. urged to expand radially when torsion is applied in a first direction and urged to contract radially when torsion is applied in a second counter direction).

In one embodiment, the torsional brace comprises a cage or coil structure.

In one embodiment, the torsional brace comprises a helical coil structure.

In one embodiment, the helical coil structure is a substantially continuous helical coil structure or a structure comprising a series of connected helical coil sections (e.g. helical coil sections connected in series by torsion transmitting connections (e.g. coil or non-coil torsion transmitting connections)).

In one embodiment, the torsional brace applies tension to the inner surface of the outer vessel (e.g. is inserted into the vacuum region in a torsioned configuration or is torsioned after insertion into the vacuum region).

In one embodiment, the vacuum-insulated vessel comprises a further internal brace provided inside the inner vessel, the further internal brace being configured to engage an inner surface of the inner vessel and resist compression of the inner vessel (e.g. during testing of the inner vessel during manufacture).

In one embodiment, the further internal brace is in accordance with any embodiment of the first-defined internal brace defined hereinabove.

In one embodiment, the vacuum region has a vacuum pressure (e.g. partial vacuum pressure).

In one embodiment, the vacuum pressure is between 0.05mbar and 1mbar.

In one embodiment, the vacuum-insulated vessel comprises a vacuum pump (e.g. integral vacuum pump) operative to maintain the vacuum pressure (e.g. partial vacuum pressure) in the vacuum region.

In one embodiment, the vacuum pump maintains the vacuum pressure at a level between 0.05mbar and 1mbar.

In one embodiment, the vacuum-insulated vessel comprises a sensor operative to measure a parameter (e.g. pressure and/or temperature (e.g. surface temperature)) at one or more location in the vacuum-insulated vessel and the vacuum pump is configured to operate whenever the sensor indicates that the parameter reaches (e.g. the pressure drops below/temperature rises above) a predetermined value. In this way, a vacuum-insulated vessel is provided with vacuum insulation requiring only intermittent operation of the vacuum pump.

In one embodiment, the vacuum-insulated vessel further comprises an integral vacuum valve operative to connect the vacuum pump to the vacuum region.

In one embodiment, the vacuum-insulated vessel further comprises thermal insulation provided within the vacuum region. In this way, the level of vacuum required to achieve the desired degree of insulation may be reduced.

In one embodiment, the thermal insulation is wrapped around an outer wall of the inner vessel (e.g. substantially covering the outer surface of the inner vessel). In this way, the thermal insulation may act as a microporous insulator only in a direction perpendicular to the sides of the inner vessel.

In one embodiment, the thermal insulation comprises $n$ layers of multilayer insulation.

In one embodiment, each layer of multilayer insulation comprises a reflective layer and a spacer layer.

In one embodiment, $n \geq 50$ (e.g. $n \geq 100$, e.g. $n \geq 150$).

In one embodiment, $n$ is approximately 200 (e.g. $n$ is substantially 200).

In one embodiment, the thermal insulation comprises at least 10 layers of multilayer insulation per 100 degrees Celsius of temperature difference across the vacuum region (i.e. $n \geq 50$ when the temperature difference is 500 degrees Celsius), at least 20 layers of multilayer insulation per 100 degrees Celsius of temperature difference across the vacuum region (i.e. $n \geq 100$ when temperature difference 500 degrees Celsius), or at least 40 layers of multi-layer insulation per 100 degrees Celsius temperature difference across the vacuum region (i.e. $n \geq 200$ when temperature difference 500 degrees Celsius). That is to say, in one embodiment $\frac{\Delta T}{n} \leq 10$, in another embodiment $\frac{\Delta T}{n} \leq 5$, and in another embodiment $\frac{\Delta T}{n} \leq 2.5$, wherein $\Delta T$ is the temperature across the vacuum region (i.e. temperature difference between an inner wall of the outer vessel and the opposed outer wall of the inner vessel) in degrees Celsius.

In one embodiment, the average (e.g. mean) spacing between the reflective layer and spacer layer of each layer of multilayer insulation is less than 1mm (e.g. less than 0.5mm, e.g. less than 0.2mm).

In one embodiment, the average (e.g. mean) spacing between the reflective layer and spacer layer of each layer of multilayer insulation varies between layers.

In one embodiment, spacing between the reflective layer and spacer layer of each layer of multilayer insulation is between 1mm and 0.01mm.

In one embodiment, the reflective layer is a sheet of reflective metal (e.g. aluminium sheet).

In one embodiment, the spacer layer is a thin glass fibre layer or thin ceramic fibre (e.g. ceramic fibre paper) layer.

In accordance with a seventh aspect of the present invention, there is provided an energy storage system comprising a vacuum-insulated vessel according to the sixth aspect of the present invention (e.g. in accordance with any embodiment of the sixth aspect of the present invention).

In accordance with an eighth aspect of the present invention, there is provided a vacuum-insulated pipe comprising: an inner pipe section; an outer pipe section surrounding the inner pipe section, the inner and outer pipe sections being spaced by a vacuum region extending therebetween; and an internal brace provided inside the vacuum region, the internal brace being configured to engage an inner surface of the outer pipe section and resist compression of the outer pipe section.

In one embodiment, the inner surface of the outer pipe section has a substantially cylindrical profile.

In one embodiment, the internal brace has a substantially annular profile when viewed along a longitudinal axis of the internal brace.

In one embodiment, no part of the internal brace is in contact with the inner pipe section.

In one embodiment, the internal brace is configured to be slidably insertable into the vacuum region (e.g. during manufacture).

In one embodiment, the internal brace is manufactured from a single piece (e.g. a one-piece part).

In one embodiment, the internal brace is a radially (e.g. circumferentially) expandable brace (e.g. expandable between a radially contracted configuration and a radially expanded configuration).

In one embodiment, the radially expandable brace is biased (e.g. resiliently biased) in the expanded configuration.

In one embodiment, the radially expandable brace is preloaded to apply tension to the inner surface of the outer pipe section (i.e. with tension being applied continuously to the inner surface of the outer pipe section).

In an alternative embodiment, the internal brace (e.g. radially expandable brace in the radially expanded configuration) may be a snug fit inside against the inner surface of the outer pipe section (e.g. with tension only being applied to the inner surface of the outer pipe section in response to a compressive displacement of the inner surface of the outer pipe section).

In one embodiment, the radially expandable brace comprises a radially expandable cage structure.

In one embodiment, the radially expandable brace is a torsional brace configured to be urged to expand radially when under torsion (e.g. urged to expand radially when torsion is applied in a first direction and urged to contract radially when torsion is applied in a second counter direction).

In one embodiment, the torsional brace comprises a cage or coil structure.

In one embodiment, the torsional brace comprises a helical coil structure.

In one embodiment, the helical coil structure is a substantially continuous helical coil structure or a structure comprising a series of connected helical coil sections (e.g. helical coil sections connected in series by torsion transmitting connections (e.g. coil or non-coil torsion transmitting connections)).

In one embodiment, the torsional brace applies tension to the inner surface of the outer pipe section (e.g. is inserted into the vacuum region in a torsioned configuration or is torsioned after insertion into the vacuum region).

In one embodiment, the vacuum region has a vacuum pressure (e.g. partial vacuum pressure).

In one embodiment, the vacuum pressure is between 0.05mbar and 1mbar.

In one embodiment, the vacuum-insulated pipe comprises a vacuum pump (e.g. integral vacuum pump) operative to maintain the vacuum pressure (e.g. partial vacuum pressure) in the vacuum region.

In one embodiment, the vacuum pump maintains the vacuum pressure at a level between 0.05mbar and 1mbar.

In one embodiment, the vacuum-insulated pipe comprises a sensor operative to measure a parameter (e.g. pressure and/or temperature (e.g. surface temperature)) at one or more location in the vacuum-insulated pipe and the vacuum pump is configured to operate whenever the sensor indicates that the parameter reaches (e.g. the pressure drops below/temperature rises above) a predetermined value. In this way, a vacuum-insulated pipe is provided with vacuum insulation requiring only intermittent operation of the vacuum pump.

In one embodiment, the vacuum-insulated pipe further comprises an integral vacuum valve operative to connect the vacuum pump to the vacuum region.

In one embodiment, the vacuum-insulated pipe further comprises thermal insulation provided within the vacuum region. In this way, the level of vacuum required to achieve the desired degree of insulation may be reduced.

In one embodiment, the thermal insulation is wrapped around an outer wall of the inner pipe section (e.g. substantially covering the outer surface of the inner pipe section). In this way, the thermal insulation may act as a microporous insulator only in a direction perpendicular to the sides of the inner pipe section.

In one embodiment, the thermal insulation comprises *n* layers of multilayer insulation.

In one embodiment, each layer of multilayer insulation comprises a reflective layer and a spacer layer.

In one embodiment, *n* ≥50 (e.g. *n* ≥100, e.g. *n* ≥150).

In one embodiment, *n* is approximately 200 (e.g. *n* is substantially 200).

In one embodiment, the thermal insulation comprises at least 10 layers of multilayer insulation per 100 degrees Celsius of temperature difference across the vacuum region (i.e. *n*≥50 when the temperature difference is 500 degrees Celsius), at least 20 layer of multilayer insulation per 100 degrees Celsius of temperature difference across the vacuum region (i.e. *n*≥100 when temperature difference 500 degrees Celsius), or at least 40 layer of multi-layer insulation per 100 degrees Celsius temperature difference across the vacuum region (i.e. *n*≥200 when temperature difference 500 degrees Celsius). That is to say, in one embodiment $\frac{\Delta T}{n} \leq 10$, in another embodiment $\frac{\Delta T}{n} \leq 5$, and in another embodiment $\frac{\Delta T}{n} \leq 2.5$, wherein ΔT is the temperature across the vacuum region (i.e. temperature difference between an inner wall of the outer vessel and the opposed outer wall of the inner vessel) in degrees Celsius.

In one embodiment, the average (e.g. mean) spacing between the reflective layer and spacer layer of each layer of multilayer insulation is less than 1mm (e.g. less than 0.5mm, e.g. less than 0.2mm).

In one embodiment, the average (e.g. mean) spacing between the reflective layer and spacer layer of each layer of multilayer insulation varies between layers.

In one embodiment, spacing between the reflective layer and spacer layer of each layer of multilayer insulation is between 1mm and 0.01mm.

In one embodiment, the reflective layer is a sheet of reflective metal (e.g. aluminium sheet).

In one embodiment, the spacer layer is a thin glass fibre layer or thin ceramic fibre (e.g. ceramic fibre paper) layer.

In one embodiment, the outer pipe section comprises at least one expansion region.

In one embodiment, the vacuum-insulated pipe further comprises at least one external support operative to support the outer pipe section (e.g. provided at a point adjacent the at least one expansion region).

In one embodiment, the at least one external support is configured to slidably engage the outer pipe section (e.g. by means of an external rotary (e.g. roller) bearing).

In one embodiment, the vacuum-insulated pipe further comprises at least one internal support operative to support the inner pipe section (e.g. provided at a point adjacent the at least one expansion region).

In one embodiment, the at least one internal support is configured to slidably engage the inner pipe section (e.g. by means of an internal rotary (e.g. roller) bearing).

In accordance with a ninth aspect of the present invention, there is provided a heat store (e.g. hot water storage tank) comprising: a vessel (e.g. insulated vessel) defining a chamber for storing heated water; a primary water (e.g. hot water) outlet line operative during a discharging mode to receive water (e.g. hot water) from an upper region of the chamber and discharge the received water from the vessel; a water inlet line operative during the discharging mode to introduce water into a lower region of the chamber (e.g. to replenish the vessel with water); a self-cleaning module comprising a secondary water (e.g. warm water) outlet line operative during the discharging mode to receive water (e.g. warm water) from the lower region of the chamber and to discharge the received water from the vessel; and a mixer stage (e.g. mixer valve) operative to mix water (e.g. warm water) received from the secondary outlet line with water (e.g. hot water) received from the primary water outlet line to provide an output flow (e.g. output flow with a predetermined water temperature).

In this way, a heat store is provided in which debris (e.g. mineral debris such as limescale deposits) may be flushed from the chamber and entrained in an output flow from the vessel during the discharging mode.

Advantageously this means that cleaning of the vessel can be achieved without the need for filters or collectors and thereby reduces the need for regular maintenance.

In one embodiment, the water inlet line is operative to introduce cold water (e.g. mains water) into the lower region of the chamber.

In one embodiment, the secondary water outlet line comprises a water inlet (e.g. warm water inlet) provided at a base portion of the chamber.

In one embodiment, the water inlet is provided substantially level with an inner surface of a base portion of the chamber.

In one embodiment, the water inlet is provided at a lowermost region of the base portion of the chamber.

In one embodiment, the water inlet is provided at a central (e.g. central lowermost) location in the base portion of the chamber.

In one embodiment, the secondary water outlet line comprises secondary water outlet pipe means (e.g. a secondary water outlet pipe).

In one embodiment, the secondary water outlet pipe means extends through a base of the vessel.

In one embodiment, the water inlet line comprises a water outlet (e.g. cold water outlet) provided in the lower region of the chamber.

In one embodiment, the water outlet is positioned in a higher position inside the chamber than the water inlet.

In one embodiment, the water outlet comprises a diffuser operative to disperse water (e.g. disperse water (e.g. cold water) laterally (e.g. in a plurality of lateral directions)).

In one embodiment, the water inlet line comprises water inlet pipe means (e.g. a water inlet pipe).

In one embodiment, the water inlet pipe means extends through a base of the vessel and into the lower portion of the chamber.

In one embodiment, the water inlet line and the secondary water outlet line extend through a single aperture provided in a base of the vessel.

In one embodiment, the water inlet pipe means comprises a first passageway defining a first longitudinal axis and the secondary water pipe means comprises a second passageway defining a second longitudinal axis.

In one embodiment, the first and second longitudinal axes are substantially aligned (e.g. co-axial).

In one embodiment, the water inlet pipe means extends through (e.g. longitudinally through) the second passageway of the secondary water pipe means or vice versa.

In one embodiment, the heat store is further configured to add (e.g. selectively add) a further stream of water to the output flow (e.g. either at a point downstream or upstream of the mixer stage).

In one embodiment, the heat store is further configured to add (e.g. selectively add) cold water (e.g. cold water tapped from the water inlet line) to the output flow (e.g. either at a point downstream or upstream of the mixer stage).

In one embodiment, the heat store further comprises a second mixer stage (e.g. second mixer valve) operative to selectively mix cold water (e.g. tapped from the water inlet line) with the output flow from the first-defined mixer stage.

In one embodiment, the vessel is an inner vessel and the heat store further comprises an outer vessel surrounding the inner vessel, the inner and outer vessels being spaced by a vacuum region extending therebetween.

In one embodiment, at least one of (e.g. each of) the water inlet line and the secondary water outlet line extend through a base of the inner vessel.

In one embodiment, at least one of (e.g. each of) the water inlet line and the secondary water outlet line extend through a base of the outer vessel.

In one embodiment, the primary water outlet line extends through the base of the inner vessel.

In one embodiment, the primary water outlet line extends through the base of the outer vessel.

In one embodiment, the primary water outlet line comprises primary water outlet pipe means (e.g. primary water outlet pipe).

In one embodiment, the primary water outlet line extends through the single aperture in the base of the vessel (e.g. through the same single aperture as the water inlet line and secondary water outlet line).

In one embodiment, the primary water outlet line defines a third longitudinal axis.

In one embodiment, the third longitudinal axis and one or more of (e.g. each of) the first and second axes are substantially aligned (e.g. co-axial).

In one embodiment, the primary water outlet line forms part of a hot water dispenser module.

In one embodiment, the hot water dispenser module comprises: an outer sleeve extending through a base of the inner vessel and through a base of the outer vessel, the outer sleeve defining a sleeve chamber; and the primary water outline line extends through the sleeve chamber (e.g. to an outlet external to the outer vessel).

In one embodiment, the sleeve chamber is sealed at its upper end to prevent ingress of water into the sleeve chamber.

In one embodiment, the hot water dispenser module extends through the single aperture in the base of the vessel (e.g. through the same single aperture as the water inlet line and secondary water outlet line).

In one embodiment, the hot water dispenser module defines a fourth longitudinal axis.

In one embodiment, the fourth longitudinal axis and one or more of (e.g. each of) the first and second axes are substantially aligned (e.g. co-axial).

In one embodiment, the heat store further comprises: an external heating stage operative to heat incoming water at a location exterior to the vessel; and a heated water inlet line operative during a charging mode to introduce water heated by the heating stage into the vessel.

In one embodiment, the heated water inlet line extends through a base of the vessel.

In one embodiment, the heated water inlet line extends through a central region of the base of the vessel.

In one embodiment, the heat store comprises a pump for conveying water to the heating stage and/or to the heated water inlet line.

In one embodiment, the heated water inlet line comprises a heated water outlet located in the base of the vessel.

In one embodiment, the heated water inlet line comprises heated water inlet pipe means (e.g. a heated water inlet pipe).

In one embodiment, the heated water inlet pipe means extends through the base of the vessel.

In one embodiment, a lower end of the primary water outlet line extends through the base of the vessel.

In one embodiment, the heated water inlet line and the heated water outlet line extend through the single aperture provided in the base of the vessel (e.g. through the same single aperture as the water inlet line/secondary water outlet line and/or primary water outlet line).

In one embodiment, the lower end of the heated water outlet line acts as the heated water inlet during the charging mode (whereby water heated by the heating stage is delivered up through the primary water output line to the upper region of the vessel).

In one embodiment, the heated water inlet line is provided in parallel to the lower end of the heated water outlet line.

In one embodiment, the heated water inlet is positioned to introduce the received heated water into a lower section of the chamber.

In one embodiment, the heated water inlet pipe means comprises a first passageway defining a first longitudinal axis and the primary water outlet pipe means comprises a second passageway defining a second longitudinal axis.

In one embodiment, the first and second longitudinal axes are substantially aligned (e.g. co-axial).

In one embodiment, the primary water outlet pipe means extends through (e.g. longitudinally through) the second passageway of the heated water inlet pipe means or vice versa.

In one embodiment, the heating stage comprises an electrical heating element.

In one embodiment, the heating stage comprises a heat exchanger.

In one embodiment, the heat store further comprises a descaler stage (e.g. electronic or magnetic descaler).

In one embodiment, the descaler stage is provided upstream of the heating stage (e.g. between the pump and the heating stage).

In one embodiment, the heating stage is operative to heat water received from the descaler stage after a predetermined time period has elapsed (e.g. at least 1-20 seconds after exposure to the descaler stage).

In one embodiment, the heating stage is operative to receive water processed by the descaler stage 1-600 seconds after exposure of the water to the descaler stage (e.g. 2-600 seconds after exposure of the water to the descaler stage, e.g. 10-600 seconds after exposure of the water to the descaler stage, e.g. 20-600 seconds after exposure of the water to the descaler stage).

In one embodiment, the heating stage is operative to receive water processed by the descaler stage soon after (e.g. immediately after) the predetermined time period has elapsed.

In one embodiment, the heating stage is operative to heat water received from the descaler stage within 1-600 seconds after exposure to the descaler stage.

In one embodiment, the predetermined time period is achieved by virtue of a slow flow rate between the descaler stage and the heating stage.

In one embodiment, the heated water outlet line forms part of the hot water dispenser module.

In one embodiment, the vessel is a thermally stratified tank.

In one embodiment, the heat store may comprise any of the features of the first, sixth, eleventh, thirteenth or fifteenth aspects of the present invention (e.g. in accordance with any embodiment of the first sixth, eleventh, thirteenth or fifteenth aspects of the present invention).

In accordance with a tenth aspect of the present invention, there is provided an energy storage system comprising a heat store according to the ninth aspect of the present invention (e.g. in accordance with any embodiment of the ninth aspect of the present invention).

In accordance with an eleventh aspect of the present invention, there is provided a heat store (e.g. hot water storage tank) comprising: a vessel defining a chamber for storing a heated liquid (e.g. heated water or oil); a heated liquid (e.g. hot water) outlet line operative during a discharging mode to receive heated liquid (e.g. hot water) from an upper region of the vessel and to discharge the heated liquid from the vessel; an external heating stage operative to heat incoming liquid at a location exterior to the vessel; and a heated liquid (e.g. hot water) inlet line operative during a charging mode to introduce liquid heated by the heating stage into the vessel.

In this way, a heat store is provided in which heating is achieved fully externally of the vessel thereby obviating the need to place and subsequently maintain heating elements inside the vessel.

In one embodiment, the heated liquid inlet line extends through a base of the vessel.

In one embodiment, the heat store is operative during the discharging mode to introduce liquid (e.g. cooled liquid) to the vessel (e.g. to replenish the vessel) and operative during the charging mode to transfer liquid from the tank (e.g. liquid (e.g. cooled liquid) from a lower region of the tank) to the heating stage (e.g. for heating before being returned to the vessel via the heated liquid inlet line.

In one embodiment, the heated liquid inlet line extends through a central region of the base of the vessel.

In one embodiment, the heat store comprises a pump for conveying liquid to the heating stage and/or to the heated liquid inlet line.

In one embodiment, the heated liquid inlet line comprises a heated liquid inlet located in the base of the vessel.

In one embodiment, the heated liquid inlet line comprises heated liquid inlet pipe means (e.g. a heated liquid inlet pipe).

In one embodiment, the heated liquid inlet pipe means extends through the base of the vessel.

In one embodiment, a lower end of the heated liquid outlet line extends through the base of the vessel.

In one embodiment, the heated liquid inlet line and the heated liquid outlet line extend through a single aperture provided in the base of the vessel.

In one embodiment, a lower end of the heated liquid outlet line acts as the heated liquid inlet during the charging mode (whereby liquid heated by the heating stage is delivered up through the heated liquid output line to the upper region of the vessel).

In one embodiment, the heated liquid inlet line is provided in parallel to the lower end of the heated liquid outlet line.

In one embodiment, the heated liquid inlet is positioned to introduce the received heated liquid into a lower section of the chamber.

In one embodiment, the heated liquid outlet line comprises heated liquid outlet pipe means (e.g. a heated liquid outlet pipe).

In one embodiment, the heated liquid inlet pipe means comprises a first passageway defining a first longitudinal axis and the heated liquid outlet pipe means comprises a second passageway defining a second longitudinal axis.

In one embodiment, the first and second longitudinal axes are substantially aligned (e.g. co-axial).

In one embodiment, the heated liquid outlet pipe means extends through (e.g. longitudinally through) the second passageway of the heated liquid inlet pipe means or vice versa.

In one embodiment, the heating stage comprises an electrical heating element.

In one embodiment, the heating stage comprises a heat exchanger.

In the case that the heated liquid is water, in one embodiment the heat store further comprises a descaler stage (e.g. electronic or magnetic descaler).

In one embodiment, the descaler stage is provided upstream of the heating stage (e.g. between the pump and the heating stage).

In one embodiment, the heating stage is operative to heat water received from the descaler stage after a predetermined time period has elapsed (e.g. at least 1-20 seconds after exposure to the descaler stage).

In one embodiment, the heating stage is operative to receive water processed by the descaler stage soon after (e.g. immediately after) the predetermined time period has elapsed.

In one embodiment, the heating stage is operative to receive water processed by the descaler stage 1-600 seconds after exposure of the water to the descaler stage (e.g. 2-600 seconds after exposure of the water to the descaler stage, e.g. 10-600 seconds after exposure of the water to the descaler stage, e.g. 20-600 seconds after exposure of the water to the descaler stage).

In one embodiment, the predetermined time period is achieved by virtue of a slow flow rate between the descaler stage and the heating stage.

In one embodiment, the vessel is an inner vessel and the heat store further comprises an outer vessel surrounding the inner vessel, the inner and outer vessels being spaced by a vacuum region extending therebetween.

In one embodiment, the external heating stage is operative to heat incoming liquid at a location exterior to the outer vessel.

In one embodiment, the heated liquid inlet line is operative during the charging mode to introduce liquid heated by the heating stage into the inner vessel.

In one embodiment, the heated liquid inlet line extends through a base of the inner vessel.

In one embodiment, the heated liquid inlet line extends through a base of the outer vessel.

In one embodiment, the vessel is a thermally stratified tank.

In one embodiment, the heat store may comprise any of the features of the first sixth, ninth, thirteenth or fifteenth aspects of the present invention (e.g. in accordance with any embodiment of the first, sixth, ninth, thirteenth or fifteenth aspects of the present invention).

In accordance with a twelfth aspect of the present invention, there is provided an energy storage system comprising a heat store according to the eleventh aspect of the present invention (e.g. in accordance with any embodiment of the eleventh aspect of the present invention).

In accordance with a thirteenth aspect of the present invention, there is provided a vacuum-insulated heat store (e.g. vacuum-insulated hot water storage tank) comprising: an inner vessel defining a chamber for storing a heated liquid (e.g. heated water or oil); an outer vessel surrounding the inner vessel, the inner and outer vessels being spaced by a vacuum region extending therebetween; a heated liquid (e.g. hot water) dispenser module comprising: an outer sleeve extending through a base of the inner vessel and through a base of the outer vessel, the outer sleeve defining a sleeve chamber; and a heated liquid (e.g. hot water) outlet line extending through the sleeve chamber (e.g. to an outlet external to the outer vessel).

Advantageously the provision of the heated liquid dispenser module allows the parts mounted in the module to be inserted through an aperture in the vessel thereby simplifying manufacture and subsequent maintenance.

In one embodiment, the sleeve chamber is sealed at its upper end to prevent ingress of liquid into the sleeve chamber.

In one embodiment, the heated liquid outlet line comprises heated liquid outlet pipe means (e.g. a heated liquid outlet pipe).

In one embodiment, the sleeve chamber is configured to provide a layer of thermal insulation (e.g. an airgap) around the heated liquid outlet line.

In one embodiment, the sleeve chamber is open to atmosphere at its lower end.

In one embodiment, the outer sleeve comprises a single sleeve element extending from inside the inner vessel to the base of the outer vessel. In another embodiment, the outer sleeve may comprises a plurality of connected elements.

In one embodiment, the sleeve chamber has a substantially cylindrical inner profile.

In one embodiment, the outer sleeve has a substantially cylindrical outer profile.

In one embodiment, the heated liquid dispenser module comprises at least one temperature sensor provided inside the sleeve chamber (e.g. spaced from the heated liquid outlet line) operative to measure the temperature of heated liquid inside the inner vessel.

In one embodiment, the heated liquid dispenser module comprises a plurality of temperature sensors (e.g. provided at different heights along the module) operative to measure the temperature of heated liquid inside the inner vessel at different heights in the inner vessel.

In one embodiment, the weight of the inner vessel is at least partially supported (e.g. substantially supported) by the outer sleeve.

In one embodiment, the inner vessel is a thermally stratified tank.

In one embodiment, the vacuum insulated heat store may comprise any of the features of the first, sixth, ninth, eleventh or fifteenth aspects of the present invention (e.g. in accordance with any embodiment of the first, sixth, ninth, eleventh or fifteenth aspects of the present invention).

In accordance with a fourteenth aspect of the present invention, there is provided an energy storage system comprising a vacuum-insulated heat store according to the thirteenth aspect of the present invention (e.g. in accordance with any embodiment of the thirteenth aspect of the present invention).

In accordance with a fifteenth aspect of the present invention, there is provided a vacuum-insulated vessel comprising: an inner vessel housing a thermal energy store; an outer vessel surrounding the inner vessel, the inner and the outer vessels being spaced by a vacuum region extending therebetween; wherein the inner vessel is connected to the outer vessel via an interior neck portion, the interior neck portion comprising: an outer neck portion; and a tapered inner neck portion connecting the outer neck portion to the inner vessel.

In this way, a neck portion is provided that distributes bending loads in a controlled manner that allows use of thinner material (e.g. thinner steel) to form the neck portion.

In one embodiment, the interior neck portion includes a central chamber (e.g. central conduit) housing supply lines for the thermal energy store (e.g. supply lines for at least one heating element (e.g. electrical cables for at least one electrical heating element) and/or fluid transfer pipes (e.g. inlet and outlet pipes)).

In one embodiment, no part of the inner vessel is in contact with the outer vessel.

In one series of embodiments, the interior neck portion is provided at an upper end of the inner vessel (e.g. interior upper neck portion). In this series of embodiments, the outer neck portion is an upper neck portion and the tapered inner neck portion is a tapered lower neck portion.

In another series of embodiments, the interior neck portion is provided at a lower end of the inner vessel (e.g. interior lower neck portion). In this series of embodiment, the outer neck portion is a lower neck portion and the tapered inner neck portion is a tapered upper neck portion.

In one embodiment, the interior neck portion connects an outer section of the inner vessel to an outer section of the outer vessel (e.g. via a connecting plate).

In one embodiment, the interior neck portion is provided on the inner vessel (e.g. attached to or integrally formed with the inner vessel).

In one embodiment, the interior neck portion is connected (e.g. welded) to an outer end of the inner vessel.

In one embodiment, the outer neck portion is substantially cylindrical.

In one embodiment, the tapered inner neck portion has an outermost tapered section inclined at a steeper taper angle than a corresponding taper angle of an innermost section of the tapered inner neck portion.

In one embodiment, the tapered inner neck portion has a concave curved surface profile (e.g. with an angle of inclination to vertical which increases with increased distance from the base of the tapered neck portion).

For the purposes of the present disclosure, the taper angle is an acute angle measured from vertical (i.e. the smaller the value of the angle, the steeper the inclination of the taper).

In one embodiment, the interior neck portion meets the inner vessel at a tapered shoulder section of the inner vessel.

In one embodiment, the tapered shoulder section has a convex curved surface profile (e.g. with an angle of inclination to vertical which increases with increased distance from the base of the tapered neck portion).

In one embodiment, the interior neck portion is connected to the outer vessel via a connector plate.

In one embodiment, the outer vessel comprises an exterior neck portion.

In one embodiment, the exterior neck portion comprises a tapered neck portion (e.g. tapered inner neck portion).

In one embodiment, the exterior neck portion comprises an outer neck portion (e.g. in addition to the tapered inner neck portion).

In one embodiment, the outer neck portion of the exterior neck portion is substantially cylindrical.

In one embodiment, the tapered inner neck portion of the exterior neck portion has an outermost tapered section inclined at a steeper taper angle than a corresponding taper angle of an innermost section of the tapered inner neck portion.

In one embodiment, the tapered neck portion of the exterior neck portion has a concave curved surface profile (e.g. with an angle of inclination to vertical which increases with increased distance from the base of the tapered neck portion).

In one embodiment, the exterior neck portion meets the outer vessel at a tapered shoulder section of the outer vessel.

In one embodiment, the inner vessel further comprises a barrier (e.g. membrane) configured to physically separate the thermal energy store from the interior neck portion (e.g. so that thermal losses via the interior neck portion involve a heat path extending through the barrier and along substantially the full length of the interior neck portion). This may be particularly useful in the case that the case that the interior neck portion is provided at a lower end of the inner vessel (e.g. interior lower neck portion) in order to maximise the thermal efficiency of the neck design.

In one embodiment, the barrier presents a convex barrier surface to the thermal energy store (e.g. to maximise the separation between the thermal energy media and the interior neck portion).

In one series of embodiments, the inner vessel is suspended within the outer vessel.

In one embodiment, the inner vessel is suspended via a (e.g. single) interior neck portion (e.g. structurally loaded interior neck portion) connecting an upper section of the inner vessel to an upper section of the outer vessel.

In one embodiment, the interior neck portion supports the weight of the inner vessel and the thermal energy store.

In one embodiment, the outer vessel (e.g. upper section of the outer vessel) comprises an (e.g. first) aperture (e.g. sealable aperture) for receiving an end (e.g. upper end) of the interior neck portion.

In another series of embodiments, the inner vessel is supported via a (e.g. single) interior neck portion (e.g. structurally loaded interior neck portion) connecting a lower section of the inner vessel to a lower section of the outer vessel.

In one embodiment, the interior neck portion supports the weight of the inner vessel and the thermal energy store.

In one embodiment, the outer vessel (e.g. lower section of the outer vessel) comprises an (e.g. first) aperture (e.g. sealable aperture) for receiving an end (e.g. lower end) of the interior neck portion.

In one embodiment, the vacuum insulated vessel may comprise any of the features of the first, sixth, ninth, eleventh or thirteenth aspects of the present invention (e.g. in accordance with any embodiment of the first, sixth, ninth, eleventh or thirteenth aspects of the present invention).

In accordance with a sixteenth aspect of the present invention, there is provided an energy storage system comprising a vacuum-insulated vessel according to the fifteenth aspect of the present invention (e.g. in accordance with any embodiment of the fifteenth aspect of the present invention).

Embodiments of the invention will now be described by way of example with reference to the accompanying drawings in which:

Figure 1a is a schematic illustration of a heat store in accordance with a first embodiment of the present invention;

Figure 1b is a schematic illustration the insulation used in the heat store of Figure 1a;

Figure 2 is a schematic illustration of a heat store in accordance with a second embodiment of the present invention;

Figures 3a and 3b are schematic illustrations showing operation of a vacuum system used in the heat stores of Figures 1a and 2;

Figure 3c is a set of flow diagrams illustrating operation of the vacuum system of Figures 3a and 3b in two different modes of operation;

Figures 4a and 4b are enlarged views of a transportation system used in the heat stores of Figure 1a and Figure 2;

Figures 5i-viii illustrate a method of assembling the heat store of Figure 1a;

Figure 6 is a graph of pore sizes vs thermal conductivity in conventional microporous insulation;

Figure 7 is a schematic illustration of an electrical instillation for a building in accordance with a further embodiment of the present invention;

Figure 8 is a schematic illustration of an electrical instillation for a building in accordance with a further embodiment of the present invention;

Figure 9 is a schematic illustration of an electrical instillation for a building in accordance with a further embodiment of the present invention;

Figure 10 is a schematic illustration of an electrical instillation for a building in accordance with a further embodiment of the present invention;

Figure 11 is a schematic illustration of an energy storage system in accordance with a yet further embodiment of the present invention;

Figure 12 is a schematic illustration of an energy storage system in accordance with a further embodiment of the present invention for use with the electrical installation of Figure 8 or Figure 10;

Figure 13a is a schematic view of a first heat store for use in the energy storage system of Figure 11 or Figure 12;

Figure 13b is a schematic view of a second heat store for use in the energy storage system of Figure 11 or Figure 12; and

Figure 14 is a schematic view of the energy storage system of Figure 12 in combination with the heat store of Figure 13a.

Figure 15a is a schematic cross-sectional view of a vacuum vessel in accordance with the prior art;

Figure 15b is a schematic cross-sectional view of a vacuum vessel in accordance with an embodiment of the present invention;

Figure 15c is a schematic illustration of the properties of helical coils;

Figure 15d is a schematic illustration of stages in the construction of the vacuum vessel of Figure 15b

Figure 15e is a schematic cross-sectional view of a vacuum vessel in accordance with a further embodiment of the present invention;

Figure 16a is a schematic cross-sectional view of a vacuum-jacketed pipe in accordance with a yet further embodiment of the present invention;

Figure 16b is a schematic cross-sectional view of a modified vacuum-jacketed pipe in accordance with another embodiment of the present invention;

Figure 17 is a schematic cross-sectional view of a heat store in accordance with a further embodiment of the present invention;

Figure 18a is a schematic cross-sectional view of a hot water store in accordance with an embodiment of the present invention;

Figure 18b is a schematic cross-sectional view of a hot water store in accordance with a further embodiment of the present invention;

Figure 18c is a schematic cross-sectional view of a hot water store in accordance with another embodiment of the present invention;

Figure 19a is a schematic cross-sectional view of a hot water store in accordance with yet another embodiment of the present invention;

Figure 19b is a schematic cross-sectional view of a hot water store in accordance with another embodiment of the present invention;

Figure 20a is a schematic cross-sectional view of a hot water store in accordance with a further embodiment of the present invention;

Figures 20b-d illustrate operation of the hot water store of Figure 20a;

Figure 21 shows examples of neck structures for use with the vacuum vessels of the present invention;

Figure 22 shows a detailed geometry of one embodiment of a neck structure for use with the vacuum vessels of the present invention; and

Figure 23 is a schematic cross-sectional view of a vacuum vessel in accordance with a further embodiment of the present invention.

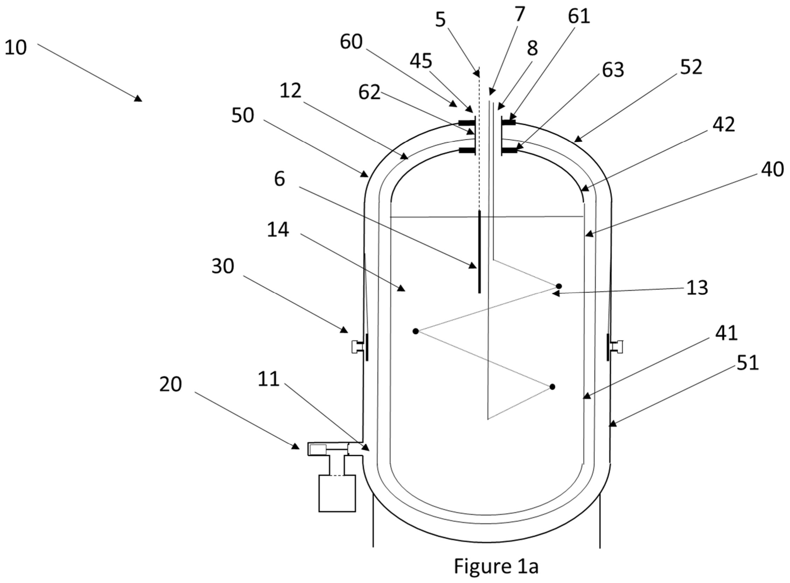

Figure 1a shows a vacuum insulated thermal store 10 comprising an inner vessel 40 and an outer vessel 50, inner vessel 40 containing a solid sensible heat storage material 14 with electric heating elements 6 and a heat exchanger 13 each embedded in sensible storage material 14. Electric heating elements 6 are connected via electric wire 5 to a controller (not shown). Sensible heat storage material 14 is encased within the inner vessel 40 comprising a lower inner vessel part 41 and an upper inner vessel part 42. Outer vessel 50 comprises a lower outer vessel part 51 and upper outer vessel part 52. Neck connector 60 comprises a lower neck plate 63 element which is attached to neck tube 62 which in turn is attached to upper neck plate 61. Inner vessel 40 is attached to outer vessel 50 by neck connector 60. The weight of the inner vessel 40 and sensible heat storage material 14 is suspended from the outer vessel 50 by neck connector 60. Inner vessel 40, outer vessel 50 and neck connector 60 form a vacuum space 11. A total of $n$ (where $n$ = 50-200) layers of multi-layer insulation ("MLI") 12 are wrapped around the inner vessel 40 and partially fills vacuum space 11.

The vacuum is created by integral vacuum system 20 that is connected to outer vessel 50. Outer vessel 50 also has a number of fittings attached that form the transportation interface system 30.

The solid sensible heat storage material 14 can be heated to temperatures over 200°C either by one or more embedded electrical heating elements 6. Heat can be withdrawn from solid sensible heat storage material 14 by passing a working fluid into heat exchanger 13 via pipe 7 and out from heat exchanger 13 via pipe 8, where the working fluid entering the heat exchanger 13 is cooler than the sensible storage material 14.

Neck tube 62 defines a central chamber 45 housing supply lines for the at least one heating element 6 (e.g. electrical cables for the at least one electrical heating element) and fluid transfer pipes 7 & 8 (e.g. inlet and outlet pipes) for the at least one heat exchanger 13.

All major components apart from the solid sensible heat storage material 14 and multi-layer insulation 12 are preferably made from an appropriate metal or alloy.

The proposed invention involves creating a vacuum vessel that comprises an inner and outer concentric vessel with a significant number of layers of MLI and an enclosed volume is capable of holding a vacuum of between 0.05mbar and 1mbar, a vacuum level that would be insufficient to work with conventional MLI insulation techniques.

To date vacuum insulation has only been used in a very limited manner for high temperature applications and these have predominantly focussed on using a vacuum combined with a low-cost microporous loose fill materials, such as perlite, in the evacuated space. However, perlite and other loose fill materials are unsuitable for a thermal heat store with a cycling temperature. As the inner vessel is heated it will expand and crush the soft perlite fill material. On cooling, the vessel will then contract allowing some perlite to slump down into the gap formed by the heating cycle before being re-crushed on the heating next cycle. This means that the perlite will end up packed in the lower part of the vacuum space over time and the insulation will not function properly.

There are a range of microporous insulation materials that can be supplied as shaped panels and attached to the inner or outer vessel inside the evacuated volume. The loose-fill and slumping problem is avoided, however fitting shaped panels to a cylindrical vessel is a complicated and expensive process. Furthermore, there is a risk during transportation of the microporous material dislodging.

The solid sensible heat storage material may be cast in situ while the inner vessel is being assembled. The material may be a metal rock composite (e.g. aluminium matrix with a solid thermal filler material embedded therein) as described in WO 2020/217045. The inner vessel is wrapped with MLI. The reflective layers are separated from each other by a spacer layer. The reflective layer may be aluminium and the spacer layer may be a thin glass fibre matt or paper.

The solid sensible heat storage material may be heated up to 200°C or more.

MLI for higher temperature applications can be made from thin sheets of aluminium foil (e.g. approximately 0.007mm) with a thin glass fibre paper (e.g. approximately 0.006 - 0.012mm) separating the aluminium layers and can be easily attached to the inner vessel by wrapping.

The MLI shall be wrapped tightly enough so that the spacing between the layers (defined as the distance from the reflective layer to spacer layer) will have an average spacing distance less than 0.2mm. The number of reflective layers will be greater than 50 and may be as high as 200 layers. The spacing between layers will normally vary between 1mm and 0.01mm.

The radiation energy emitted per unit time from a black body is proportional to the fourth power of the absolute temperature and can be expressed with Stefan-Boltzmann Law as:

$$q = \sigma\, T^4\, A$$

*where*

    *q = heat transfer per unit time (W)*

$\sigma$ = 5.6703 $10^{-8}$ (W/m²K⁴) - **The Stefan-Boltzmann Constant**
*T = absolute temperature in kelvins (K)*
*A = area of the emitting body (m²)*

Due to the $T^4$ term, even though the Stefan-Boltzmann Constant is a small number, when there are large temperature differences between two surfaces radiant heat transfer can be significant. Reducing the temperature difference between two surfaces by adding layers between the surfaces reduces radiant heat transfer.

Placing *n* equidistance black body spacers will reduce the radiative heat transfer by 1-1/(*n*+1). For *n*=9 spacers the radiative heat transfer will drop by 90%.

Where the spacers are reflective and not ideal black bodies the heat transfer will be further reduced by the emissivity of the surface. The radiation energy emitted per unit time is now:

$$q = \varepsilon\, \sigma\, T^4\, A$$

*where $\varepsilon$ = surface emissivity (-)*

By definition a black body has an emissivity of 1, whereas an aluminium foil might an emissivity of 0.05. This means that the black body absorbs 100% of the incident radiation, while the aluminium foil absorbs just 5%, and reflects 95% of it away. MLI makes use of highly reflective layers, separated by a thin non-conducting layer. 20 layers of reflective foil with an emissivity of 0.05 will reduce radiative heat transfer by 99.8%.

The mean free path is a measure of how far an atom/molecule can travel before it collides with another atom/molecule. As air pressure is reduced the mean free path increases as the number of atoms/molecules per unit volume, i.e. the air density, drops. As the atom/molecules can now travel further, they are able to conduct heat more easily even though they are fewer in number. The result is that gaseous thermal conduction is broadly constant until the air pressure is very low.

The distance between the inner and outer wall of a conventional MLI vacuum insulated cryogenic vessel might only be 20mm or so. When the mean free path is greater than 20mm then gaseous conduction will start dropping rapidly. At 0.0001mbar the mean free path has grown to 1000mm and the thermal conductivity has been almost eliminated. Further drops in pressure have minimal impact on the thermal conductivity, and therefore offers little value. This is why vacuum insulated vessels with MLI are delivered with vacuums in the region of 0.0001mbar. It can also be understood that at 0.01mbar with the mean free path at 10mm in a 20mm gap the gaseous conduction will be high.

Microporous insulation works by using materials that have low solid conduction and are full of very small pores or void spaces. These pores are much smaller than the mean free path, artificially bounding how far an atom/molecule can travel.

Generally, the smaller the pore size, the weaker the vacuum that can be used. For example, fumed silica has a very small pore size (0.001-0.05mm) and works with vacuums of just 1mbar, which is 10,000 x higher than the MLI vacuum. Perlite has a 20x larger pore size (0.02-0.1mm) than fumed silica so requires a better vacuum (20x lower), normally below 0.05mbar.

As has been explained above the use of additional spacing layers (above 20) is counterintuitive as it would appear to provide almost no benefit for reducing radiant heat transfer. However, if additional layers are added (e.g. $n \geq 50$) and wound tightly, with small average spacings, then this allows the reflective and spacer layers to behave like a microporous insulator by restricting the distance that air molecules can travel in a direction that is perpendicular to the vessel. In a tangential direction to the vessel molecules can travel longer distances 'between' two layers. This is different to microporous insulations which have fairly uniform three-dimensional properties. The use of a large number of layers of MLI to inhibit gaseous conduction means that the MLI is able to act as an effective insulator at vacuum levels where conventional MLI does not normally work.

The use of MLI also means that there is limited risk of the insulating material being dislodged during transport. The inner vessel can expand and contract with each thermal cycle with limited risk of the MLI dislodging or being damaged by contact with the outer vessel.

Using a much larger number of layers $n$ improves the safety in the event of a total loss of vacuum. If a small number of layers of MLI were used with a higher quality vacuum level (lower pressure) then in the event of a loss of vacuum the outside casing could reach a temperature that was dangerous to the touch or damaging to attached equipment. By using a gentler vacuum and more layers of MLI the insulation performance with no vacuum is better and this reduces the peak temperatures that the outer casing can reach.

A further benefit of being able to operate effectively with a medium vacuum (0.05mbar to 1mbar) is that this vacuum level only requires a low-cost vacuum pump. This includes rotary plunger pumps, piston pumps, scroll pumps, screw pumps, rotary vane pumps, rotary piston pumps, roots pumps and adsorption pumps.

Notably, oil-lubricated rotary vane pumps can achieve this level of vacuum. These pumps are produced in very high volumes and at low cost as they are used in the HVAC (Heating Ventilation and Air Conditioning) industry to remove refrigerant from heat pumps/air conditioning units/refrigerators. Ideally the vacuum pump is a single or two stage oil lubricated rotary vane pump.

A version of the proposed invention has the vacuum insulated thermal store supplied with a vacuum pump 27 which is permanently connected to the evacuated space via an automatic valve 22. This means that the vacuum can be 're-pulled' on demand including when installed.

With a vacuum insulated vessel that is supplied with an integral vacuum pump it is possible to re-pull the vacuum at any stage. The quality of the vacuum can be estimated from the temperature difference between the inner and outer shell. When it hits a pre-set level (i.e. the outer shell is warmer than it should be) then the vacuum pump can be engaged until it falls below this level. This also means that the required vacuum level can be maintained over a period of decades as long as the vacuum pump is functioning.

This has a number of advantages:

I. To pull the required vacuum can take days for the molecules to 'outgas' from surfaces and be removed from the vacuum space. The large number of layers of MLI means that the amount of surface to be outgassed is much higher than for a normal vessel. Having an integral vacuum pump means that this process can be carried out at the end user's premises for as long as required.

II. Heat can be used to speed up this process, but with a thermal store it requires time and energy to heat the store up and then cool it down. With an integral vacuum pump this process can be carried out over time and while the vacuum insulated thermal store is in use.

III. The vessels can be transported pre-filled with the solid storage media and, as shown in one embodiment of the invention, it may be preferable to use stabilising bolts. The use of stabilising bolts means that the vacuum must be re-pulled when installed on site.

IV. A lower level of quality control to be used during manufacture. For hard vacuums it is important that all surfaces are clean and free of oil or other substances that can outgas. Many low carbon steels contain hydrogen within the structure after manufactured that can outgas over time. The ability to use any grade of low carbon steel is advantageous from a cost and quality control perspective.

Single stage rotary vane pumps can 'theoretically' get to 0.04mbar and two stage to 0.004mbar when the pump is pulling against a blanked-off hole. The mean free path of air at 0.04mbar is 2.4mm and at 0.004mbar is 24mm. This vacuum level is more than adequate for the present application, however the connection to the evacuated space has a large impact on whether this level of vacuum can be achieved by this type of pump.

Molecular flow results in a much greater flow resistance and reduces the effectiveness of a vacuum pump. When the inlet pipe length-to-diameter ratio to the vacuum pump is less than the mean free path the flow drops into a molecular flow regime. For a vacuum of 0.004mbar if the pipe is less than 24mm internal diameter then molecular flow will become a significant factor. The length of the pipe also impacts when molecular flow occurs. Molecular flow can reduce the achievable vacuum by a factor of 10 or even 100. This means that while the theoretical vacuum that can be pulled by a single stage pump might be 0.04mbar, with a long pipe connection the practical vacuum that can be pulled rises to at least 4mbar.

There are several problems with the current design of vacuum pumps and connection hoses that connect the evacuated space to the pump. They have an inlet port that a flexible stainless-steel hose can be clamped on to. The other end of the hose can be clamped on to a valve that connects to the evacuated space. The pump is normally switched on and when there is a reasonable vacuum within the flexible pipe the valve can be opened.

Flexible steel pipes are susceptible to damage and are also expensive at large diameters. As are vacuum valves at large diameters. Consequently, the flexible connecting pipes when pulling a vacuum are normally quite small (<30mm). The inlet ports to small vacuum pumps have small internal diameters (8-20mm) to accommodate small diameter flexible pipes.

At a pressure of 0.2mbar, a 40mm internal diameter 1m long pipe allows 100 times more flow than an equivalent 12mm internal diameter pipe. In practice, low-cost vacuum pumps fail to achieve the desired performance because of flow constrictions around inherent valves and piping.

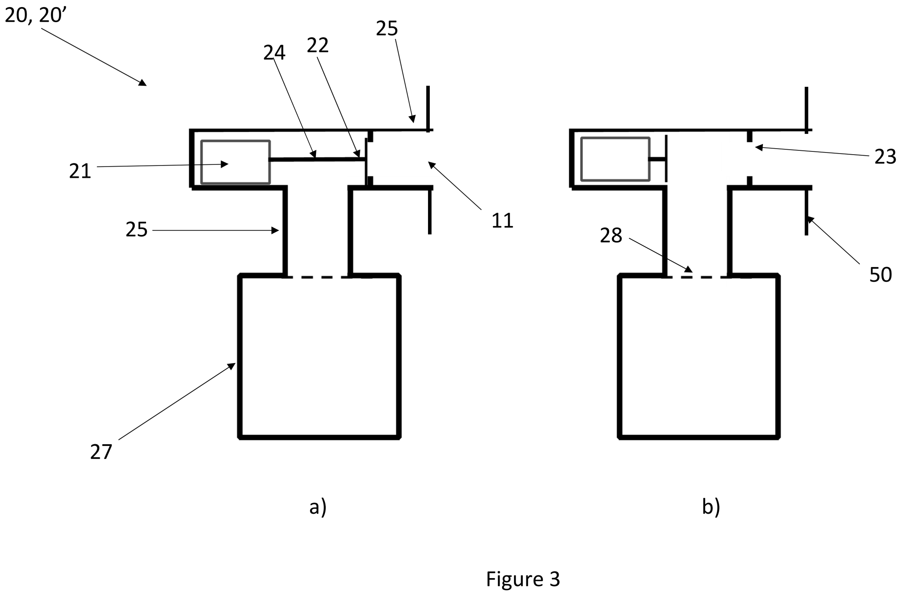

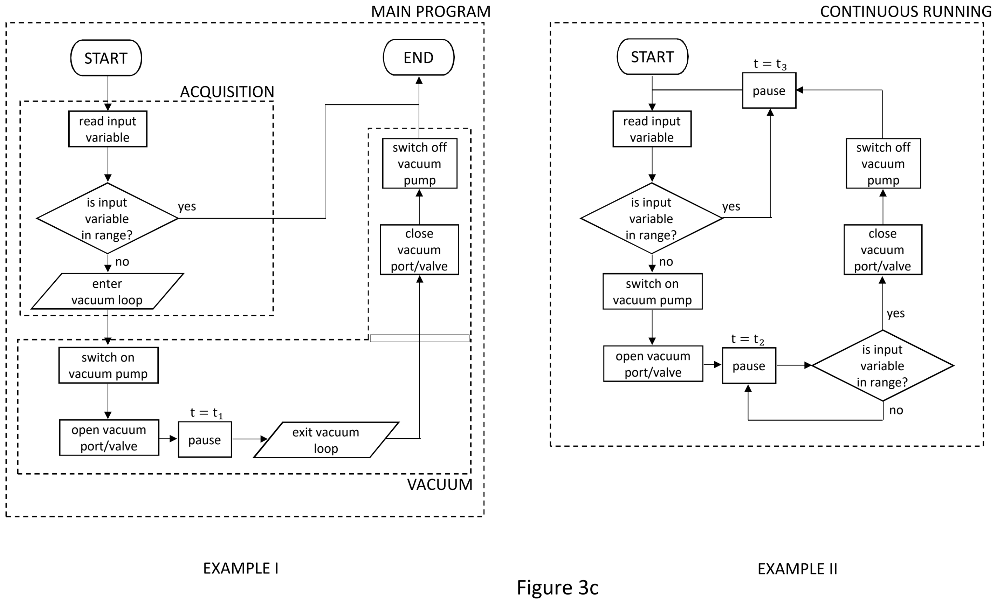

With reference to Figure 3, in one embodiment it is a further feature of the present invention that the integral vacuum pump 27 is connectable to the vacuum space 11 via a large diameter pipe 25, preferably a solid (non-flexible) pipe, where the pump 27 and vacuum space 11 are separated by a large diameter valve 22 that can preferably be operated automatically. The vacuum pump 27 may be further modified so that the inlet port 28 to the vacuum pump 27 is widened to a similar area to that of the large diameter pipe 25. And in a further embodiment, the pipe 25 and attachment to the vacuum pump 27 may fully support the pump 27 so that the weight is supported by the pipe 25. The pipe internal diameter is at least 40mm and preferably over 50mm. The pipe length is less than 1.0m and preferably less than 0.5m to the vacuum pump modified inlet.

Using a solid pipe is more reliable than a flexible pipe and can be welded on to the vessel during manufacture. With a solid pipe there is the risk of tolerance stack errors in how to connect to the vacuum pump. These are eliminated by attaching the vacuum pump to the solid pipe so that it is fully supported by the solid pipe. The modification of the inlet port to the vacuum pump improves performance and provides an extra option for providing the structural attachment point to the solid pipe.

The inner and outer vessels 40, 50 are only connected at the neck connector 60. If the inner vessel 40 with the solid thermal storage media is not constrained during transport, then it will impose high stresses on the neck connector 60 making it susceptible to damage during transportation. Forces as high as 3g can be experienced during normal road transport. If the neck connector 60 is designed to take these stresses then the neck connector will need more material to resist these stresses than is required for normal operation. The neck connector 60 will normally be steel and if thick sections are used then thermal conductivity in this region will increase leading to higher thermal losses, which is undesirable.

Normal practice for cryogenic vacuum vessels is to have a cylindrical stub welded on the inner shell, at the opposite end to the neck, located within a second cylindrical member welded to the outer shell. There is no direct contact therefore when the vessel is at rest between the stub and the second cylinder. However, when there is relative movement between the inner and outer shells, the inner stub contacts the second cylindrical member and limits movement and hence stresses at the neck. The downside of the stub approach is that it creates a heat leakage path that can bypass the insulation. Furthermore, there is a requirement to assemble the vessel with the inner vessel aligned with the center of gravity. The solid thermal storage will dominate the center of gravity and it may mean that when the inner vessel is correctly orientated (due to center of gravity) it is not geometrically aligned with the outer vessel. If the vessel is not geometrically aligned then it is very difficult to use the stub approach as the stub and cylinder must normally be welded on prior to assembly. The result is that the conventional approach has higher thermal losses and is impractical to install when used in the context of a solid thermal storage mass within the inner vessel.

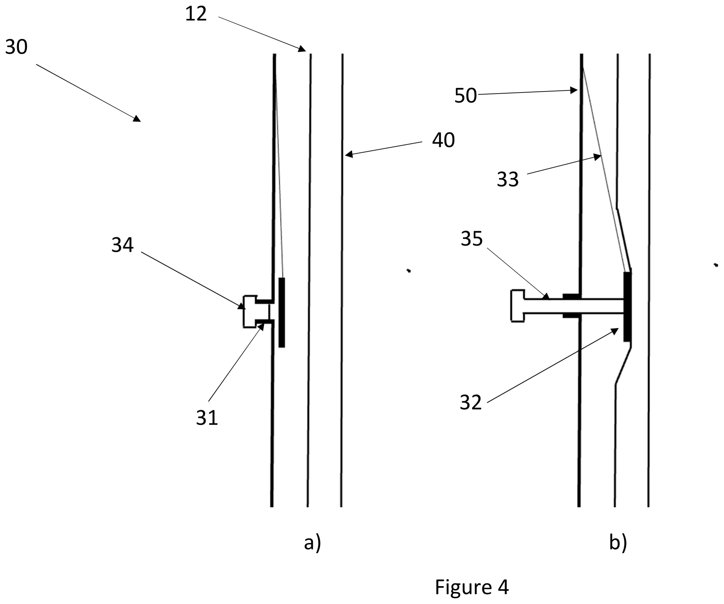

With reference to Figure 4, in one embodiment the present invention involves the addition of two or more (e.g. three or more) sockets (e.g. threaded sockets) 31 in the outer vessel 50. Through these sockets 31 structural transport bolts (e.g. threaded bolts) 35 can be inserted and secured in place that ensure that the inner vessel 40 is constrained. The use of individual transport bolts 35 means that any misalignment between inner and outer vessel 40, 50 can be accommodated.

This constraint means that high loads at the neck connector 60 are significantly reduced. In a preferred embodiment there are four equally spaced sockets 31/transport bolts 35 so that the thermal store 10 can be transported with an orientation such that two of the transport bolts 35 are aligned with the orientation of the transport vehicle. In this way if, for example, being transported by a lorry then the braking and accelerating loads will be direct down the axis of one of the pairs of securing members. When located on site the transport bolts can be removed and the sockets 31 sealed by threaded sealing bolts 34. As the thermal store 10 has an integral vacuum pump 27 the loss of vacuum during transport is not an issue.

Spreader plates or pads 32 may be provided on the inside of the outer vessel 50 to protect MLI layers 12 attached to the inner vessel. These spreader plates 32 can be used to spread the load and ensure that no damage occurs to the MLI layers 12 that is wrapped around the inner vessel 40. The spreader plates 32 do not penetrate or damage the MLI and hence there are no additional thermal bridges.

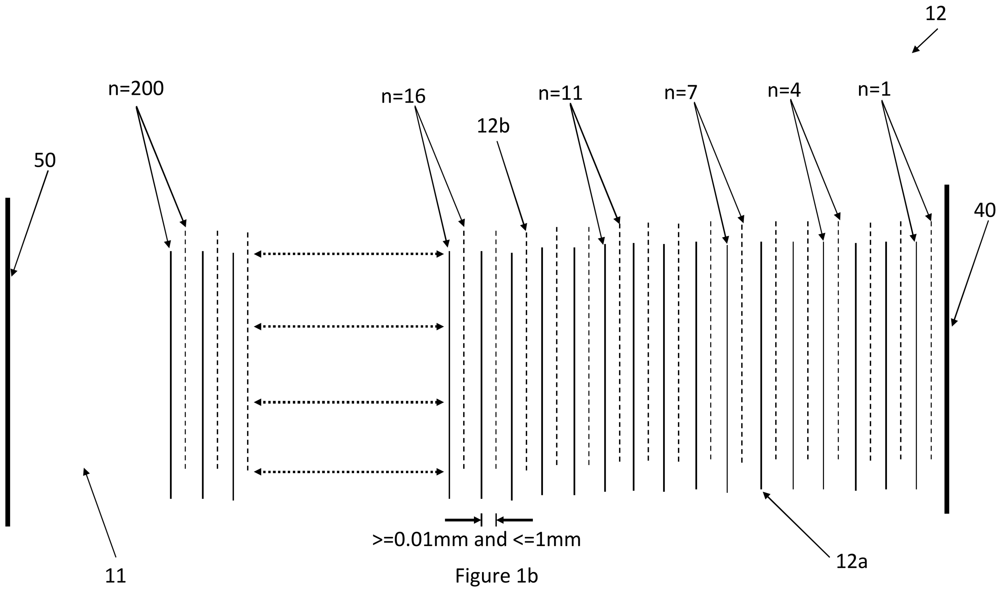

Figure 1b shows a section of the *n* layers of multi-layer insulation (MLI) 12 positioned in vacuum space 11 between outer vessel 50 and inner vessel 40. Each of the *n* layers of multi-layer insulation 12 comprises a reflective layer 12a and a spacer layer 12b, where the layers 12 are wrapped around the outer wall of the inner vessel 40 (e.g. substantially covering the outer surface of the inner vessel). The thermal insulation comprises 200 layers of multilayer insulation and each layer of multilayer insulation comprises a reflective layer and a spacer layer. Between the n=200 layer and the outer vessel 50 there is preferably a gap. The wrapping method may be circumferential, longitudinal, or any combination of these (e.g. helical). The layers 12 may be in the form of tapes or sheets. Layers 12 can overlap previous layers but generally the layers should be built up evenly over the whole surface of the inner vessel 40. The spacer layer 12b is preferably slightly wider than the reflective layer 12a. Multiple layers 12 can be added at the same time.

In general, the thermal insulation should comprise at least 10 layers of multilayer insulation per 100 degrees Celsius of temperature difference across the vacuum region. The spacing between the reflective layer and spacer layer of each layer of multilayer insulation is between 1mm and 0.01mm. The reflective layer 12a is a sheet of reflective metal (e.g. aluminium sheet) or, in lower temperature applications, a sheet of metallised plastic or Mylar®. The spacer layer 12b may be a thin glass fibre layer or thin ceramic fibre (e.g. ceramic fibre paper) layer, or in lower temperature applications, a sheet of paper.

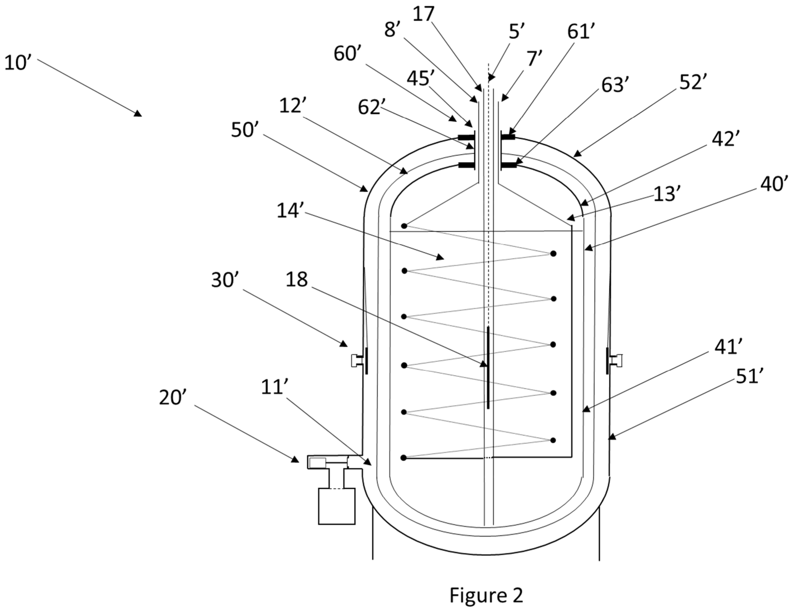

Figure 2 shows an alternative vacuum insulated thermal store 10' based on thermal store 10 (features in common are labelled accordingly) where electric heating element 6 is replaced with a radiant heating element 18 mounted within a heat transfer pipe 17. Radiant heating element 18 is surrounded by - but not in close physical contact with - heat transfer pipe 17, which can be made from a metal alloy or high temperature ceramic such as quartz. Quartz has the advantage that it can be operated at higher temperatures than most metal alloys (up to 950C) and is broadly transparent to infra-red so it will allow the radiant heating energy to pass directly through the quartz to the sensible heat storage material 14'. The radiant heating element 18 is supplied with power by electric heating wire 5' that is connected to a controller (not shown). The advantage of this approach is that the radiant heating element 18 can be easily withdrawn from heat transfer pipe 17 and replaced as opposed to the case in Figure 1a where the electrical heating element 6 is embedded in the sensible storage material 14.

Figure 3a and 3b show integral vacuum systems 20, 20' comprising a valve actuator 21 connected to a vacuum valve 22 by a valve rod 24. Vacuum valve 22 seats on valve seat 23 when closed as shown in Figure 3a. Pipe 25 connects vacuum tight space 11 to vacuum pump 27 via modified inlet port 28. Pipe 25 is securely connected to outer vessel 50 and also supports vacuum pump 27. Figure 3b shows vacuum valve 22 open with the vacuum valve 22 not obstructing pipe 25

Figure 3c shows some examples of control logic for the integral vacuum system 20:

> The vacuum pump 27 is run in an intermittent state, operated only when required to, in order to minimise heat loss from the core to the environment
> The state of the vacuum pump 27 is either ON or OFF
> The vacuum pump 27 will normally always be run for a pre-set period before vacuum valve 22 is opened by valve actuator 21. In this way a vacuum is established either side of the vacuum valve 22 and air is not let into the vacuum tight space 11 when it opens. Furthermore, the forces on the vacuum valve 22 are very low reducing the power requirement of valve actuator 21.

Optionally, the vacuum pump 27 can be run in two modes (ref: main program and continuous running)

- When operated in 'main program', the vacuum pump 27 is switched on at set time intervals for a pre-determined duration
- The vacuum pump 27 will only switch on if the input variable is out of range. Ref: this is observed by an acquisition loop
- The input variable could be surface T or vacuum level for example (e.g. if [T > 30DegC or p > 1.0mBarG]: switch on)
- The duration the pump is switch on is set (by t1). Ref: this is controlled by the vacuum loop
- The time between the END of one call to the program and the beginning of the next (START) can be set to any value.

> ○ When operated in 'continuous running', the vacuum pump 27 is initiated once at start-up
> ○ The input variable is constantly sampled at a rate determined by 1/t3
> ○ The vacuum pump 27 is switch on if the input variable is out of range
> ○ The vacuum pump 27 will only switch off if the input variable is within range
> ○ Once the vacuum pump 27 is switched on, t2 seconds elapse between input variable sampling. For ease t3 = t2 typically.

Figure 4 shows transportation interface system 30 comprising socket 31 securely attached to outer vessel 50. In figure 4b the transport bolt 35 is screwed into socket 31 and presses on spreader plate 32 compressing multi-layer insulation 12 against inner vessel 40 and constraining the movement of inner vessel 40. Figure 4a shows the system in the non-transportation mode with the transport bolt 35 removed and replaced with sealing bolt 34.

Spreader plate 32 is attached to strap 33 which in turn is attached to outer vessel 50. Spreader Plate 32 is free to move in a horizontal direction but constrained by strap 33 so that spreader plate 32 remains in position over socket 31.

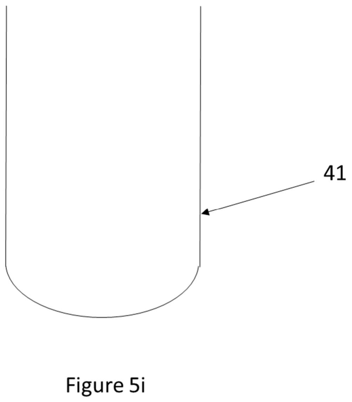

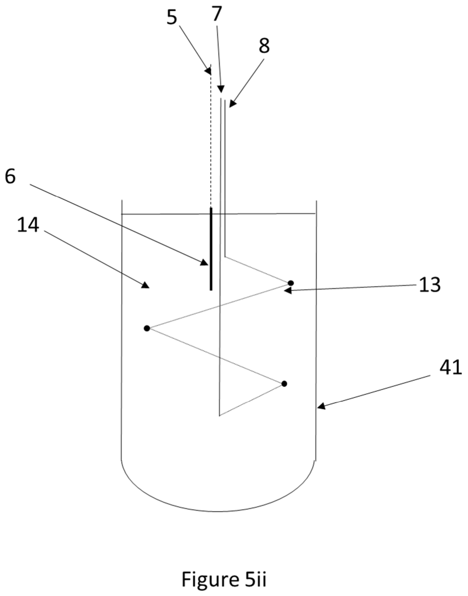

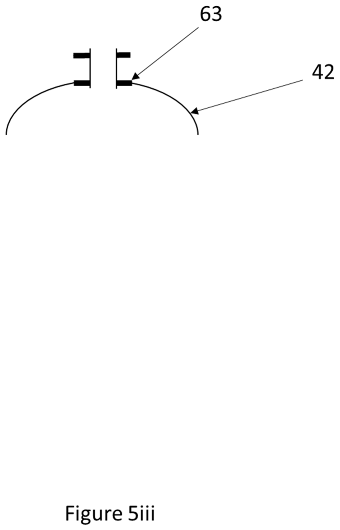

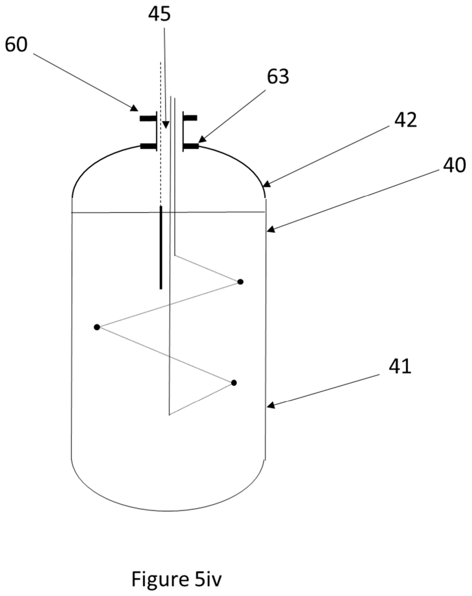

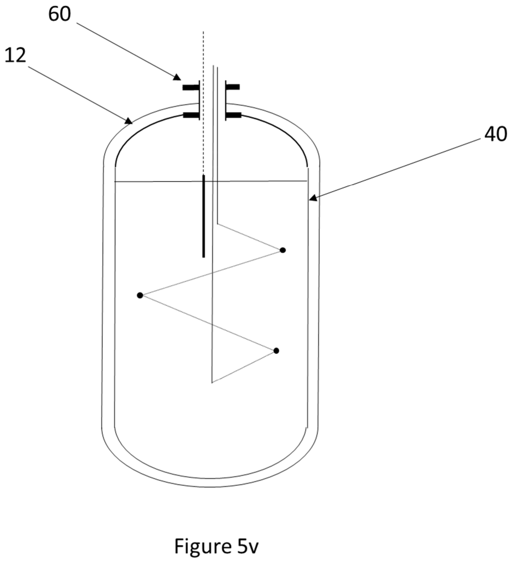

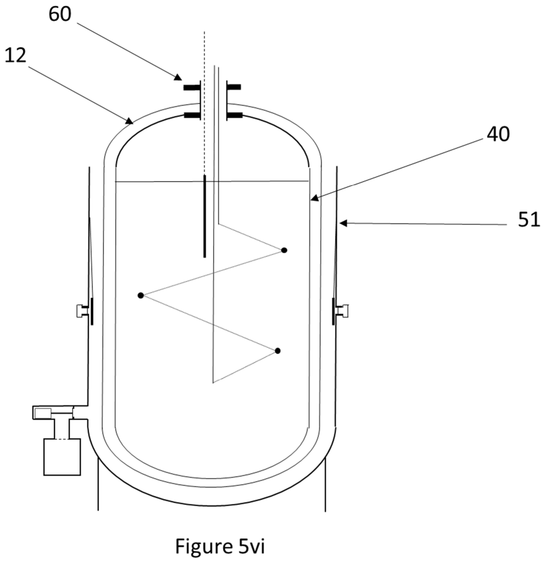

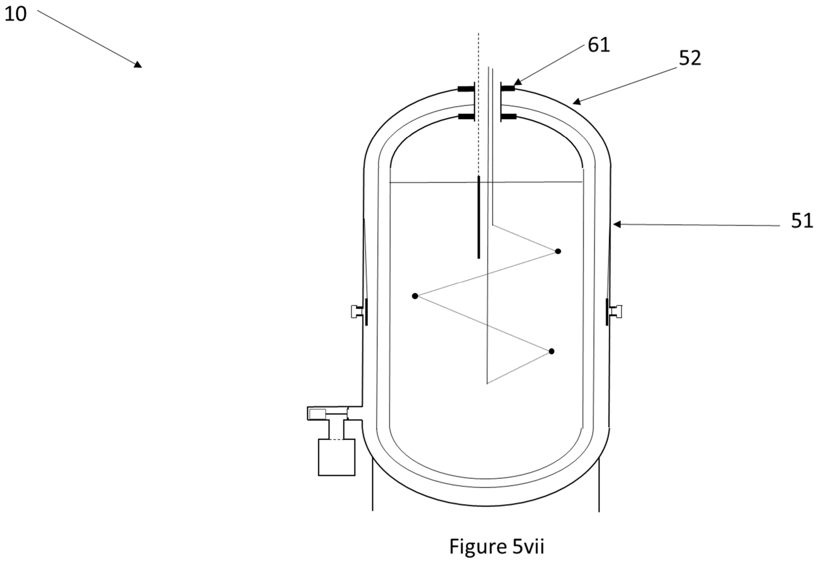

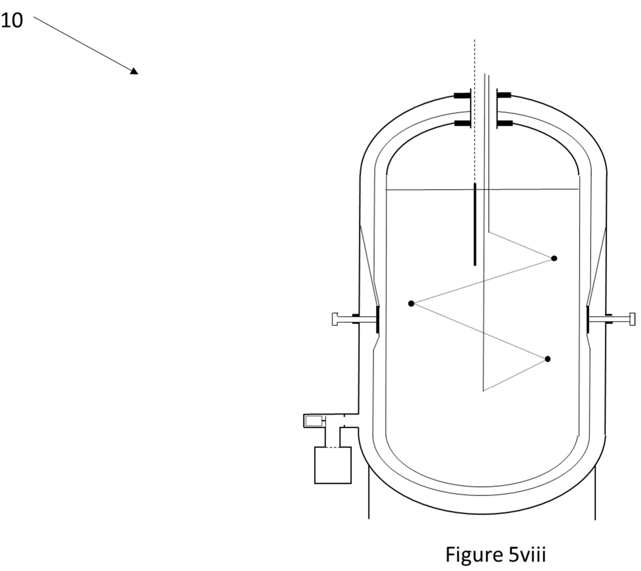

Figure 5i-vii shows the assembly process of the vacuum insulated store 10 and the Figure 5viii shows the vacuum insulated store 10 configured for transportation.

Figure 5i shows the lower inner vessel part 41 of the inner vessel 40.

Figure 5ii shows the same lower inner vessel part 41 with solid sensible heat storage material 14, electric heating element 6 and electric wire 5 and heat exchanger 13 installed.

Figure 5iii shows the upper inner vessel part 42 attached to the lower neck plate 63.

Figure 5iv shows the assembled inner vessel 40 with the lower inner vessel part 41 attached to the upper inner vessel part 42 and upper inner vessel part 42 attached to the lower neck plate 63 of the neck connector 60.

Figure 5v shows the inner vessel 40 wrapped in *n* layers of multi-layer insulation 12. The inner vessel 40 can be supported by the neck connector 60 during the wrapping process.

Figure 5vi shows the inner vessel 40 with multi-layer insulation 12 and neck connector 60 lowered within lower outer vessel part 51.

Figure 5vii shows the completed vessel with upper outer vessel part 52 attached to lower outer vessel part 51 and upper neck plate 61.

Figure 5viii shows the same vessel but with the transport bolts 35 in place and ready to be transported.

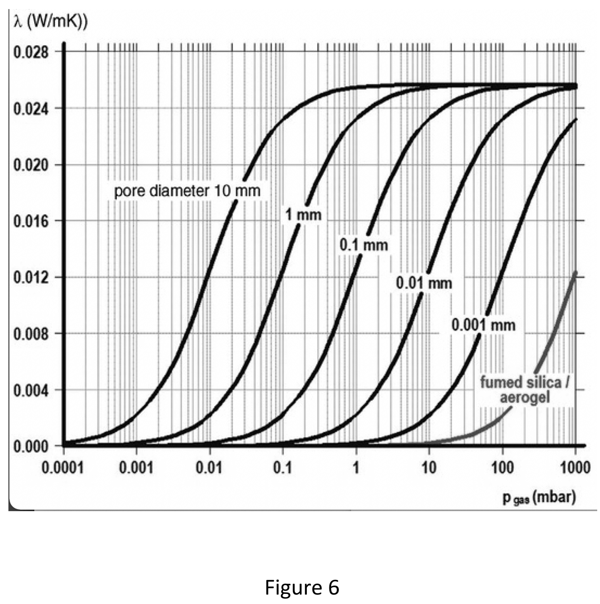

Figure 6 shows the link between pore sizes below 10mm and thermal conductivity at different vacuum pressures.

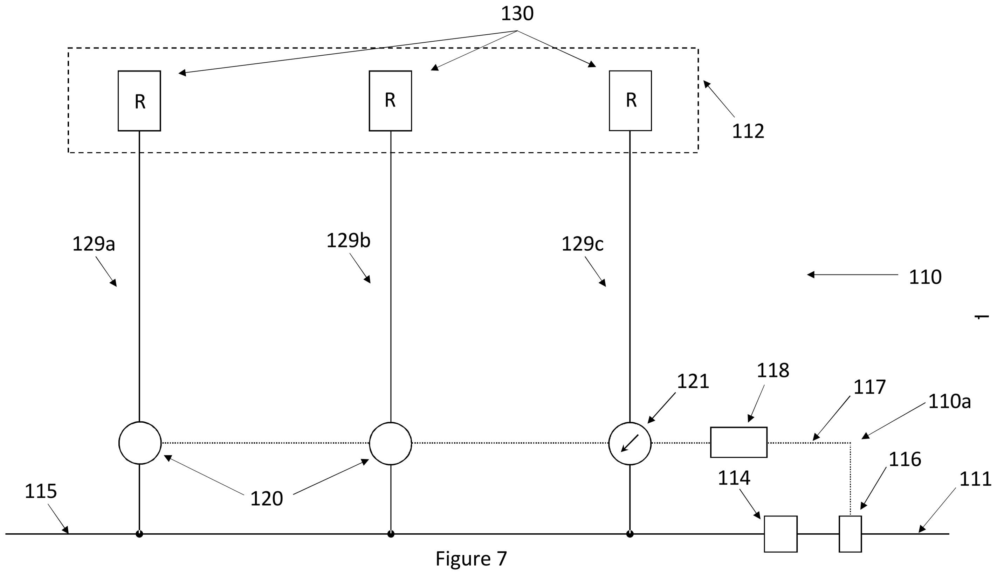

Figure 7 shows an electrical installation 110 for a building having a home electricity supply 115, the electrical installation 110 comprising an electrical supply 111 (e.g. network grid supply) associated with a network fuse 114, a heat storage system 112 and a control circuit 110a. Network fuse 114 is a conventional fuse owned by the network that limits how much current can be drawn from electrical supply 111.

Control circuit 110a comprises a current sensor 116 connected, via sensor wiring 117, to an overall controller 118, a pair of on/off current controllers 120 and a variable current controller 121. The overall controller 118 controls the variable current controller 121 as well as on/off current controller 120, via a control wiring 117, to ensure that the current drawn through the network fuse 114 remains within pre-set limits.

As illustrated, electrical supply 111 is connected, via control circuit 110a, to three electrical heating devices 130 (each provided on a separate heating circuit 129a-c) operative as electrical resistors to provide heat to heat storage system 112 which in turns supplies heat to a hot water/central heating system (not shown) of the building. Two of the electrical heating devices 130 (provided on heating circuits 129a and 129b) are turned on or off via on/off current controllers 120 and the remaining electrical heating device 130 (provided on heating circuit 129c) is controlled via a variable current controller 121.

The heat storage system 112 provides heat to a home heating circuit that could be a hot water heating circuit. The heat storage system might have a pre-set target flow temperature for the hot water heating circuit, for example 65°C or 70°C, as in the case of a gas or oil boiler.

The benefit of using a variable current controller 121 and an on/off current controller 120 is that the current being drawn through network fuse 114 can be maximised, across a broad current range. For example, on/off current controller 120 could step-up the current demand in increments of 32A whilst variable current controller 121 could vary the current from 0-32A. For a home with a 100A supply, the variable current controller 121 will clearly provide more flexibility to maximise charging capability.

The variable controller is not essential as you can get good granularity with multiple circuits, i.e. 8 x 16A on/off gives steps of 16A or 2 x 8A and 7x16A gives same result with 8A steps. Examples of different current ratings and steps are shown below:

> Figure 7 one variable 32A and two on/off 32A circuits - gives 0 - 96A

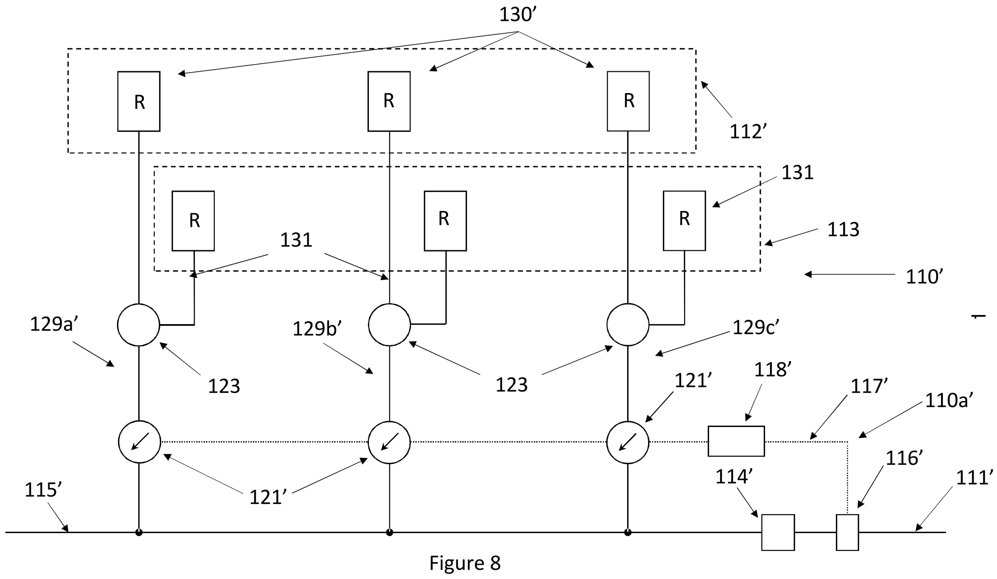

> Figure 8 one variable 16A, one on/off 16A circuits, one on/off 32A - gives 0 - 64A

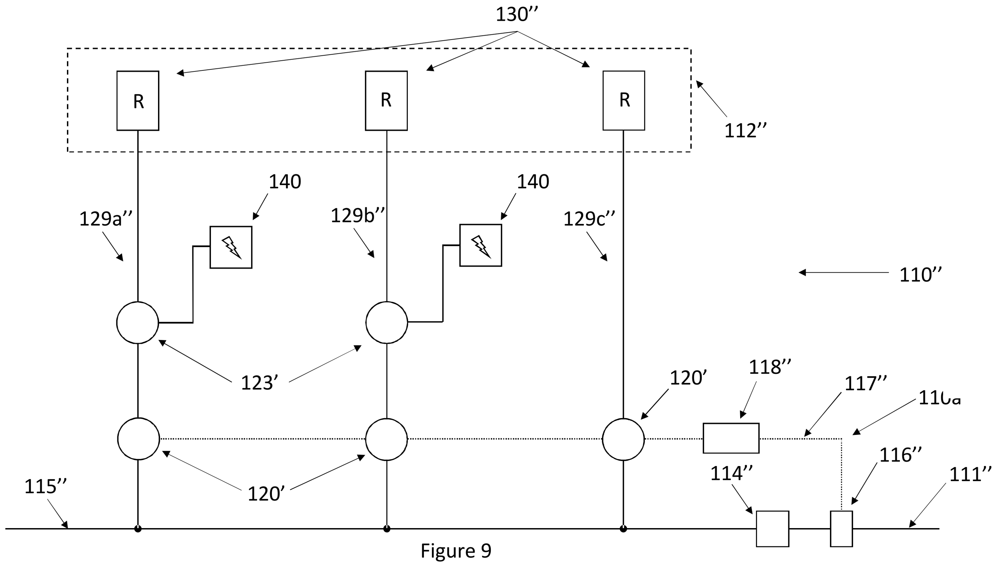

> Figure 9 one on/off 16A and two on/off 32A - gives 0 - 80A in 16A steps

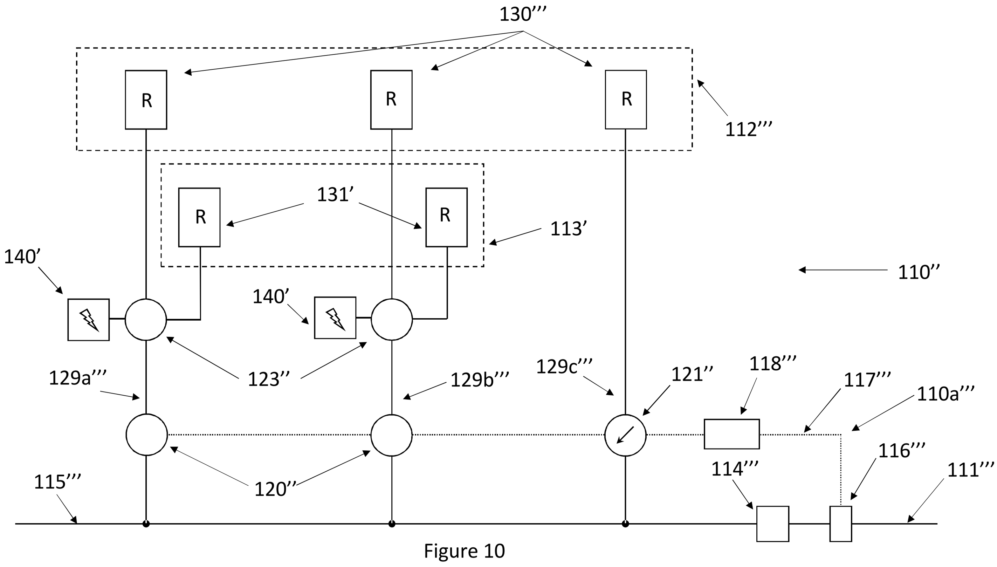

> Figure 10 one variable 32A and two on/off 32A circuits - gives 0 - 96A

An electricity distribution network (the grid) will specify allowable upper and lower voltage limits for supplies connecting homes to the network. For the network operator to remain within its licence terms it must ensure this supply remains within the specified range and this voltage range is typically broad. In the UK it must be between 216V to 253V with a nominal supply voltage of 230V.

This broad voltage range creates a problem for thermal stores heated by electric resistance heaters. For an ohmic resistance, the power dissipated is proportional to the voltage across the electrical heating device. If the system is designed for maximum power at 253V, then when the voltage supplied drops to 216V, the system will draw only 73% of the designed power. Similarly, if the system is designed for maximum power at 216V then at 253V it will draw 137% of the design power.

One feature of the present invention is to design electrical installation 110 with fixed ohm electrical heating devices 130 where in aggregate if all of the electrical heating devices 130 are used at the maximum allowable voltage then they will exceed the main fuse rating for network fuse 114. It is not normal to design a piece of equipment where in normal use it can exceed the safety protection and limits of the main electrical supply fuse. The system must actively control the current to the elements to keep within the allowable limit. The advantage of this approach is that even when the voltage is at the minimum allowable the unit can still draw the same amount of current, for example, 90A.

In one embodiment, the combined current drawing capacity of the electrical heating devices 130 is at least 120% of the home rated supply when operated with all electrical heating devices are at the upper grid voltage limit i.e. 20% above the maximum current that the home can draw. In this way, the effect of a drop in voltage at the supply on performance of the at least one heating device may be substantially minimised.

Furthermore, to maximise usage of the existing infrastructure, it is desirable to be able to charge the system at close to 100% of the home fuse rating, preferably around 90% of the home fuse rating. In the UK this means that the system would charge at 90A if the home fuse was rated at 100A. Hence, if the system is designed for the upper voltage (253V), it will charge too slowly when voltage is low. If the system is designed for the lower voltage (216V), the system will draw too much current and the home fuse will blow when the voltage is high.

In addition most home electrical circuits will have a variety of other devices connected that may be in use at any time. As has been explained it is desirable to maximise the usage of any electrical connection when heating heat storage system 112. This means that a control circuit 110a must operative to ensure the total current through the network fuse (i.e. total current drawn by heating circuits 129a-c and home electricity supply 115) is kept strictly within the fuse limit.

Current sensor can take the form of a current clamp 116 and where other loads are switched on or off the control circuit 110a can vary the combined current drawn by the heating circuits 129a-c up or down accordingly.

In practice, the thermal power output of a heat storage system 112 can vary with temperature. The hotter the thermal store the greater the temperature difference and the greater the amount of power that can extracted. Conversely, as the thermal storage media temperature drops the maximum power output will drop until it falls below a minimum required threshold. Having a thermal storage system that has variable thermal power output is undesirable for the consumer. One solution is to restrict the unit from operating below a certain minimum temperature, i.e. treating the thermal storage media as 'empty' when the power output falls below a certain minimum output even when there is usable heat stored. In cold weather, if there is insufficient stored heat, this may mean that the homeowner must switch over to direct electrical heating, which is undesirable as the unit still has stored useful thermal energy. A solution could be to switch on the electrical charging circuit to the heat storage mass and to continue operating. If the charging rate is the same as the discharging rate, then this is no different to direct electric heating of the home. The thermal storage mass will not change temperature and the electrical input will equal the heat output. However, if the electrical charging rate is less than the discharging rate then the temperature of the heat storage mass will slowly drop along with the power output from the unit as this is related to the temperature of the storage mass. As has been said a falling thermal power output is undesirable.

A feature of most home heating is that high power output (e.g. 30kW) is only required at start-up to rapidly heat the water in the home heating circuit. As the temperature of the home rises, the power output required typically drops to a lower level (e.g. 5-10kW). This means that it may be possible to supply the home with the correct power output from the thermal storage mass at a lower temperature. The homeowner can use the additional stored energy in the unit which would otherwise be treated as 'empty'. However, when operating in this temperature range, and demand for high power output cannot be met.

Figure 8 shows an electrical installation 110' based on electrical installation 110 (features in common are labelled accordingly) in which each of the three heating circuits 129a-c' further includes an additional electrical heating device 131 and in which all three heating circuits are each controlled via variable current controllers 121'.

As illustrated, a further switch 123 is added between the variable current controller 121' and the electrical heating device 130' of each heating circuit. Further switch 123 can divert power between the electrical heating devices 130' and the additional electrical heating devices 131. The three additional electrical heating devices 131 are part of a home heating circuit 113 and operate as resistors that heat the water in this circuit directly.

The overall controller 118' controls the variable current controllers 121' and switches 123, via control wiring 117', to ensure that the current drawn through the network fuse 114 remains within pre-set limits. The overall controller 118' is also connected to the heating circuit 113, via control wiring 117', and controls the supply of electrical power to the additional electrical heating devices 131 to ensure that the target thermal output is provided to the home, so long as the current drawn does not exceed the network fuse 114' limit.

As an example a control routine could be implemented to measure the temperature of the heat storage system 112'. When the heat storage temperature is below a critical value and the system is providing heat to the home heating system, the control circuit 110a' switches to a boost mode. In boost mode the flow to the home heating circuit is monitored and if the flow temperature drops below the target output temperature, the control circuit switches power using switch 123 to the additional electrical heating devices 131 (that are, for example, positioned directly in the home hot water circuit). As all electrical heating devices in 110' have a variable power supply, the controller could increase the power dissipated by the additional electrical heating devices 123 until the target output temperature for the home heating circuit is reached or until current sensor 116' registers that the entire home system has reached the pre-set current limit. For example, if the network fuse 114' is rated to 100A then a pre-set limit of 90A could be set. If the home then demands an additional 20A, as an occupant switches on another electrical device(s) in the home say, then the maximum current that could be drawn by the electrical charging circuit 110' is limited to 70A, and the current drawn by electrical heating devices 131 will be curtailed. Control circuit 110a' allows the heat storage system 112' to continue providing heating energy to a hot water/central heating system of the building while being supplemented by direct electrical heating.

In an alternative embodiment the control circuit 110a' could be set to provide supplementary power via additional electrical heating devices 131 whenever the system is outputting heat and where the flow temperature to the home heating system (e.g. hot water/central heating system of the building) falls below a target flow temperature. This alternative embodiment ensures that the unit can provide higher thermal power outputs at startup whilst also continuing to supplement the power output, even as the temperature of the heat storage falls. The control circuit 110a' could also be set to only supply supplementary power if a pre-set signal was received, for example linked to the price of electricity i.e. supplementary power would only be supplied if the price of electricity was below a specified level.

In this way, a heat storage system is provided in which at least one of the heating circuits can be switched from charging the thermal storage system to directly heating the water circuit via additional electrical elements in the water heating circuit. Preferably direct electrical power is only added to the water circuit as required to achieve a target output temperature for the system. This means that if the thermal storage system can provide sufficient power to the home, such as when lower levels of power are required when a house is at the target temperature, then no electrical energy needs to be added. However, if full power is required in this situation, then it can also be met by supplementing the direct power output from the thermal storage media.

This has the benefit of allowing the homeowner to access the additional energy stored in the unit, and simultaneously only having to add the minimum amount of direct electrical heating. For example, a heat storage unit with a 20kW electrical supply and a 30kW thermal output to the home heating system could be operated down to a level where the direct thermal output from the thermal storage media was only 10kW, while still having the ability to provide 30kW of thermal energy as required.

As discussed, in a further embodiment the additional electrical elements can be used at start-up to provide extra power directly to the water to help rapidly raise the temperature of the water in the circuit so that heat provision to the home is more immediate. Furthermore, there may be a requirement to keep part of the heating circuit at temperature, even when no heat is required by the home, and it may be easier for the same additional heating elements to be used to provide this low level of heat rather than using the thermal storage mass to provide this heat.

Within the home the largest energy requirements are heating, followed by hot water and charging electric vehicles (EV). Most other individual loads within the home have small energy requirements in comparison although they are able to draw large amounts of power for short durations. For example, a kettle switched on at the same time as the oven might use 10kW of a 20kW supply. In the future it seems likely that homes will have more than one electric vehicle (EV) so management of electrical loads is important. When installing EV chargers there is significant work that needs to be undertaken to provide the right powered connection to the EV charger. A heat storage unit located outside the home has all the necessary wiring and controls to provide power to one or more EV chargers.

Figure 9 shows an electrical charging circuit 110" based on electrical installation 110 (features in common are labelled accordingly) in which variable current controller 121 is replaced by a further on/off current controller 120' (thereby relying upon the timing of switching to control current supply to heating circuit 129c") and in which a further two switches 123' are added to the first and second heating circuits 129a", 129b" between two of the automated on/off current controller 120' and the electrical heating devices 130". Further switches 123' can divert power between the electrical heating devices 130" and an electric vehicle charger 140. The two electric vehicle chargers 140 are each capable of charging an individual car.

The overall controller 118" controls the on/off current controller 120' and switches 123' to ensure that the current drawn through the network fuse 114" remains within a preset limit. The overall controller 118" can switch power to the electric vehicle chargers 140 or the electrical heating devices 130" in the heat store.

As an example a control routine could be implemented where charging was set to occur during a preset daily periods, say 0000 to 0600. The overall controller 118" would register that there were electric vehicles connected to each of the electric vehicle chargers 140 as well as the state of charge of each car. The overall controller 118" would also register the amount of energy stored within the heat storage system 112" and could potentially use a method based upon historic data to predict the home heating load, based upon external temperatures as well as other conditions. The overall controller 118" may also implement several control strategies. It could be set to prioritise electric vehicles charging over home heating, to ensure that both systems are fully charged by the end of any given period with any remaining capacity delivered to the heat storage system 112" via electrical heating devices 130". The overall controller 118" monitors the current sensor 116" to ensure that the current drawn through network fuse 114" remains within pre-set limits. The overall controller 118" could prioritise electric vehicle charging over the heat storage system 112" for any number of reasons, for example if desirable by the operator. For example if only one of the electric vehicle chargers 140 could operate to stay within the pre-set limit through network fuse 114" (due to additional electrical demand in the home), then overall controller 118" would prioritise the charging of one electric vehicle. Once this electric vehicle required less charging than the second electric vehicle, the overall controller 118" could alternate charging between the two electric vehicles in any manner until they are both fully charged. Only when both electric vehicles are fully charged would the overall controller 118" switch on one of the electrical heating devices 130".

An alternative charging strategy could involve charging an electric vehicle as soon as it was connected to electric vehicle charger 140, while only supplying power to thermal storage system 112" between pre-set daily periods, for example 0000 to 0600. In another charging strategy, a pre-set signal could be received by overall controller 118", linked to the price of electricity i.e. power would only be supplied if the price of electricity was below a specified level.

Figure 10 shows an electrical charging circuit 110′′′ based on electrical installation 110" (features in common are labelled accordingly) in which the on/off current controller 120' associated with the third heating circuit 129c′′′ is replaced by a variable current controller 121′′′ and the first and second heating circuits 129a′′′, 129b′′′ are connected, via switches 123", additional electrical heating devices 131' operative in the same manner as additional electrical heating devices 131 of the system of Figure 8..

Switches 123" can divert power between the electrical heating device 130′′′ and either the electric vehicle charger 140' or additional electrical heating device 131'. The two electric vehicle chargers 140' can each charge an individual electric vehicle. The two additional electrical heating devices 131' are part of a home heating circuit 113'.

A charging strategy could involve charging an electric vehicle as soon as it was plugged into car charger 140', while only supplying power to thermal storage system 112′′′ at set daily periods, for example 0000 to 0600, where direct 'boost' heating of the home hot water circuit, via additional electrical heating devices 131', takes priority over the electric vehicle chargers. In this case where the home hot water circuit requires additional heat, the controller 118′′′ would switch charging from the electric vehicle with the lowest charging requirement to an additional electrical heating device 131'. If the home hot water flow temperature remains below the target temperature, the overall controller 118′′′ stops charging the second electric vehicle 140' charger to supply power to both additional electrical heating devices 131'.

In this way, a heat storage system is provided in which at least one of the heating circuits can be switched from charging the thermal storage system to charging an EV.

As an example, a heat storage system might have one variable 16A charging supply, one on/off 16A circuit and 3 on/off 32A circuits. The same unit could also supply 3 x 32A car chargers and 1 x 16A car charger using the on/off circuits.

Control circuit 110a can provide power to the various EV chargers whilst ensuring that they do not exceed the home supply rating i.e. turning them on and off as required using the same logic as for the electric heating elements. This has the added benefit that the homeowner or network operator can decide when the units are to be charged and the control unit switches between them.

Furthermore, if the unit can communicate with the EVs that are plugged into the controller then the system can optimise charging around both the thermal storage as well as EV requirements.

For example, a home with a 100kWh thermal store and 2 x 50kWh EVs plugged in will need anywhere between 0 and 200kWh of energy depending upon the state of charge of the various devices. By having multiple charging points multiple vehicles can be left plugged in simultaneously, even when some are fully charged, allowing the provision of vehicle-to-grid or vehicle-to-home bi-directional power. A further benefit of multiple charge points is the ability to offer charging to visitors even when the homeowners EVs are plugged in.

Lastly a combined controller that can switch power between an electric heating element and an electric vehicle charging port is also highly desirable as this means that a single control unit can safely manage the interaction of the two largest potential electrical loads in the house - heating and electric vehicle charging.

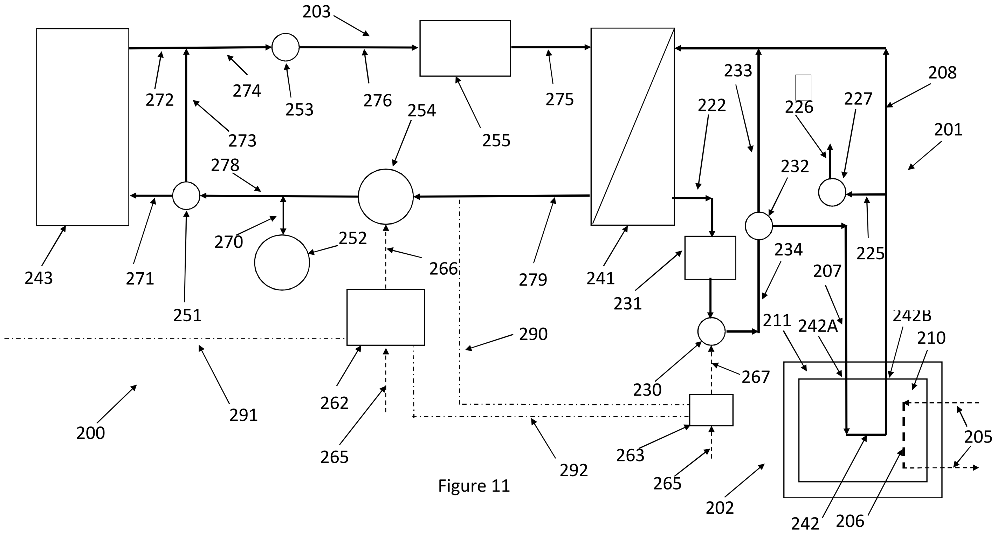

Figure 11 shows an energy storage system 200 comprising a primary circuit (steam circuit) 201 comprising a first heat transfer fluid (e.g. pure water), a thermal energy store 202, an evaporator heat exchanger 242, a condenser heat exchanger 241, secondary circuit (non-steam circuit) 203 comprising a second heat transfer fluid (e.g. water with antifreeze) and a heating system 243 (e.g. home heating circuit with radiators).

Thermal energy store 202 comprises thermal media 210 forming a thermal storage core surrounded by insulating material 211, containing one or more electrical heating elements 206 supplied by electrical cables 205 and enclosing evaporator heat exchanger 242 which is in close or direct contact with the blocks 210 and is connected to a high-pressure water pipe 207 and a steam pipe 208. The system also includes a low pressure water pipe 222 supplied from condenser heat exchanger 241, a reservoir 231, a pressure raising pump 230 and a control wire 290. Pressure raising pump 230 is supplied with electricity via electrical cable 267 from variable speed drive 263. Pressure raising pump 230 is connected to transfer pipe 234 and via desuperheater valve 232 both desuperheater pipe 233 and high-pressure water pipe 207.

Thermal media 210 may be a solid sensible heat material (e.g. aluminium matrix with a solid thermal filler material embedded therein). In operation the thermal media 210 is heated to temperatures above 200°C by electrical elements 206. Maximum thermal media temperatures are likely to be below 700°C.

In operation pressure raising pump 230 is fed with water from reservoir 231. The pressure of the water is raised by the pump 230 and it is injected into transfer pipe 234 to desuperheater valve 232. Desuperheater valve allows a small amount of the flow to enter desuperheater pipe 233 and join steam pipe 208 where the water flow cools the steam flow by evaporating into the steam flow. The majority of the flow enters high-pressure water pipe 207 from desuperheater valve 232 and then enters evaporator heat exchanger 242 where the water is boiled and converted to steam with heat provided from blocks 210. The steam exits evaporator heat exchanger 242 via steam pipe 208 and is cooled by the water flow from desuperheater pipe 233 before entering condenser heat exchanger 241. The steam is condensed in condenser heat exchanger 241 by cooling provided by the flow in secondary circuit pipes 275 and 277. Reservoir 231 is optimally sized so that there is minimal excess water when the system is working at full power. It may be preferable to add a float switch (not shown) to reservoir 231 to ensure that the pressure raising pump 230 is only switched on when there is sufficient water in the reservoir 231 to supply the pressure raising pump 230.

The condensed water in condenser heat exchanger 241 flows into reservoir 231. Reservoir 231 is preferably located in a position relative to pressure raising pump 230 such that that water from the reservoir feeds the pump under gravity. High-pressure water pipe 207 preferably has a loop that passes above the height of the reservoir so that water contained within the reservoir can only flow if pressure raising pump 230 is operational to prevent any syphon effect. As an alternative option, a shut-off valve (not shown) can be fitted to high-pressure water pipe 207 to close off the pipe when the system is not running and ensure that water cannot flow into the evaporator heat exchanger 242.

Pressure raising pump 230 is ideally a small positive displacement pump with a variable speed drive. The advantage of a positive displacement pump is mass flow of water will be proportional to speed regardless of the delivery pressure. The flow rate of the pressure raising pump is varied to achieve a target temperature in pipe 279 that is monitored via control wire 290. If the temperature of the water in pipe 279 rises above the target temperature then the pressure raising pump 230 speed is reduced and if it falls then vice versa. As an example the target operating temperature in pipe 279 might be 65°C.

There are further benefits from running the water/steam system with a pump that can inject at higher pressures. Keeping the internal volume of the evaporator heat exchanger 242 low is important as it reduces the amount of water that can be stored in the heat exchanger. If the volume is kept below 2 litres then from a certification perspective the unit is considered very low risk.

The evaporator heat exchanger 242 can be made from a single section of pipe that is coiled up to form a pipe circuit with a single inlet 242A and outlet 242B. Preferably a single pipe is used although multiple pipes are an option. The coil is evenly distributed within the thermal media 210 so that distances that heat must flow (to reach the pipe) are kept low. For applications with larger block sizes to have a more evenly distributed pipe means making it longer. If the steam flow velocities are high then the pipe preferably has no sharp bends or abrupt changes in direction. Injecting water at high-pressure means that a significant pressure drop can be allowed for as the water and then steam passes through the pipe. Increasing the pressure drop improves the heat transfer from the pipe to the water but can generate high speed steam flows. Normal pipe design philosophy for steam would keep steam velocities at outlet 242B below 70 km/hr. In the present case the benefit of the large pressure drop may, for certain applications, mean that a pipe diameter (with a certain cross-sectional area) is selected to achieve the steam velocities at outlet 242B that are, at full power, higher than 100 km/hr, 200km/hr or even 300 km/hr.

Since the steam velocity at outlet 242B will depend upon the injector flow rate, the ratio of the effective internal cross-sectional area of the pipe circuit A to the predetermined maximum injection rate P (i.e. A/P) may be design to be below a predetermined value. For example, in one embodiment A/P is less than 20 (e.g. less than 16, e.g. less than 12). In this way, for every 1g/s of water injection into the pipe, at the maximum injection rate, the pipe cross sectional area is less than $20mm^2$, less than $16mm^2$ or even less than $12mm^2$. For example, at 10 g/s the internal cross-sectional area of the pipe would be less than $200mm^2$, less than $160mm^2$ or even less than $120mm^2$.

The condenser heat exchanger 241 may be a plate heat exchanger.

Other benefits of the higher injection pressure and a positive displacement pump are that they can operate through pressure surges within the pipe. When injecting water into a high temperature pipe it can boil and move through different boiling regimes. This can lead to rapid increases in steam volume and rapid changes in pressure. With a pump that is relatively insensitive to the delivery pressure it is easy to maintain control with a simple change in mass flow leading to very similar changes in thermal power output. The impact of pressure surges does not have any significant feedback that the control system must manage. If the high-pressure pump 230was replaced by something like a centrifugal circulation pump operating at low pressures then the feedback from the pressure surges would have a significant impact on the mass flow rate making the control system difficult to manage. The pump may also be damaged by the pressure surges with the flow reversing through the pump.

Lastly, the desuperheater 232 mentioned below also needs a pressure drop to work reliably and is easier to design with higher operating pressures.

Secondary circuit 203 comprises pipes 270, 271, 272, 273, 274, 275, 276, 278 and 279. Circulation Pump 254 is supplied via electrical cable 266 from battery system 262, which is supplied with mains electricity via electrical cable 265. Other components include buffer store 255, diverter valve 251, pressure relief valve 253, and expansion vessel 252. Heating system 243 and condenser heat exchanger 241 are connected via the secondary circuit 203. Heating system 243 may have a flow control valve that will restrict the flow of water. Where there is a flow control valve in the circuit it is necessary to have diverter valve 251 fitted within the circuit. The heating system 243 could be for space heating (e.g. central heating system) or the provision of hot water or both. Condenser heat exchanger 241 transfers heat from the thermal energy store 202 to the secondary circuit 203.

In operation the water in the secondary circuit 203 can be water or a mixture of water and anti-freeze, but for simplicity will be referred to as water in this description. The circuit is preferably pressurized and maintained at this pressure by an expansion tank 252 connected to the piping circuit via pipe 270. The advantage of pressurization is that the water temperature can rise to over 100°C without boiling. Heated water flows from condenser heat exchanger 241 via pipe 279 to circulation pump 254.

Circulation pump 254 raises the pressure of the water before it enters pipe 278. The water enters diverter valve 251 and passes into pipe 271 and heating system 243 or into pipe 273 to bypass heating system 243 or a combination of part flow through the heating system 243 and part bypass through pipe 273. The diverter valve 251 will allow flow into pipe 273 if the pressure in the circuit rises. This will occur if a flow control valve (not shown) is restricting flow through the heating system 243. The diverter valve 251 ensures that there is always flow through condenser heat exchanger 241 if the circulation pump 254 is operating.

The water exiting the heating system 243 in pipe 272 is cooled by the heating load. Any water joining from pipe 273 will be at or close to the target operating temperature. As a result as the heat load reduces the return temperature in pipe 274 will tend to rise closer to the operating temperature. Pressure relief valve 253 is fitted between pipe 274 and pipe 276 with a pressure relief setting that is above the normal operating pressure supplied by the expansion vessel 252.

The return water in pipe 276 enters buffer store 255 and exits buffer store 255 into pipe 275. Buffer store 255 will tend to be at or below the operating temperature of the system apart from at shut down when the temperature of the buffer store 255 will rise. The water in pipe 275 enters condenser heat exchanger 241 and is heated up close to the target operating temperature. As has been explained, the pressure raising pump 230 speed is varied to ensure that the heat extracted from thermal energy store 202 matches the heat load.

The flow rates between the two pumps 230, 254 are very different. For each kW of power required the pressure raising pump 230 needs to process around 0.4g of water per second. For 30kW of power this is equal to 12.5 g water per second. For the same 12.5g of water per second of water through the pressure raising pump 230, the circulation pump 254 might be circulating 700 grams per second of water in the secondary circuit, i.e. a factor of 50x times more water flowing. Hence, these two pumps have very different purposes and operating requirements.

Pressure raising pump 230 may have preset maximum flow rates that are linked to the temperature of the thermal media 210. As the temperature of the thermal media 210 falls the amount of water that can be boiled off per second by evaporator heat exchanger 242 will fall below the normal operating range. If the pressure raising pump 230 operates at full speed in this scenario then evaporator heat exchanger 242 will slowly become flooded or reservoir 231 will empty. The controller for the pressure raising pump 230 can limit the speed of water injection of pressure raising pump to pre-set levels that ensure that evaporator heat exchanger 242 is not flooded. These pre-set flow rates can be linked to the thermal media 210 temperature.

The invention tackles the multiple different situations that occur at shutdown under different circumstances as follows:

The system is operating at full thermal power output of 30 kW with the pressure raising pump 230 injecting 12.5 g/s of water. The operating temperature of the water in the secondary circuit is 75°C. The thermal media is at 350°C and there is 150g of water boiling off in condenser heat exchanger 241 at any moment. When the thermal load is switched off a signal is sent via control wire 291 to battery system 262 to continue supplying power to the circulation pump 254 for a set period of time. A further signal is sent via control wire 292 to the VSD controller 263 to cut power to pressure raising pump 230. In this way no more water is injected into the high-pressure water pipe.

As the heating load has been stopped the flow control valve (if fitted) inside the heating system 243 may close and the diverter valve 251 will open allowing flow to bypass heating system 243. As heating system 243 is being bypassed there is no heat load. Hence as the steam still within evaporator heat exchanger 242 boils off it will condense and raise the secondary circuit water temperature significantly above the normal operating temperature of 75°C. If there is insufficient thermal mass in the pipes, then the water will start to boil and the pressure relief valve 253 will open. This is clearly not desirable as switching off a heating load is a normal occurrence. To avoid this happening, it is necessary to add sufficient thermal mass to the system in the form of buffer store 255, which holds a certain mass of water sufficient to absorb all of the heat from the steam condensing. Preferably the size of buffer store 255 is sufficient to store the energy from condensing steam from the entire mass of pure water in the steam circuit. As the steam condenses the temperature in the pipes 279,278,273,274,276 and 275 rises as does the temperature of the water in the buffer store 255. In this case it rises from a normal operating temperature of 75°C to 95°C. The secondary circuit 203 is pressurized to 1 bar gauge by the expansion vessel 252 so there is no risk of boiling.

If the system is restarted shortly after shut down then the temperature of the water leaving the buffer store 255 and in the pipes will all be at 95°C. As has been explained, the pressure raising pump 230 is set to start injecting water when the temperature of the water in pipe 279 falls below the operating temperature - in this case 75°C. This means that when a heat load is applied to the system the pressure raising pump 230 does not engage until the system has effectively 'reset', i.e., all of the water in the buffer store 255 and pipes 279, 278, 271, 272,274,276 and 275 will have fallen back below the normal operating temperature before the pressure raising pump 230 starts injecting water and extracting heat from the hot core. In this way a system is designed that can safely and repeatedly be shut down from full power while safely condensing all of the steam generated by the thermal energy store 202 without the need to vent any steam from the primary steam circuit 201.

A less common occurrence may be a power cut so that the circulation pump 254 has no power to circulate water. In this scenario there would be a risk that the primary steam circuit 201 would need to vent steam in order to avoid high pressures. To avoid this the system has a battery system 262 fitted that means that even if there is a power failure the circulation pump 254 can continue to operate until all steam has been safely condensed. Note in a power failure there will be no power supply to pressure raising pump 230 so this is no different to normal shut down from full power in that the heat from condensing ends up in the pipe work and buffer store 255.

The last failure mode that must be considered is either a failure of the circulation pump 254 or a loss of water in the secondary circuit. In this situation if it occurs at full power there is likely to be insufficient thermal mass in condenser heat exchanger 241 to fully condense the steam. In this scenario the pressure will rise in the steam pipe 208 and steam pipe 225 until steam pressure relief valve 227 opens and vents via relief pipe 226 to a safe space - for example a soakaway. In this way, even in the event of a total failure of the secondary circulation system the steam can be safely managed. The failure modes that have been suggested, i.e. of the pump or of the secondary pipework leaking fluid, would require the attendance of a service engineer. Refilling the reservoir 231 with pure water that has been vented would be part of the necessary visit to repair the system.

In this way there is proposed an energy storage system 200 that has a thermal energy store 202 that extracts heat via steam, but that can safely manage all potential failure modes.

The desuperheater valve 232 allows a proportion of the high-pressure water to be injected upstream of condenser heat exchanger 241 to lower the temperature of the steam entering condenser heat exchanger 241. If the thermal core 210 is at 500°C then it is possible for the steam leaving the core to be at or close to this temperature. From a safety and a practical perspective this high temperature is undesirable. Low-cost brazed heat exchangers are not designed to manage these temperatures. High temperature pipes can cause burns. The desuperheater valve 232 and desuperheater pipe 233 can be replaced with a narrow diameter pipe. This can be designed so that under all flow conditions some water passes into the steam pipe. If there is an excess of water this will remove any superheat from the steam flow and leave saturated steam and water to enter condenser heat exchanger 241. The steam temperature should be below 200°C and preferably below 150°C.

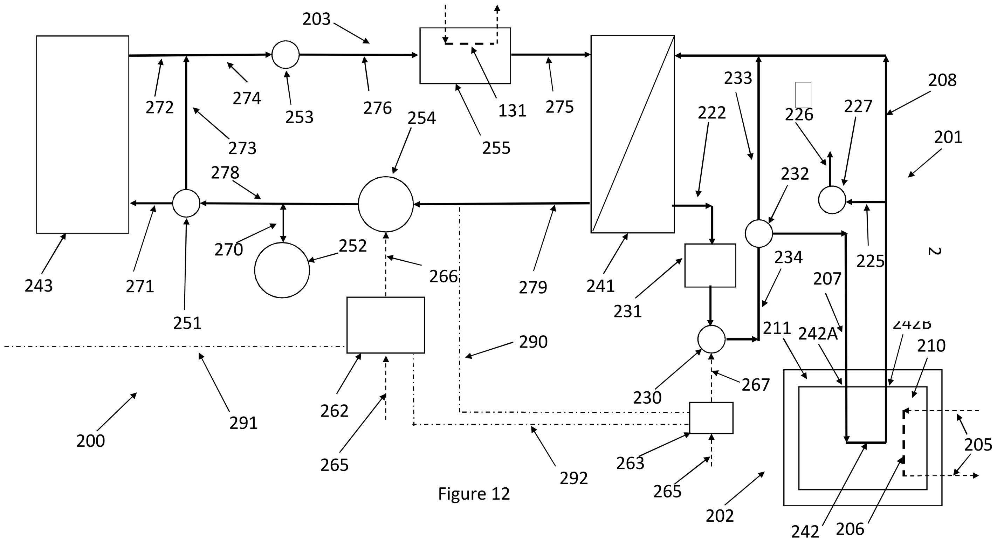

Figure 12 shows an embodiment where the additional electrical heating device 131 from the electrical charging circuit 110' in Figure 8 is added to the energy storage system 200 of Figure 11.

In this example, electrical heating devices 131 is added to buffer store 255 and may take the form of a simple electric heating coil of the type used as immersion heaters in hot water cylinders.

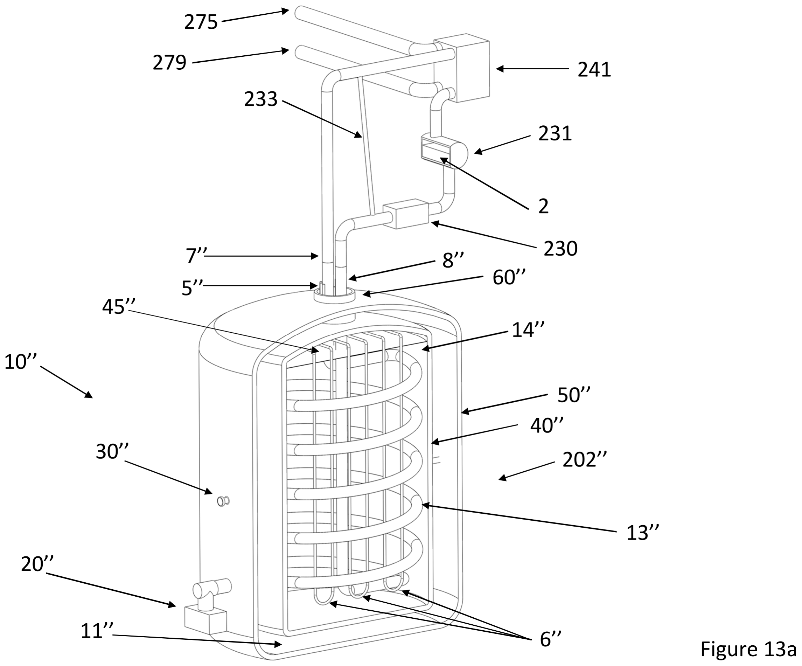

Figure 13a shows a further embodiment of a vacuum insulated thermal store 10" based on thermal store 10 (features in common are labelled accordingly) for use in the energy storage system 200 of Figure 11.

As illustrated, thermal store 10" includes a solid sensible heat storage material 14" (e.g. aluminium matrix with a solid thermal filler material embedded therein) with heat exchanger 13" and electric heating elements 6" embedded in sensible storage material 14". Electric heating elements 6" are connected wired to a controller 118 (not shown). Sensible storage material 14" is encased within the inner vessel 40" and connected to outer vessel 50" by neck connector 60" to form a vacuum tight space 11". As with the thermal store 10 of Figure 1a, 50-200 layers of multi-layer insulation (not shown) are wrapped around the inner vessel 40" and partially fills the vacuum tight space 11".

The vacuum is created by integral vacuum system 20" that is connected to outer vessel 60". Outer vessel 60" also has a number of fittings attached that are the transportation system 30".

Between the solid sensible heat storage material 14" and extending downwardly into the thermal energy store 202" is a coiled tube forming heat exchanger 13" and made of a suitable material such as stainless steel. The two ends of tube 13" are connected to pipes 7" and 8". In the arrangement shown for heat exchanger 13" there is one downward helically coiled piped with a straight return. The tubes may be bonded to the solid sensible heat storage material 14", which is particularly applicable if the storage block material is metallic.

The solid sensible heat storage material 14" can be heated to temperatures over 200°C by one or more embedded electrical heating elements 6". Heat can be withdrawn from solid sensible heat storage material 14" by passing a working fluid through heat exchanger 13" via pipe 7" and out from heat exchanger 13" via pipe 8", where the working fluid entering the heat exchanger 13" is cooler than the sensible storage material 14". The working fluid could be for example pure water.

In operation the working fluid, say water 2, is stored in reservoir 231 (as shown in cross section with water level indicated in Figure 13a) and is pumped by pressure raising pump 230 into inlet pipe 8". The water boils to steam in heat exchanger 13" and leaves via exit pipe 7". The steam enters condenser heat exchanger 241 where the steam is cooled by the secondary flow entering from pipe 275. The secondary flow is heated by the condensing steam and leaves condenser heat exchanger 241 at a higher temperature via pipe 279. The steam condenses to water in condenser heat exchanger 241 and returns to reservoir 231 before flowing back into pressure raising pump 230.

Between pipe 8" and pipe 7" is desuperheater pipeline 233 which injects water into pipe 7" and reduces the steam temperature. Whilst a variable orifice valve could be used to control the mass flow rate of water injected into pipe 7", to control in turn the level of desuperheat, an alternative is a simple pipe i.e. desuperheater pipeline 233", which does not require any moving parts. The desired level of desuperheat can be set by adjusting the geometry in terms of length and internal diameter only. This allows the required desuperheat (mass flow rate of water injected into pipe 7") to be matched (within functional tolerance) across the full range of operation. The rate of desuperheat is achieved by matching head loss in the pipe. If well-designed, then across the full range of operation the mass flow through the desuperheat pipeline 233 tracks that through water injection into pipe 7" with no undershoot (overcooling) or overshoot (undercooling).

All major components apart from the solid sensible heat storage material 14" and multi-layer insulation 12" are preferably made from an appropriate metal or alloy, such as steel.

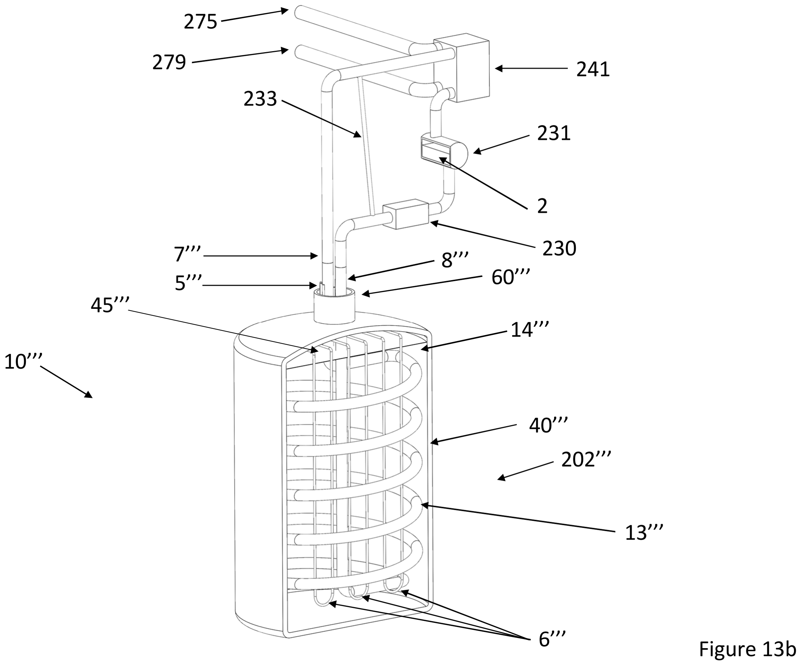

Figure 13b shows an embodiment of a non-vacuum insulated thermal store 10''' based on thermal store 10" (features in common are labelled accordingly) for use in the energy storage system 200 of Figure 11 without outer vessel 50" and integral vacuum system 20". The inner vessel 40''' may be surrounded by conventional insulation.

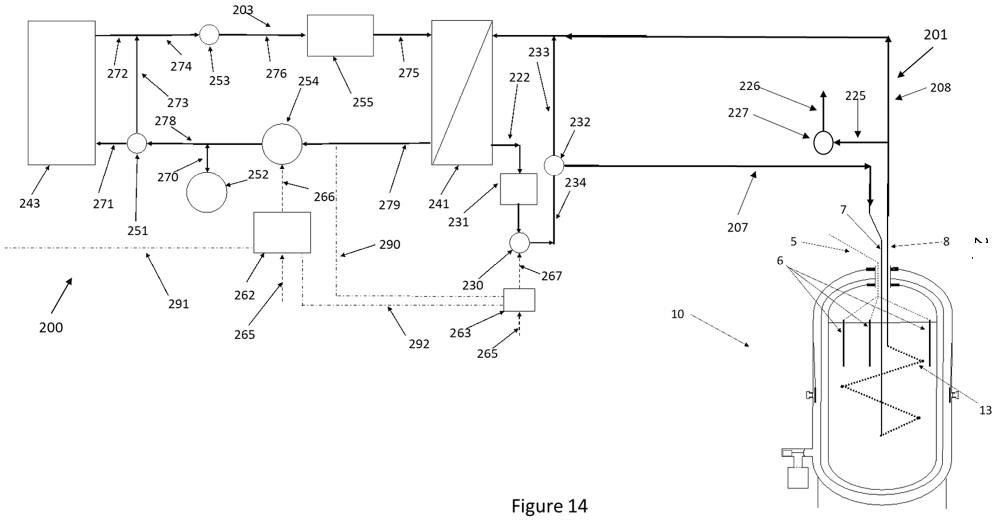

Figure 14 shows how the energy storage system 200 of Figure 11 can be combined with the vacuum insulated thermal store 10 of Figure 1a. Multiple electric heating elements 6 are shown. The high pressure water pipe 207 connects to the pipe in 7 and in turn the heat exchanger 13. The pipe out 8 from the heat exchanger 13 connects with the steam pipe 208.

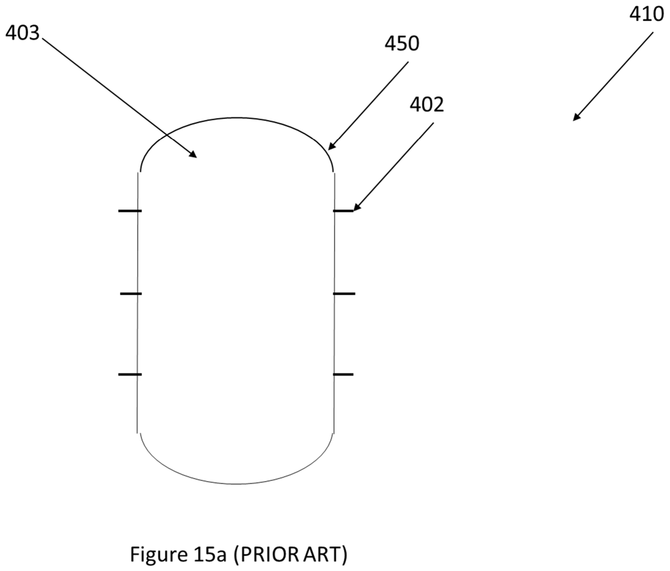

Figure 15a shows a prior art vacuum vessel 410 comprising an outer vessel 450 enclosing a region of vacuum 403. The outer vessel 450 has additional reinforcing ribs 402 welded on to the outside shell (cylindrical portion) of the vessel. Thin walled vacuum vessels typically fail by buckling along the parallel walled shell. Failure occurs at a lower buckling load if the shell is long relative to the diameter. The shell can be strengthened by welding reinforcing ribs 402 to the outside of the shell. These ribs reduce the effective length of the shell and R equally spaced ribs drop the effective length by $1/(R+1)$. The resistance to buckling scales with the cube of R therefore a small number of ribs increases the critical buckling load significantly.

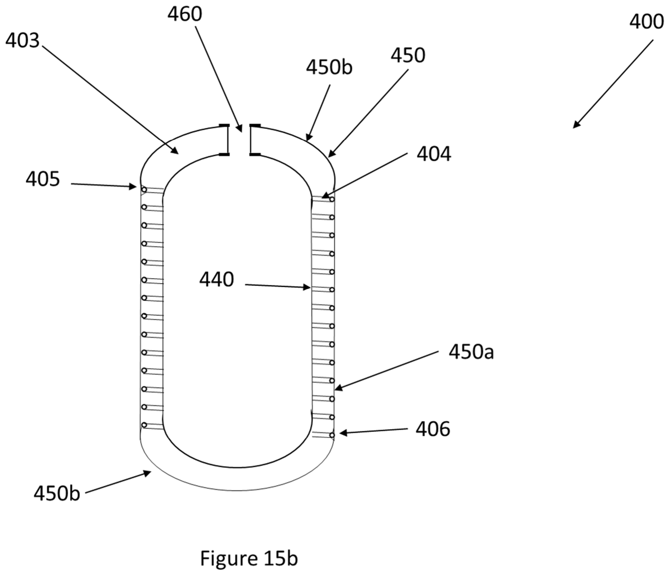

Figure 15b shows a vacuum vessel 400 comprising an outer vessel 450 and an inner vessel 440 connect by a neck piece 460 and enclosing a region of vacuum 403. The outer vessel 450 comprises a cylindrical outer shell 450a together with upper and lower end domes 450b. As illustrated, outer shell 450a is reinforced by an internal helical coil 404 that is welded to the outer vessel 450 at securing points 405 and 406. More than two securing points can be used so that there are multiple points where the coil is secured to the inside of the outer vessel 450. The helical coil 404 has the same effect as welding 14 reinforcing ribs to the vessel of the same thickness. Increasing the number of coil turns increases the effective number of ribs, R. The cross-section of the coil can be round, square or annular (pipe). This design has a number of advantages:

- The wall thickness of the outer shell can be low when the outer shell diameter is high.
- The use of multiple coil turns reduces the thickness required for each coil turn which means that there is more usable space between the inner and outer shell to add insulation (e.g. MLI).
- The coil, especially if pre-loaded, will hold the outer shell in a circular shape and reduce ovality. This can reduce the requirement for fixturing when welding on to the end domes.
- The coil can be pre-loaded and slid internally into place during fabrication. This means the outer wall of the outer shell remains cylindrical.
- The coil can be pre-loaded to introduce tension into the outer cylindrical section when un-loaded. This can aid structural stability.
- The coil structure is stabilised by the outer shell and hence this is an efficient structure.
- The helical coil can be made of a low-cost carbon steel even when the outer vessel is made of more expensive materials such as stainless steel.
- The welding effort required is minimal compared to fitting external ribs.
- The coil is within the vacuum space so is not subject to corrosion.

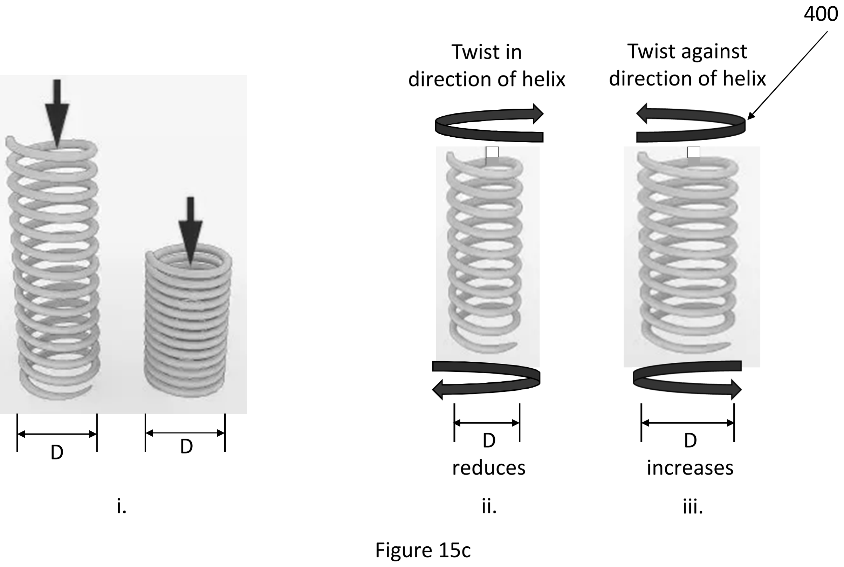

Figure 15c i-iii) shows prior art around springs. When a helical spring is under axial loading, as shown in i), the diameter of the spring remains constant. If a torque is applied to a helical spring in the direction of the helix then the diameter of the spring will reduce as shown in ii). If a torque is applied against the direction of the helix then the diameter of the spring will increase as shown in iii).

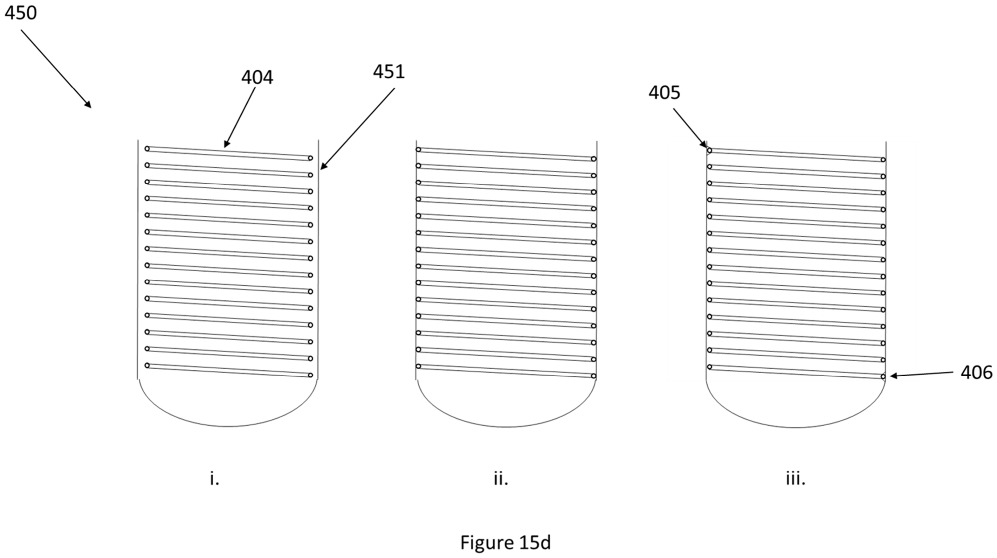

Figure 15d i)-iii) shows a method of assembling vacuum vessel 450. Figure 15d i) shows part of an outer vessel 451 with a helical coil 404 that has been torsioned (a torque applied in the same direction as the helix) to reduce the outer diameter of the coil. The coil is lowered inside the shell while held in this reduced diameter state. Figure 15d ii) shows the same vessel 450 where the torque has been removed or reduced to the point where the ends of the helical coil 404 are in contact with the inner wall of the part of the outer vessel 451. In Figure 15d iii) the ends of the coil are welded to the inside of the part of the outer vessel at points 405 and 406 and the torque is removed. The helical coil can be fitted in a loose state or fitted in a pre-torqued state. When pre-torqued the outer cylindrical section is left in tension while the helical coil is in compression. When left in compression, friction can hold the helical coil in place and it may be unnecessary to provide any welds to attach the helical coil to the vessel 450.

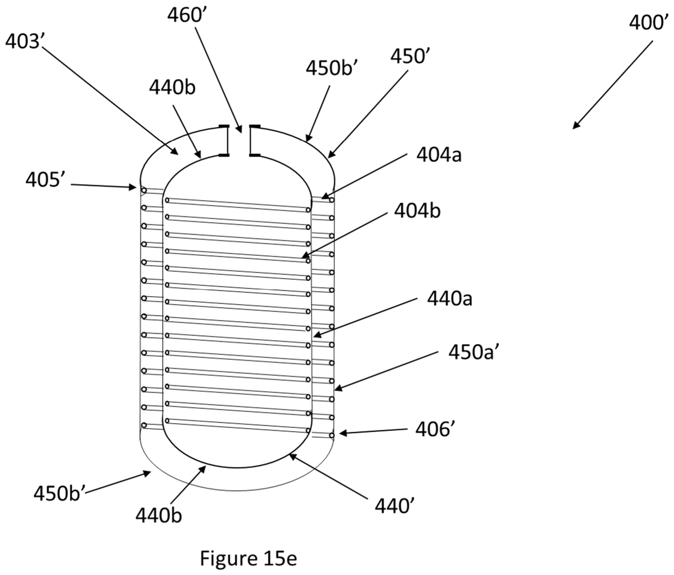

Figure 15e shows a vacuum vessel 400' based on vacuum vessel 400 comprising an outer vessel 450' and an inner vessel 440' connected by a neck piece 460' and enclosing an evacuated region 403'. The outer vessel 450' comprises a cylindrical outer shell 450a' together with upper and lower end domes 450b' and the inner vessel 440' comprises a cylindrical outer shell 440a together with upper and lower end domes 440b. Outer shell 450a' is reinforced by an internal helical coil 404a and inner shell 440a is reinforced by an internal helical coil 404b. The inner vessel 440' is in tension when in use from the vacuum and is typically thin-walled relative to the outer vessel. However, during manufacture it is necessary to test that welds on the inner vessel are leak-tight using helium gas. The simplest way to perform this test is to pull a vacuum on the inner vessel 440' and test the welds for leaks by blowing helium over them. When presented with a leakage path helium passes into the inner vessel 440' and to a sensor (not shown). The inner vessel may not have the mechanical strength to support a vacuum, therefore the addition of a coil 404b acts to stabilise the inner vessel under external pressure loading to prevent buckling. The coil 404b is then left inside the inner vessel 440' after the test is performed. In many cases the addition of this coil 404b will provide the simplest and lowest cost solution for testing/checking the weld integrity.

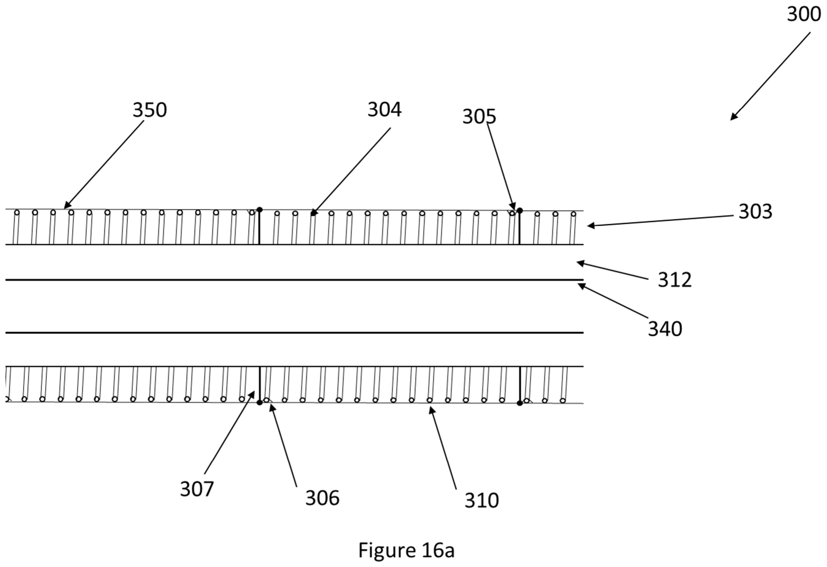

Figure 16a shows a vacuum insulated pipe 300 comprising an outer pipe 350, an inner pipe 340 wrapped in *n* layers of MLI 312. The region between the outer pipe 350 and inner pipe 340 forms a space 303 that is a vacuum. The outer pipe 350 may come in sections 310 and each section 310 is supported internally by a helical coil 304 that can be inserted prior to assembly. The helical coil 304 is welded to the inside of the outer pipe 350 at securing points 305 and 306. The helical coil may be preloaded so that the outer pipe 350 is in radial tension. More than one securing point can be used so that there are multiple points where the coil is secured to the inside of the outer pipe 350.

When transporting hot or cold liquids the outer pipe 350 is likely to stay at close to ambient. Consequently, it is preferable if the inner pipe 340 has limited thermal expansion or contraction when heated or cooled. In the event that there is thermal expansion or contraction this must be allowed for with the use of an expansion region (e.g. expansion joints or bellows).

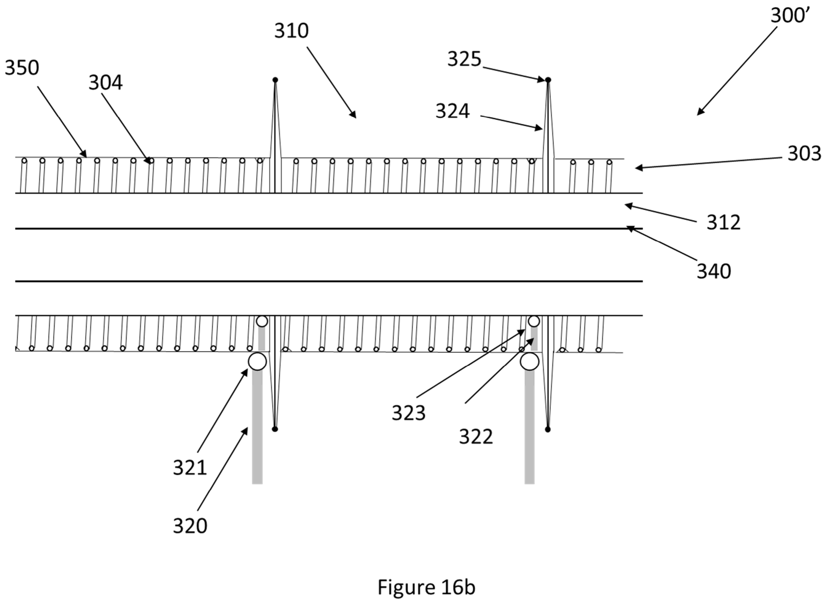

Figure 16b shows a vacuum insulated pipe 300' comprising an outer pipe 350, an inner pipe 340 wrapped in MLI 312. The region between the outer pipe 350 and inner pipe 340 forms a space 303 that is a vacuum. The outer pipe 350 may come in sections 310 and each section 310 may have an expansion region in the form of a single half of a bellows arrangement 324, 325 at each end.

The outer pipe 350 is supported on external support 320 and external roller 321. The weight of the inner pipe 340 and fluid is supported via the *n* layers of MLI through internal support 322 and internal roller 323. When assembling the pipe, each bellows section 324, 325 can be welded, swaged or rolled to form a vacuum tight seal. The bellow sections allow each external section of pipe to expand or contract slightly as ambient conditions change. The internal pipe 340 is able to expand and contract by moving on roller 323. The external pipe 350 can expand or contract and move on roller 321.

The advantage of the invention is that it is possible to make both a large diameter and thin-walled pipe. This means that it can form features such as bellows that are flexible. The outer material can be stainless steel which will both protect the inner pipe from corrosion and damage.

The pipe can be wrapped with *n* layers of MLI as described in this patent. Alternatively other insulating materials can be used such as microporous insulation. The vacuum may be pulled by a vacuum device and to vacuum levels for MLI as previously described herein. Alternatively, if different materials are used for insulation the vacuum can be pulled to different vacuum levels.

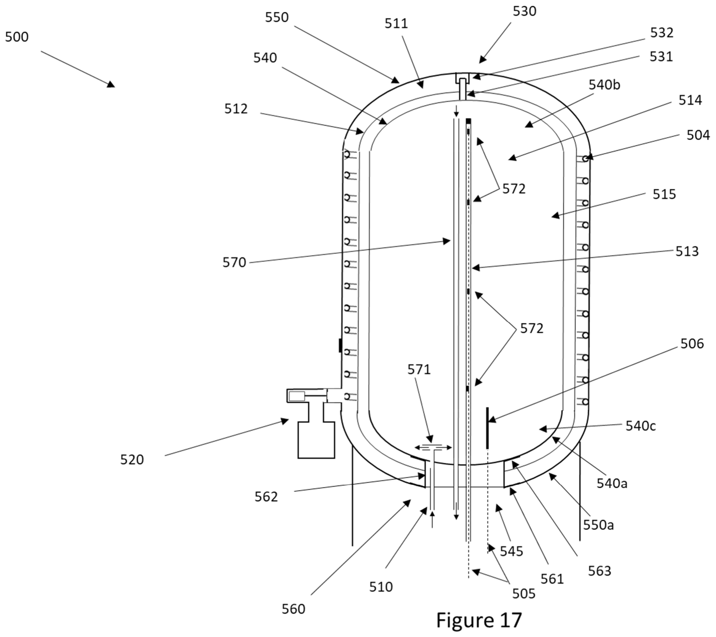

Figure 17 shows a vacuum insulated thermal store 500 comprising an inner vessel 540 and an outer vessel 550, inner vessel 540 defining a chamber 515 containing a liquid sensible heat storage material 514 (for example water) with electric heating elements 506, inlet pipe 510, diffuser 571, outlet pipe 570, sealed sensor tube 513 containing multiple thermocouples 572. Electric heating elements 506 and multiple thermocouples 572 are connected via electric wires 505 to a controller (not shown). A lower neck connector 560 extends through base portions 540a, 550a of the inner and outer vessels 540, 550 respectively and comprises an optional inner neck plate element 563 which is attached to neck tube 562 which in turn is attached to outer neck plate 561. The weight of the inner vessel 540 and liquid sensible heat storage material 514 is supported from the outer vessel 550 by neck connector 560. Inner vessel 540, outer vessel 550 and neck connector 560 form a vacuum space 511. A total of $n$ (where $n$ is at least 10 layers per 100 degrees Celsius temperature difference between ambient and peak operating temperatures) layers of multi-layer insulation ("MLI") 512 are wrapped around the inner vessel 540 and partially fills vacuum space 511. Coiled support structure 504 located between the outer vessel 550 and the MLI 512 supports outer vessel 550.

The vacuum is created by integral vacuum system 520 that is connected to outer vessel 550 and that works in an equivalent manner to the integral vacuum system 20 described in detail above with reference to Figures 1-3. Outer vessel 550 also includes a transportation interface system 530.

The liquid sensible heat storage material 514 can be heated by one or more electrical heating elements 506. The liquid can be withdrawn from inner vessel 540 via outlet pipe 570. Liquid is automatically added via inlet pipe 510 when water is withdrawn. To enable stratification and reduce mixing within the liquid sensible heat storage material 514 a diffuser 571 may be used. When storing hot liquids the diffuser 571 will normally be located in a lower section 540c of the inner vessel 540 and the outlet pipe 570 will draw liquid from a higher section 540b of the inner vessel 540.

Neck tube 562 defines a central chamber 545 housing supply lines for the at least one heating element 506 (e.g. electrical cables for the at least one electrical heating element), multiple thermocouples 572 (e.g. electrical cables for multiple thermocouples), thermocouple tube 513 and inlet/outlet pipes 510 and 570. Central chamber 545 is located at the bottom of the vessel as hot liquid thermal stores can be thermally stratified. This means that all of the connections are located in the region that is coldest and hence closest to ambient. This reduces thermal losses. For a cold liquid thermal store (e.g. below ambient temperature store) the central chamber 545 might be located at the top of the vessel.

Transportation system 530 comprises an outer spigot 532 and inner spigot 531. Outer spigot 532 is a tube welded to outer vessel 550. Inner spigot 531 is a tube or rod welded to inner vessel 540 that extends through the MLI 512 and is partially surrounded by outer spigot 532. Outer spigot 532 constrains the movement of inner spigot 531 in a direction perpendicular to the tubes axis, but in normal use does not touch inner spigot 531. This means that during transport when side loads are applied to the inner vessel 540 any movement is constrained by contact but minimal heat transfer occurs when at rest. The loads in transporting a vessel suitable for liquids are normally much lower as the vessel can be filled when in final location. With a solid storage media that is cast in place the loads on the inner vessel are normally much higher and an improved support structure as described previously may be required.

A further advantage of transportation system 530 is that if the vessel is to be stored in a horizontal orientation the transportation system can provide permanent support. In this situation the clearance between the two spigots may be reduced and one or more of the surfaces may have a bearing material added. This allows for the expansion and contraction of the inner vessel 540 as it is heated up and cooled relative to the outer vessel 550.

In operation electrical heating element 506 heats the adjacent liquid which rises up under buoyancy. When the store is at a constant temperature this method of heating tends to raise the entire store temperature evenly. The only area that remains cooler is the volume of liquid below electrical heating element 506.

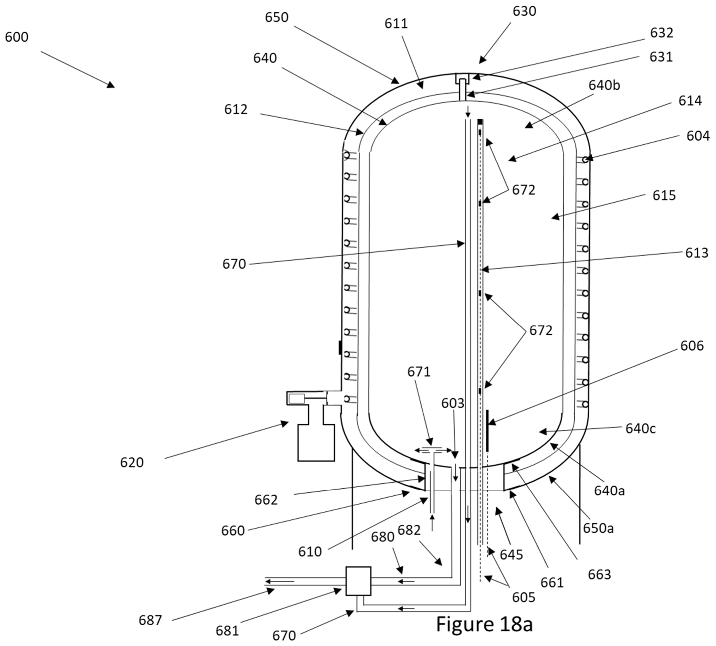

Figure 18a) shows a self-cleaning vacuum insulated hot water cylinder 600 based upon vacuum insulated thermal store 500 in Figure 17 including a self-cleaning module 680.

Vacuum insulated hot water cylinder 600 comprises an inner vessel 640 and an outer vessel 650, inner vessel 640 defining a stratified chamber 615 for storing hot water 614 in a thermally stratified state. Managing stratification enables the volume of usable hot water available from a hot water cylinder to be maximised for a given heat input. Consider heating a fixed volume of water V with a defined amount of heat H. This heat is defined by raising the temperature of V uniformly from 15C to 30 C. The same amount of heat H would therefore raise V/2 from 15 C to 45 C, and the remaining V/2 stays at 15C. If usable water is considered to be water above 40 C, then the addition of stratification increases the amount of usable hot water from 0 to V/2. It can be seen that by managing stratification therefore the amount of usable water available from a hot water tank can be maximised. Thermodynamic mixing which destroys stratification has the opposing effect, to reduce the volume of usable hot water available. It is therefore important to maintain stratification once achieved.

As illustrated, vacuum insulated hot water cylinder 600 comprises electric heating elements 606, cold water inlet pipe 610, diffuser 671, primary hot water outlet pipe 670, and sealed sensor tube 613 containing multiple thermocouples 672. Electric heating elements 606 and multiple thermocouples 672 are connected via electric wires 605 to a controller (not shown). A lower neck connector 660 extends through base portions 640a, 650a of the inner and outer vessels 640, 650 respectively and comprises an optional inner neck plate element 663 which is attached to neck tube 662 which in turn is attached to outer neck plate 661. The weight of the inner vessel 640 and stored hot water 614 is supported from the outer vessel 650 by neck connector 660. Inner vessel 640, outer vessel 650 and neck connector 660 form a vacuum space 611. A total of $n$ (where $n$ is at least 10 layers per 100 degrees Celsius temperature difference between ambient and peak operating temperatures, e.g. wherein $n$ is at least 50 layers in total) layers of multi-layer insulation ("MLI") 612 are wrapped around the inner vessel 640 and partially fills vacuum space 611. Coiled support structure 604 located between the outer vessel 650 and the MLI 612 supports outer vessel 650.

The vacuum is created by integral vacuum system 620 that is connected to outer vessel 650 and that works in an equivalent manner to the integral vacuum system 20 described in detail above. Outer vessel 650 also includes a transportation interface system 630.

Water 614 can be heated by one or more electrical heating elements 606 and can be withdrawn from inner vessel 640 via hot outlet pipe 670. Water (e.g. cold water) is automatically added via inlet pipe 610 when hot water is withdrawn. To enable stratification and reduce mixing within the inner vessel 640, a diffuser 671 may be used. Diffuser 671 is located in a lower section 640c of the inner vessel 640 and the hot outlet pipe 670 will draw hot water from an upper section 640b of the inner vessel 640.

Neck tube 662 defines a central chamber 645 housing supply lines for the at least one heating element 606 (e.g. electrical cables for the at least one electrical heating element), multiple thermocouples 672 (e.g. electrical cables for multiple thermocouples), thermocouple tube 613 and inlet/outlet pipes 610 and 670. Central chamber 645 is located at the bottom of the vessel as hot liquid thermal stores can be thermally stratified. This means that all of the connections are located in the region that is coldest and hence closest to ambient. This reduces thermal losses.

Transportation system 630 comprises an outer spigot 632 and inner spigot 631. Outer spigot 632 is a tube welded to outer vessel 650. Inner spigot 631 is a tube or rod welded to inner vessel 640 that extends through the MLI 612 and is partially surrounded by outer spigot 632. Outer spigot 632 constrains the movement of inner spigot 631 in a direction perpendicular to the tubes axis, but in normal use does not touch inner spigot 631.

Self-cleaning module 680 includes a secondary outlet line (warm water pipe 682) connected to a mixer valve 681. As illustrated, warm pipe 682 is connected through the central chamber 645 and operates to provide the cylinder with a 'self-cleaning' ability which enables loose limescale and debris to be removed from the cylinder. In a conventional hot water cylinder the hot water outlet feeds a mixer valve where it is mixed with cold mains water. The mixer valve blends the hot and cold water, either at a fixed ratio e.g. 1:5 or thermostatically, to reduce the temperature to a preset level. In the UK the outlet from the mixer valve is normally set to around 50 °C.

In this embodiment mixer valve 681 is fed from warm pipe 682 having a warm pipe inlet 603 which is located in the base 640a of the inner vessel 640. Cold water is added into cylinder 640 via diffuser 671 located close to the warm pipe inlet 603. When hot water is drawn from the top of the cylinder via hot outlet pipe 670, cold water enters the cylinder to replace this via the inlet pipe 610 and diffuser 671. At the same time, if the water entering the mixer valve 681 via hot outlet pipe 670 is above a preset temperature then the mixer 681 will add water via warm pipe inlet 603/warm pipe 682 into the mixer valve 681. This flow in warm pipe 682 will entrain loose mineral particles (e.g. limescale) that would otherwise settle at the bottom of the tank. Generally the higher the tank temperature the larger the warm flow from 682 required to balance it and the better the self-cleaning effect. The hot water at the correct outlet temperature leaves mixer valve 681 via pipe 687 with debris entrained within the flow.

This self-cleaning capability is applicable to all hot water cylinders and not just to vacuum insulated cylinders. Advantageously, providing the self-cleaning action during the discharging phase allows debris such as limescale to be flushed from the cylinder and readily dispensed via connected domestic hot water outlets (e.g. shower or hot water tap/faucet). This avoids the need for filters/debris settling area that would clog and/or require regular servicing.

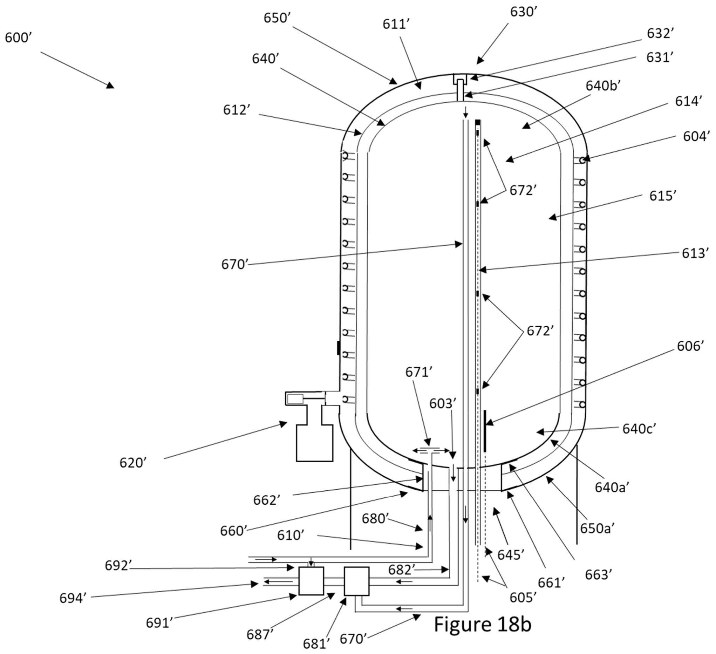

Figure 18b shows a further embodiment of a self-cleaning vacuum insulated hot water cylinder 600' based on hot water cylinder 600 (features in common are labelled accordingly) with an additional mixer valve 691' added in series with mixer valve 681'. There is a potential safety issue with supplying the mixer valve 681' from the warm pipe 682' which could result in excessively high hot water outlet temperatures. In the case where the entire tank is at high temperature any hot water initially drawn from the tank via mixer valve 681' will be supplied with hot water from both warm pipe 682' and hot outlet pipe 670'. This means that there can be a transient event at start-up where the output from the mixer valve is above the preset level. Where pipe runs are long this is not an issue as thermal losses will cool the initial hot water flow. However, it could be dangerous if a hot tap is located close to the cylinder as the initial water flow could exceed a safe temperature. This can be resolved by having two mixer valves in succession as shown. The first mixer valve 681' is supplied from the hot outlet pipe 670' and the warm pipe 682'. The outlet pipe 687' from the first mixer valve 681' supplies the second mixer valve 691' and is mixed with cold mains water from cold inlet pipe 610' via connector pipe 692'. The output from the second mixer valve 691', with a permanent supply of cold water, ensures the hot water output via pipe 694'never reach high and unsafe temperatures. In the case where the output from the first mixer valve 681' is below the preset temperature, the second mixer valve 691' provides no function and allows the flow to exit via pipe 694'.

Having two mixer valves 681' and 691' provides an additional level of safety and allows the hot water cylinder to be operated at higher than normal temperatures for example 85 °C. Mixer valves 681' and 691' may be set at the same pre-set output temperature or be set at different temperatures.

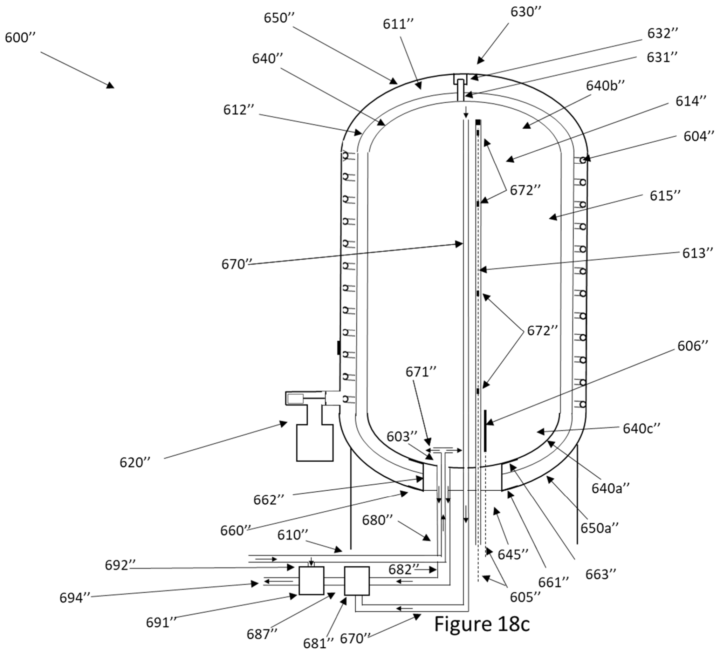

Figure 18c shows further embodiment of a self-cleaning vacuum insulated cylinder 600" based on hot water cylinder 600' (features in common are labelled accordingly) in which the cold inlet pipe 610" is provided concentrically within the warm pipe 682". In this way the flows in and out of the tanks are symmetrical, which can be beneficial if stratification is desirable as it minimises mixing within the tank.

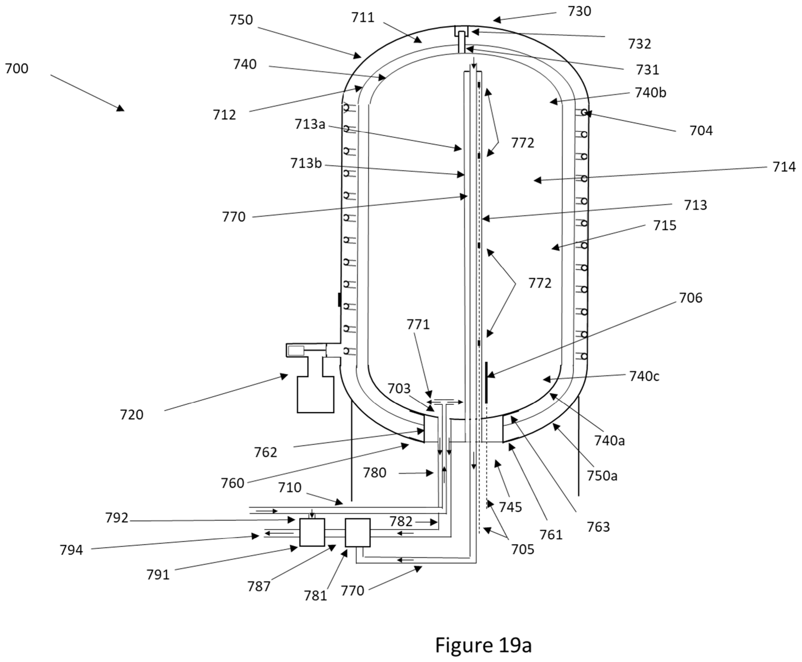

Figure 19a) improved further embodiment of a vacuum insulated hot water cylinder 700 based on hot water cylinder 600'.

Vacuum insulated hot water cylinder 700 comprising an inner vessel 740 and an outer vessel 750, inner vessel 740 defining a stratified chamber 715 for storing hot water 714 in a thermally stratified state with electric heating elements 706, 'cold' inlet pipe 710, diffuser 771, hot outlet pipe 770, sealed sensor tube 713 containing multiple thermocouples 772. Electric heating elements 706 and multiple thermocouples 772 are connected via electric wires 705 to a controller (not shown). A lower neck connector 760 extends through base portions 740a, 750a of the inner and outer vessels 740, 750 respectively and comprises an optional inner neck plate element 763 which is attached to neck tube 762 which in turn is attached to outer neck plate 761. The weight of the inner vessel 740 and stored hot water 714 is supported from the outer vessel 750 by neck connector 760. Inner vessel 740, outer vessel 750 and neck connector 760 form a vacuum space 711. A total of $n$ (where $n$ is at least 10 layers per 100 degrees Celsius temperature difference between ambient and peak operating temperatures, , e.g. wherein $n$ is at least 50 layers in total) layers of multi-layer insulation ("MLI") 712 are wrapped around the inner vessel 740 and partially fills vacuum space 711. Coiled support structure 704 located between the outer vessel 750 and the MLI 712 supports outer vessel 750.

The vacuum is created by integral vacuum system 720 that is connected to outer vessel 750 and that works in an equivalent manner to the integral vacuum system 20 described in detail above. Outer vessel 750 also includes a transportation interface system 730.

As with previous embodiments, water 714 can be heated by one or more electrical heating elements 706 and can be withdrawn from inner vessel 740 via hot outlet pipe 770. Water (e.g. cold water) is automatically added via inlet pipe 710 when hot water is withdrawn. To enable stratification and reduce mixing within the inner vessel 740, a diffuser 771 is located in a lower section 740c of the inner vessel 740 and the hot outlet pipe 770 will draw hot water from an upper section 740b of the inner vessel 740.

Transportation system 730 comprises an outer spigot 732 and inner spigot 731. Outer spigot 732 is a tube welded to outer vessel 750. Inner spigot 731 is a tube or rod welded to inner vessel 740 that extends through the MLI 712 and is partially surrounded by outer spigot 732. Outer spigot 732 constrains the movement of inner spigot 731 in a direction perpendicular to the tubes axis, but in normal use does not touch inner spigot 731.

Hot water cylinder 700 has a self-cleaning function described in Figures 18a)-c) provided by a self-cleaning module 780 includes a secondary outlet line (warm pipe 782) connected to a mixer valve 781. The hot water at the correct outlet temperature leaves mixer valve 781 via pipe 787 with debris entrained within the flow.

Separate to this self-cleaning function it is desirable to maintain stratification within the cylinder and to minimise thermal losses. If stratification is maintained then at each instance where hot water is removed from the top of the tank, cold water is added at the bottom of the tank. The density of cold water is greater than that of hot water under otherwise equal conditions and therefore the tank will tend to stratify naturally.

Having a hot exit pipe at the top of the hot water cylinder that passes through the cylinder wall creates a heat loss path through the insulation. Most hot water cylinders are kept hot or partially hot, so that hot water is available on demand. A hot exit pipe from the top of the cylinder creates a permanent heat leakage path that can be significant and equal in magnitude to the heat loss from the entire cylinder through the insulation. Hence, from a heat loss perspective it is much better to avoid this. One option is to have the hot water pipe pass within the cylinder and exit the cylinder through the base as shown in Figures 18a-c). The problem with hot water being drawn through a tube from the top of the tank and exiting via the bottom of the tank is that the hot water leaving will transfer heat to the cold water in the lower parts of the cylinder. This heat transfer naturally creates a convection system that breaks down stratification within the cylinder.

The result is that while it is easy to remove hot water via a pipe from the bottom of the cylinder it is not easy to maintain stratification within the cylinder simultaneously. If stratification can be maintained then thermal losses are lower because the coldest temperatures are at the bottom of the cylinder and any heat flows along pipes are absorbed by the colder water. This cold water is replenished every time hot water is drawn off from the cylinder.

In addition it is important to know the temperature profile within the hot water cylinder to determine how and when a user should input/output heat from the tank. Measuring the temperature at different heights within the tank can be achieved by placing sensors on the outside of the tank. In this configuration they will measure the temperature accurately, but are not easily replaced if the tank is insulated for example with solid polyurethane foam. It is clearly preferable to have a sensing method that can be replaced but still measure the water temperature accurately.

A combined solution which solves the two issues described is shown in Figure 19a) where the hot water outlet pipe 770 draws water from upper region 740b of the tank and this hot water outlet pipe 770 is fitted within a hot water dispenser module 713 comprising an outer sleeve/sensor pipe 713a which is open to the atmosphere at the base and sealed to the hot water outlet pipe 770 near the top. The outer sleeve 713a defines a sleeve chamber 713b having sufficient internal volume that thermocouples 772 can be inserted to measure the outer sleeve 713a wall temperature and therefore the water temperature at each height in the cylinder. The thermocouples are not in contact with the hot water outlet pipe 770. In this way the hot water outlet pipe 770 is insulated (by air) from the water in the tank and does not break down stratification when in use. At the same time a space is provided within the outer sleeve 713a to accommodate multiple thermocouples. Similar self-cleaning arrangements to those shown in Figure 18a-c) are also attached and the cylinder is vacuum insulated although it can work just as well with a conventionally insulated cylinder.

As illustrated, neck tube 762 defines a central chamber 745 accommodating the hot water dispenser module 713 together with inlet/outlet pipes 710 and 782 and supply lines for the at least one heating element 706 (e.g. electrical cables for the at least one electrical heating element).

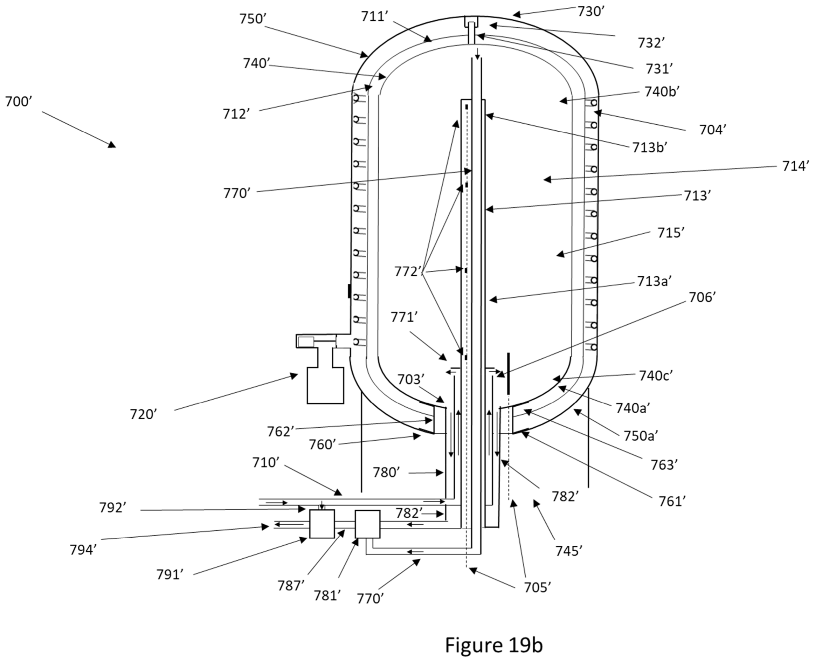

Figure 19b) shows an arrangement 700' based on hot water cylinder 700 (features in common are labelled accordingly) where all of the pipes have been combined to create a concentric arrangement of four pipes that combine the self-cleaning features with the insulated hot outlet pipe and replaceable thermocouples. This arrangement can be used on either a vacuum insulated hot water cylinder or a conventionally insulated one. It should be noted that it has an additional benefits for a vacuum insulated tanks as it minimises the number of holes required through the evacuated space. The inside and outside temperatures of vacuum insulated tanks can be very different and thermal expansion needs to be managed. By minimising the number of through connections it makes vessel assembly easier and less expensive.

As shown, hot water dispenser module 713' comprises an outer sleeve 713a' defining a sleeve chamber 713b' configured to house both hot water outlet pipe 770' and replaceable thermocouples 772' which are located in contact with an inner wall of outer sleeve 713a' and not touching the outer wall of hot outlet pipe 770'. Hot water dispenser module 713' is located for part of its length within cold inlet pipe 710' with diffuser 771' attached to the outside of the hot water dispenser module 713'. Part of cold inlet pipe 710' is then located within warm pipe 782'.

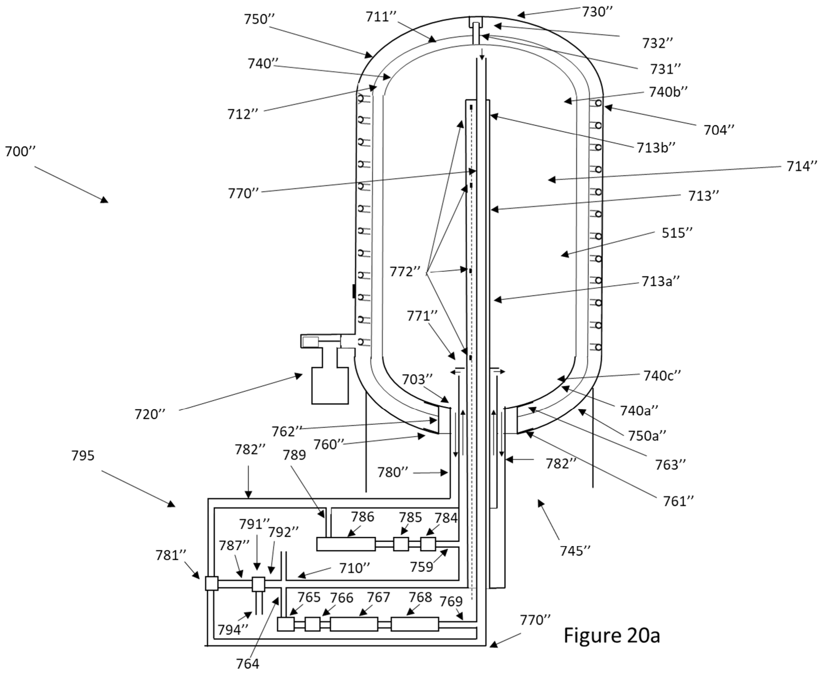

Figure 20a) shows an embodiment of a hot water cylinder 700" based on hot water cylinder 700' (features in common are labelled according) which uses the four concentric pipe embodiment from Figure 19b), but where the heating of the water occurs in external heating module 795 either from an indirect heat source, such as a heat pump or boiler, or from a direct source, such as an electric immersion heater. Furthermore, this embodiment allows water in the cylinder to be heated from the bottom of the tank up, i.e. the coldest water first, or from the top down or both at the same time, ideally while maintaining thermal stratification within the water cylinder.

Hot water cylinder 700" includes connecting pipes 759, 789,764,769, water pumps 784 and 765, optional electronic magnetic descaler 785, 766, electric heater 768, heat exchangers 786, 767.

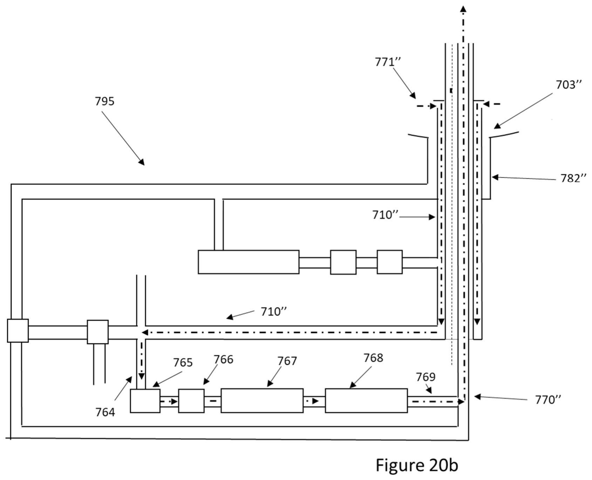

Figure 20b) shows operation of external heating module 795 during a charging phase in which hot water is added to the top of the tank thereby heating the upper part of the tank. In operation cooler water from the bottom of the tank is drawn in via diffuser 771" and flows through cold inlet pipe 710" in reverse direction via connecting pipe 764 to water pump 765. Water pump 765 pumps the water through optional electronic/magnetic descaler 766 before entering optional heat exchanger 767 and electric heater 768. The optional heat exchanger can be connected to a source of heat such as a heat pump or boiler. The electric heater can be used to provide all of the heat or top up heating to a pre-set temperature. The hot water is pumped to the top of the hot water cylinder via connecting pipe 769 and hot outlet pipe 770". Note in this mode of operation the hot water is travelling in the reverse direction in hot outlet pipe 770"to the direction when hot water is drawn from the cylinder. Similarly the water drawn through cold inlet pipe 710" is travelling in the reverse direction to the direction when hot water is being drawn from the cylinder. The warm pipe 782" could also supply the pump, however when drawing from the bottom of the tank there is a risk of limescale debris entering the pump or blocking filters in the pump. Hence, the cold inlet pipe 710" is used.

The supply of heat can be provided at the same time that hot water is being drawn from the cylinder. In this a fraction of hot water is supplied from the heater and the remaining demand from hot outlet pipe 770".

When heating hot water cylinders with electric elements limescale formation is common, especially in areas with 'hard water'. The amount of limescale deposited increases with temperature. Limescale build up on an element tends to lead to the element operating hotter and failing prematurely, therefore avoiding/minimising limescale formation is preferable for component life. Electronic descalers apply an electromagnetic field to a pipe carrying water and can reduce the amount of limescale formed. Magnetic descalers can have a similar impact.

These type of descalers are commonly fitted on the cold water inlet pipe to the property. Fitting in this location has a number of disadvantages. The descaler is on all of the time. It is used on all water entering the property, not just water that is heated. The effect that these descalers have on limescale formation is time limited. If the cold water enters a hot water tank that is not heated immediately then the impact is limited. This is possibly why the effect of these devices is reported in the literature with various contradicting conclusions. After research it is apparent that locating the optional descaler immediately upstream of electric heater element 768" ensures that the maximum impact of the treatment occurs. The treatment needs to occur a minimum of between 1 and 20 seconds before the water is heated and no longer than 10 minutes (e.g. 1-600 seconds before the water is heated, e.g. 2-600 seconds before the water is heated, e.g. 10-600 seconds before the water is heated, e.g. 20-600 seconds before the water is heated). The electronic descaler only needs to operate when the heater is operational, so there is no power requirement when there is no heating requirement. It is also possible to use a higher power arrangement as the time of operation is limited. Fitting and using these electronic (or magnetic) descalers in this manner significantly reduces limescale formation and tends to create precipitation in the water and not on surfaces. This is why such a descaling arrangement can be combined with a 'self-cleaning' hot water cylinder as the majority of the limescale appears as fine 'dust' rather than large particles and this fine dust can be readily dispensed via connected domestic hot water outlets (e.g. shower or hot water tap/faucet). Electronic and magnetic descalers are poorly understood and have a varied history. It has been discovered by the inventor that the impact of the descaler on water is in certain applications time limited. This means that if water passes a descaler and is left for a period of time (hours to days) before being heated then the impact of the descaler is minimal. Likewise, if water is heated immediately after passing the descaler then the impact is also reduced, which is why a time delay between treatment and heating is preferable. The descalers bring dissolved $CO_2$ out of solution as microbubbles. The result is that when water is heated and solubility drops calcium carbonate is formed in the water as fine particles around these microbubbles rather than being formed on the heating surface, which is what tends to occur in untreated water. Scale formation on surfaces is greatly reduced and the majority occurs as a fine suspension.

The location of the descaler is critical as most homeowners will fit this equipment on to the cold incoming water supply to the home. Where the homeowner has a combi boiler this is an effective strategy. Where the homeowner has a hot water cylinder it is much less effective. Cold water can be drawn into the cylinder and sit there for periods of hours before being heated.

This embodiment of the invention only applies the descaling treatment to water that is just about to be heated. It has been found that there is an optimal minimum time between the water being treated and being heated which is related to the strength of the descaler and the diameter of the pipe. This is preferably at least 1-10 seconds and no longer than 10 minutes (e.g. 1-600 seconds before the water is heated, e.g. 2-600 seconds before the water is heated, e.g. 10-600 seconds before the water is heated, e.g. 20-600 seconds before the water is heated). In this location the descaler has maximum impact in reducing limescale formation on and around the heating element. Furthermore, as this approach tends to form limescale as a fine suspension the combination with the self-cleaning concept means that it is particularly effective at keeping the tank clean. Normal limescale formation creates large thick pieces on surfaces that are less suited to this removal process and could potentially cause issues elsewhere within the pipework.

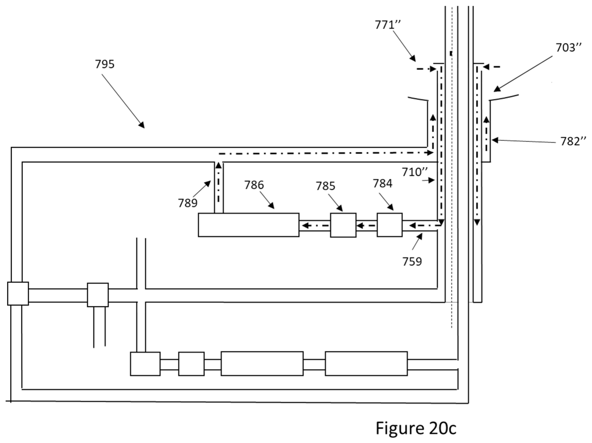

Figure 20c) shows operation of external heating module 795 during the charging phase to heat the water in the lower section of the tank. In operation cooler water from the bottom of the tank is drawn in via diffuser 771" and flows through cold inlet pipe 710" in reverse direction via connecting pipe 759 to water pump 784. Pump 784 pumps the water through optional electronic/magnetic descaler 785 before entering heat exchanger 786 where the water is heated with water from a primary heat source such as a boiler powered by natural gas or a heat pump or some other similar device. The warmer water is pumped to the bottom of the hot water cylinder via connecting pipe 789 and warm pipe 782". Note in this mode of operation the warmer water is travelling in the reverse direction to the direction when water is being drawn from the unit to the mixer valve. Likewise the water being drawn through cold pipe 710" is travelling in the reverse direction than is the case when hot water is being drawn from the unit and fresh cold water is entering. The warm pipe 782" could also be used to supply the pump, however when drawing from the bottom of the tank there is a risk of limescale entering the pump or blocking filters in the pump. Hence, the cold pipe 710" is used.

The supply of heat can be provided at the same time that hot water is being drawn from the cylinder. This configuration can allow a heat pump or boiler to operate in a mode that has high efficiency as the heat pump is always heating the coldest water first.

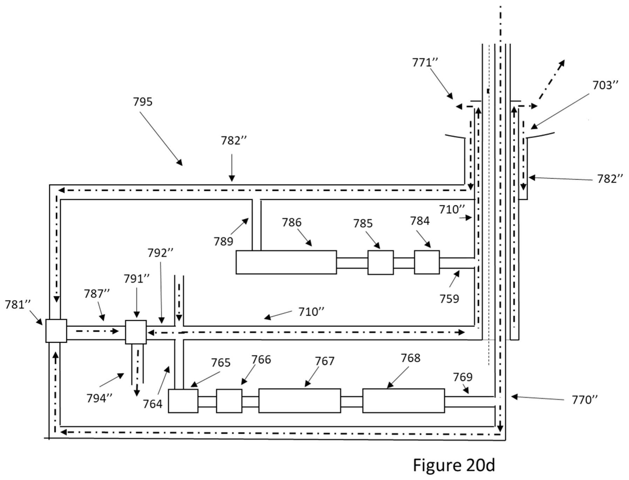

Figure 20d shows the external heating module 795 in a self-cleaning mode during a discharging phase. Hot water is drawn from the cylinder via outlet pipe 794" from mixer valve 791". Mixer valve 791" is supplied with cold water from inlet pipe 710" via connecting pipe 792" and from outlet pipe 787" supplied from mixer 781". Mixer 791" only draws cold water if the water in outlet pipe 787" is above a pre-set temperature. Mixer 781" is supplied from warm pipe 782" and hot outlet pipe 770". Cold water flows into the cylinder via pipe 710" and diffuser 771". When discharging hot water there must always be a flow of cold water in this direction even if some cold water is being drawn to supply mixer valve 791".

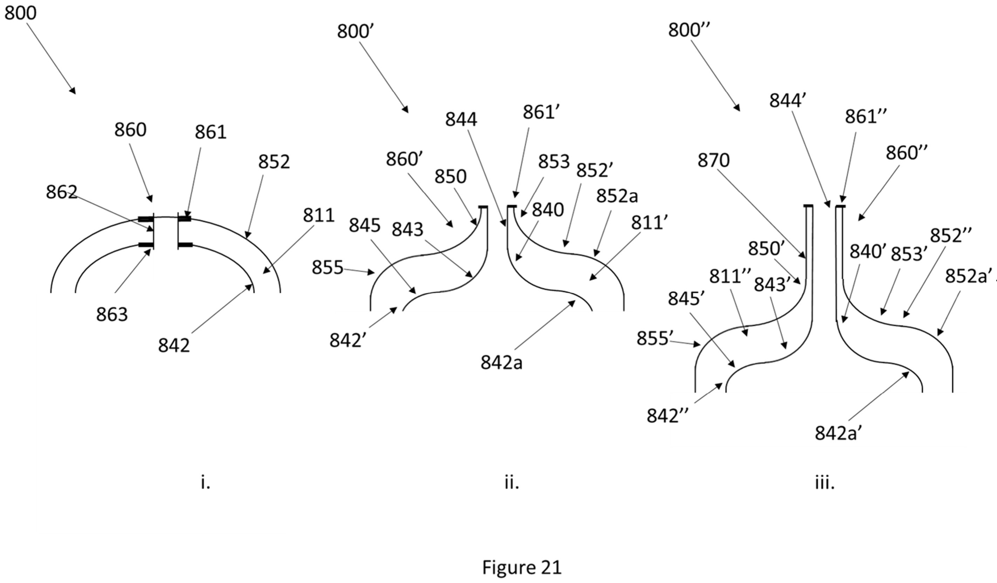

Figure 21i) shows a proposed 'neck region' 800 based on the neck connector 60 of the vacuum insulated thermal store 10 shown in Figure 1a. Neck region 800 comprises: an upper inner vessel part 842 and an upper outer vessel part 852 separated by a vacuum space 811; and a neck connector 860 comprising a lower neck plate 863 element which is attached to a neck tube 862 which in turn is attached to an upper neck plate 861. Inner vessel part 842 is attached to outer vessel part 852 by neck connector 860.

Both the upper inner vessel part 842 and upper outer vessel part 852 are normally made from semi-elliptical heads. These are pressed components where the height of the dome is equal to half of the radius. These types of dome are is widely used in pressure vessels and are a compromise between having reduced height and reduced thickness.

In this embodiment, neck tube 862 is attached to two thicker plates 861 and 863, which in turn are welded to the domes 842 and 852. The thickness of the plates can be considerable and can require significant welding to join the plate to the thinner domes and tube as large fillets are needed to avoid large stress concentrations. The result is still a stiff structure with high bending stresses in this neck connector 860 when lateral loads act upon the inner vessel. Significant loads can occur during transport.

The vacuum between the upper inner vessel 842 and upper outer vessel 852 loads the upper outer vessel 852 in compression and the upper inner vessel 842 in tension. The upper inner vessel 842 must also support the weight of any thermal mass and acts to transfer this weight to the outer vessel 852 via the neck.

Figure 21ii) shows an improved neck configuration 800'. The upper inner vessel comprises an interior neck portion 840 including a lower concave tapered dome neck portion 843 and an upper tubular neck portion 844, the lower tapered dome neck portion 843 being connected to a convex shoulder region 842a of the inner vessel 842' (with portions 843 and 842a together forming a convex concave dome 845). The upper outer vessel 852' comprises an exterior neck portion 850 including a concave tapered dome neck portion 853 connecting to a convex shoulder region 852a of the outer vessel 852' (with portions 853 and 852a together forming a convex concave dome 855). The two vessels are joined at the modified neck plate 861'. The convex concave sections can be produced by spinning or pressing. The tubular neck portion 844 is typically a separate piece that can be welded to the concave tapered dome neck portion 843 and both parts have similar material thicknesses. The tubular neck portion could be part of the same piece and made by, for example, spinning, but this is a more complicated process depending upon the length of the tubular neck portion. Having a similar material thickness minimises stress concentrations and aids welding. The design of the convex concave dome allows for the stress distribution within the parts to be optimised and this in turn allows the thickness to be reduced significantly.

In terms of the material required, using this approach can reduce the total mass by 50% compared to the conventional approach used in Figure 21i). In addition the tubular neck portion 844 creates a longer path for heat to travel and hence reduces thermal losses. Combined with thinner walls and therefore a reduction in cross sectional area, this approach can reduce the total thermal losses by up to a factor of 4X.

Figure 21iii) shows further embodiment of a neck configuration 800". This is similar to 800' but the upper outer vessel comprises an upper tubular neck portion 870. This elongates the tubular neck portion 844' of the interior neck portion 840'. The two vessels are joined at the modified neck plate 861". The extension provided by tubular section 870 creates an even longer conduction path and hence reduces thermal losses beyond that provided by 800'.

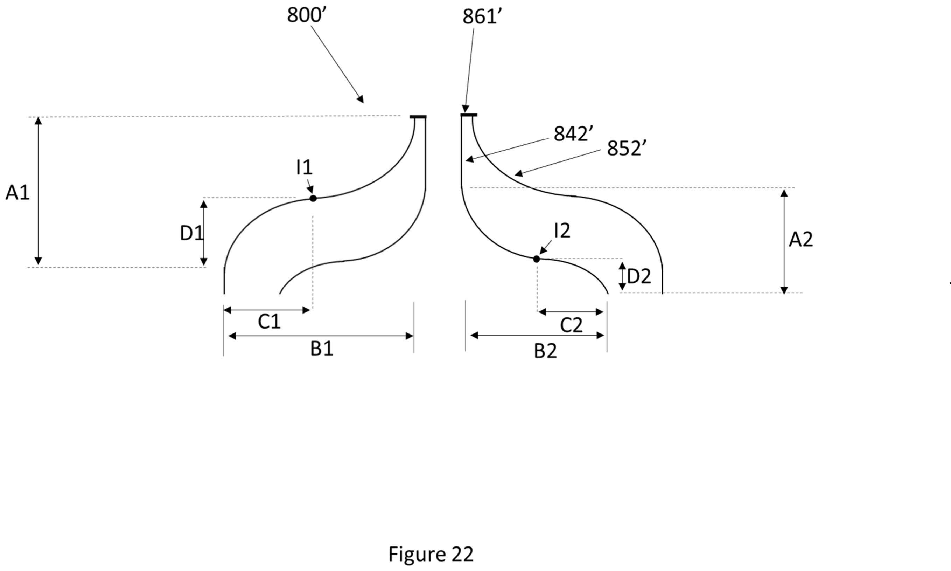

Figure 22 shows improved neck configuration 800'. The convex concave dome 845 formed by portions 843 and 842a is in general described by a compound curve but in its simplest form can be considered to be made of a convex section and a concave section which intersect at a tangent. The perpendicular height of convex concave dome formed by portions 843 and 842a is A1. The width is B1. The point at which the inflection occurs between the convex section and the concave section is labelled I1 and is located by position (C1,D1). This parameterisation (A1,B1,C1 & D1) is appropriately chosen as it describes the loading cases of combined axial compression (buckling) and circular bending which scale with height to diameter as well as importantly the shape/profile. Note that in the case of a pressure vessel, where the loading is purely internal pressure, height to diameter is the only important quantity as in the case of a simple semi-elliptical dome.

In one embodiment, it may be advantageous to use approximately equal profiles for the convex section and a concave section. In this case the design is constrained by A1/B1 and the point I1 is fixed by choosing C1/B1=0.5 and D1/A1=0.5. It is preferred to have A1/ B1 as large as both height and weight constraints allow. Designs should ideally have 0.3<A1/B1<1.0 but may be constrained to 0.1<A1/B1<1.0.

In practice, any number of compound curves (elliptical or circular for example) may be used for the convex and concave sections and set the overall shape using I1 as control point. In this case the design is constrained by the values of C1/B1 and D1/A1. Designs should ideally have 0.25<C1/B1<0.75 but may be relaxed to 0.35<C1/B1<0.65 if end profiling is difficult to achieve. Designs should ideally also have 0.25<D1/A1<0.75 but may be relaxed to 0.35< D1/A1<0.65 if end profiling is difficult to achieve.

The geometry considerations also apply to the convex concave dome 855.

In the case of equal profiles the design is constrained by A2/B2 and the point I2 is fixed by choosing C2/B2=0.5 and D2/A2=0.5. It is preferred to have A2/ B2 as large as both convex concave dome 855 and weight constraints allow. Designs should ideally have 0.3<A2/B2<1.0 but may be constrained to 0.1<A2/B2<1.0.

Again in practice any number of compound curves where the design is constrained by the values of C2/B2 and D2/A2. Designs should ideally have 0.25<C2/B2<0.75 but may be relaxed to 0.35<C2/B2<0.65. Designs should also ideally have 0.25<D2/A2<0.75 but may be relaxed to 0.35< D2/A2<0.65.

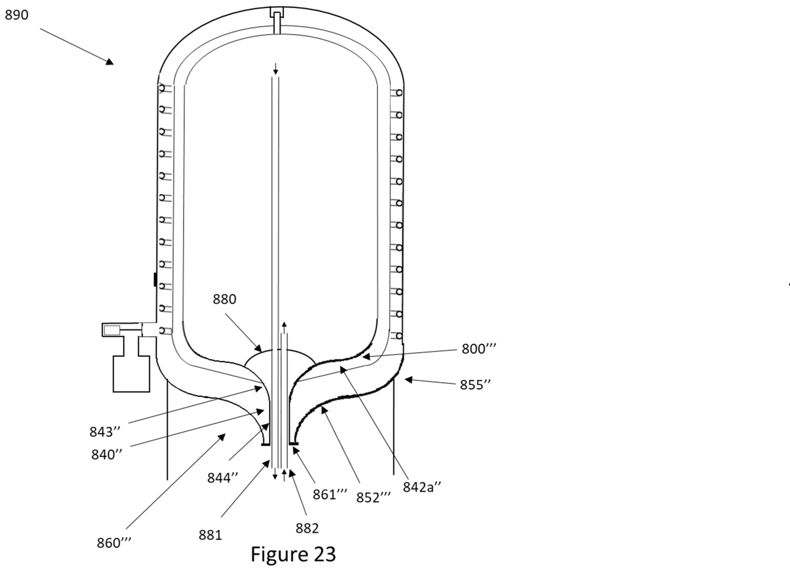

Figure 23 shows embodiment vacuum insulated thermal store 890 based on thermal store 500 of Figure 17 in an inverted position with a neck region 800‴ based on neck region 800' of Figure 22ii) at the base of the vessel. The inner vessel comprises an interior neck portion 840" comprising an upper concave tapered dome neck portion 843" and a lower tubular neck portion 844" attached to a convex shoulder region 842a". The lower outer vessel comprises a convex concave dome 855". The two vessels are joined at the modified neck plate 861‴. Water flows in through inlet pipe 882 and out through outlet pipe 881. An inner membrane 880 can be added to physically separate the neck region from the part of the chamber storing the thermal mass and thereby maximise the conduction path length to the neck area. Pipes 881 and 882 are welded to this inner membrane. The inner membrane 880 and the tubular neck portion 844" creates a longer path for heat to travel from the thermal mass and hence reduces thermal losses.

**Claims**

1. An energy storage system, comprising:

   a thermal energy store;
   a primary circuit comprising a first heat transfer fluid;
   an evaporator heat exchanger stage configured to receive thermal energy from the thermal energy store and to evaporate the first heat transfer fluid in liquid form to form a gas stream;
   a condenser heat exchanger stage configured to condense the gas stream received from the evaporator heat exchanger stage; and
   a secondary circuit comprising a second heat transfer fluid, the secondary circuit being configured to receive thermal energy from the primary circuit via the condenser heat exchanger stage and to supply the received thermal energy to a heating system.

2. An energy storage system according to claim 1, wherein the first heat transfer fluid is water and the second heat transfer fluid is water.

3. An energy storage system according to claim 1 or claim 2, wherein the primary circuit comprises a pressure raising device operative to pressurise fluid received from the condenser heat exchanger stage and deliver fluid at raised pressure to the evaporator heat exchanger stage.

4. An energy storage system according to claim 3, wherein the primary circuit further comprises a desuperheater operative to cool gas flowing from the evaporator heat exchanger stage to the condenser heat exchange stage.

5. An energy storage system according to claim 4, wherein the desuperheater is operative to divert a portion of the first heat transfer fluid flowing from the pressure raising device to the evaporator heat exchanger stage.

6. An energy storage system according to claim 5, wherein the desuperheater comprises a selectively connectable flow path comprising a desuperheater valve positioned between the pressure raising device and the evaporator heat exchanger stage and a pipe for conveying a stream of the first heat transfer fluid from the desuperheater valve to the outlet between the evaporator heat exchanger stage and the condenser heat exchanger state.

7. An energy storage system according to any of claims 3-6, wherein the primary circuit further comprises a reservoir positioned between the condenser heat exchanger stage and the pressure raising device.

8. An energy storage system according to claim 7, wherein first heat transfer fluid condensed by the condenser heat exchanger stage flows under gravity into the reservoir.

9. An energy storage system according to claim 7 or claim 8, wherein the first heat transfer fluid flows under gravity from the reservoir to the pressure raising device.

10. An energy storage system according to any of claims 7-9, wherein the primary circuit includes a high pressure pipe extending between the pressure raising device and the evaporator heat exchanger stage and the high pressure pipe has a section extending above the height of the reservoir.

11. An energy storage system according to any of claims 7-10, wherein the primary circuit comprises a shut-off valve for preventing flow from the reservoir to the evaporator heat exchanger stage.

**12.** An energy storage system according to any of claims 3-11, wherein the evaporator heat exchanger stage comprises a pipe circuit extending through or around the heat energy store, wherein the pipe circuit has an inlet and an outlet, wherein the primary circuit is configured to generate a gaseous flow of the first heat transfer fluid at the outlet with a gas flow velocity of at least 100 km/hour.

**13.** An energy storage system according to claim 12, wherein the pipe circuit has an effective internal cross-sectional area A and primary circuit is configured to supply the first heat transfer fluid to the inlet at a predetermined maximum injection rate P, wherein the ratio of the effective internal cross-sectional area of the pipe circuit A to the predetermined maximum injection rate P (A/P) is less than 20.

**14.** An energy storage system according to any of claims 3-13, wherein primary circuit is configured to vary the injection pressure in relation to the temperature of the thermal energy store.

**15.** An energy storage system according to any of the proceding claims, wherein:

the secondary circuit comprises a circulation pump; and
the energy storage system is further operable in a power outage mode, wherein the secondary circuit further comprises a back-up power supply configured to maintain operation of the circulation pump of the secondary circuit in the power outage mode until all the gaseous phase of the first heat transfer fluid in the primary circuit has been safely condensed.

**16.** An energy storage system according to any of the preceding claims, wherein the secondary circuit comprises a buffer store operative to hold a sufficient mass of the second heat transfer fluid to absorb all of the heat from the heat transfer fluid in the primary circuit as it condenses.

**17.** A method of operating an energy storage system, comprising:

providing an energy storage system including:

a thermal energy store;
a primary circuit comprising a first heat transfer fluid;
an evaporator heat exchanger stage configured to receive thermal energy from the thermal energy store and to evaporate the first heat transfer fluid in liquid form to form a gas stream; a condenser heat exchanger stage configured to condense the gas stream received from the evaporator heat exchanger stage; and
a secondary circuit comprising a second heat transfer fluid, the secondary circuit being configured to receive thermal energy from the primary circuit via the condenser heat exchanger stage and to supply the received thermal energy to a heating system;

the method further comprising the steps of:

in a charging mode:
transferring thermal energy to the thermal energy store; and
in a discharging mode:

evaporating a liquid phase of the first heat transfer fluid in the evaporator heat exchanger stage to form a gaseous flow of the first heat transfer fluid; passing the gaseous flow of the first heat transfer fluid from the thermal energy store to the condenser heat exchanger stage; and condensing the gaseous flow of the first heat transfer fluid in the condenser heat exchanger stage to transfer thermal energy from the heat transfer fluid to the second heat transfer fluid in the secondary circuit.

**18.** A method according to claim 17, wherein the energy storage system is an energy storage system according to any of claims 1-16.

Figure 1a

Figure 1b

Figure 2

Figure 3

CONTINUOUS RUNNING

START → read input variable → is input variable in range?

is input variable in range? — yes → t = t₃ pause → switch off vacuum pump → close vacuum port/valve → is input variable in range?

is input variable in range? — no → switch on vacuum pump → open vacuum port/valve → t = t₂ pause → is input variable in range?

EXAMPLE II

Figure 3c

MAIN PROGRAM

ACQUISITION

START → read input variable → is input variable in range?

is input variable in range? — yes → END

is input variable in range? — no → enter vacuum loop

switch off vacuum pump ← close vacuum port/valve

VACUUM

switch on vacuum pump → open vacuum port/valve → t = t₁ pause → exit vacuum loop

EXAMPLE I

44

Figure 4

EP 4 664 047 A2

41

Figure 5i

Figure 5ii

Figure 5iii

Figure 5iv

Figure 5v

Figure 5vi

Figure 5vii

EP 4 664 047 A2

Figure 5viii

10

Figure 6

EP 4 664 047 A2

Figure 7

Figure 8

Figure 9

Figure 10

Figure 11

Figure 12

Figure 13a

Figure 13b

Figure 14

Figure 15a (PRIOR ART)

Figure 15b

EP 4 664 047 A2

EP 4 664 047 A2

400

Twist in
direction of helix

Twist against
direction of helix

D
reduces

D
increases

i.

ii.

iii.

Figure 15c

Figure 15d

Figure 15e

Figure 16a

EP 4 664 047 A2

Figure 16b

Figure 17

EP 4 664 047 A2

Figure 18a

Figure 18b

Figure 18c

Figure 19a

EP 4 664 047 A2

Figure 19b

Figure 20a

Figure 20b

EP 4 664 047 A2

Figure 20c

Figure 20d

Figure 21

EP 4 664 047 A2

Figure 22

Figure 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020217045 A

- GB 1323522 A